# EUROPEAN PATENT SPECIFICATION

(11) **EP 2 559 346 B1**
(45) Date of publication and mention of the grant of the patent: **26.03.2014**
(21) Application number: 11177595.3
(22) Date of filing: 15.08.2011
(51) Int. Cl.: A23L 1/22

(54) **Oleanene-type triterpene glycosides as masking agents**
Oleanen-artige Triterpenglycoside als Maskierungsmittel
Glycosides de triterpène de type oléanène en tant qu'agents de masquage

(43) Date of publication of application: 20.02.2013
(73) Proprietor: Symrise AG, 37603 Holzminden (DE)
(72) Inventor: Hans, Joachim, 44141 Dortmund (DE); Moldenhauer, Jana, 44265 Dortmund (DE); Bitzer, Jens, 44225 Dortmund (DE); Köpcke, Bärbel, 44225 Dortmund (DE); Roemer, Ernst, 46286 Dorsten (DE)
(74) Representative: Eisenführ Speiser

(56) References cited:
- WO-A1-2010/026003
- US-A1- 2006 153 936
- KEITH R. PRICE ET AL: "Soyasaponin I, a Compound Possessing Undesirable Taste Characteristics Isolated from the Dried Pea (Pisum sativum L.)", JOURNAL OF THE SCIENCE OF FOOD AND AGRICULTURE, vol. 35, 1 January 1984 (1984-01-01), pages 887-892, XP55016021,

## Description

The present invention relates to the use of certain oleanene-type triterpene glycosides (belonging to the group of oleanene-type saponins) of formula (I) as defined below and/or physiologically acceptable salts thereof for modifying (i.e. modulating) or masking (i.e. reducing or suppressing) unpleasant taste impressions, in particular bitter and/or astringent taste impressions and to a corresponding method for modulating or masking an unpleasant taste of a substance or substance mixture. The present invention also relates to compositions, in particular orally consumable compositions, comprising (a) one or more compounds of formula (I) or a physiologically acceptable salt thereof, and (b) one or more substances with unpleasant taste, in particular bitter and/or astringent taste.

The compounds used in the present invention correspond to the following structural formula (I): 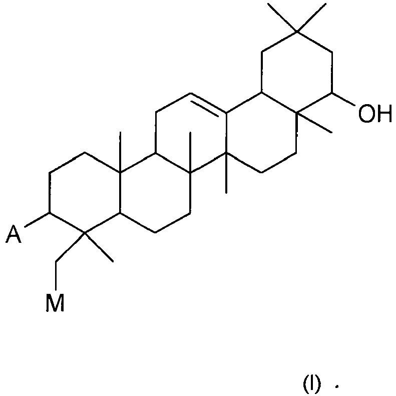 wherein
M is hydrogen or hydroxyl, preferably hydroxyl, and
A is a carbohydrate moiety, preferably an oligosaccharide moiety.

The compounds of formula (I) structurally may also be described as having an oleanene-type triterpenoid aglycone moiety with an saccharide chain attached thereto in the position indicated in formula (I), said saccharide chain preferably comprising or consisting of two or more saccharide (sugar) moieties.

Consumables such as food, beverages, oral care products or nutritional supplements often contain various bitter substances and astringent substances, which on the one hand are desirable and characteristic (for example caffeine in tea or coffee, tannins in red wine or green tea, quinine in bitter lemon beverages, (iso)flavonoids or (iso)flavonoid glycosides in soy milk, hop extracts in beer and the like), but on the other hand may also severely reduce the palatability and the value of the respective consumable for a consumer (for example flavonoid glycosides and limonoids in citrus juices, bitter and/or astringent aftertaste of many artificial sweeteners such as aspartame or saccharin, or hydrophobic amino acids and/or peptides in cheese). Often the unpleasant taste is additionally amplified by unpleasant odours, for example an additional so-called "beany" note in soy milk, which often tastes bitter and astringent, is described as unpleasant.

A bitter taste mostly is caused by substances which bind to bitterness receptors on taste cells (which are to be found in the "taste buds" on the tongue) and transmit a signal to the brain via neurochemical cascades, said signal causing a defensive reaction and a negative taste impression (Meyerhof, Rev. Physiol. Biochem. Pharmacol., 2005, 154: 37-72).

An astringent taste is caused as a rule by precipitation of proline-rich proteins in the saliva by astringent substances, for example metal salts or tannins. The homogeneous saliva, which normally serves as a "lubricant" in the oral cavity, then contains denatured proteins, which reduce lubricity and thus leave behind a rough or dry feeling in the mouth, which is felt to be astringent (Lesschaeve et al., Am. J. Clin. Nut., 2005, 81: 3308-58)

It is well known in the art that flavan-3-ols, such as catechins, e.g. those found in tea, have many health benefits and epigallocatechin gallate, epicatechin, epicatechin gallate, and epigallocatechin and their respective stereoisomers or mixtures have been shown to positively impact physiological activities, and their use as antiallergenic agents and cerebral function activators has been proposed. Unfortunately, a higher level or concentration of catechins in an orally consumable product leads to inferior to poor organoleptic properties of said orally consumable product, in particular to a bitter taste and/or astringent taste.

During the processing of green tea leafs in order to obtain so called black tea (sometimes also called red tea) the colourless catechins are converted to coloured polyphenols, including theaflavins and thearubigens. Theaflavins as well as thearubigens have a very bitter and astringent taste.

In the prior art, e.g. in EP 1 258 200, WO 2005/096841, WO 2006/024587, EP 1 868 452, EP 1 901 618, EP 2 008 530, EP 2 058 297, EP 2 253 226, EP 2 008 530 and EP 1 972 203, different methods and substances are described to reduce, mask, modulate and/or suppress bitter and/or astringent taste impressions, for example by using flavanoids, e.g. flavanes, especially hydroxyflavanones, gamma-amino butyric acid, hydroxybenzoic acid amides, deoxybenzoins, gingerdiones such as those disclosed in WO 2007/003527, 4-hydroxydihydrochalcones, alkamides such as pellitorine or their mixtures. Additionally, neoflavanoids, especially glycosylated neodiosmin; flavones; chalcones, e.g. hydroxychalcones; nucleotides, especially cytidine 5'-monophosphate, adenosine 5-monophosphate; or extracts of plants such as ginger extract may be used.

The use of a compound which itself exhibits a strong taste in order to mask the unpleasant bitter and/or astringent impression, e.g. the use of acids like malic acid, acetic acid, citric acid, tartaric acid, succinic acid, adipic acid, or phosphoric acid, the use of sucrose, of sodium salts or of umami compounds is known in the art.

US 2003/0096050 discloses food compositions containing catechins (i.e. flavan-3-ols) and gallic acid, wherein the gallic acid is said to have a certain bitterness mitigating effect.

The substances known to reduce, modulate, mitigate or suppress bitter and/or astringent taste impressions, including other substances not mentioned above, are often limited in their use, for example due to their properties or incompatibility with other ingredients often used in oral compositions (e.g. poor solubility in typical diluents, instability, discoloration, unpleasant taste, off-notes or the like).

Saponins are known and occur in a wide variety of plants such as peanuts, lentils, lupins, alfalfa, oats and spinach. Based and depending on their aglycone structure, saponins are generally categorized into three main groups as groups A, B, and E (see Heng, Dissertation, 2005, University of Wageningen, Netherlands). Group B saponins are derivatives of the aglycone sapogenol B (Shiraiwa, Agric. Biol. Chem.,1991, 55(4): 911-7).

The identification and analysis of saponins is also described in the literature, see e.g. Lee et. al., J. Mass. Spectrom. 1999, 34, 804-812 and Fuzzatti et. al. J. Chromatography A 1997, 777, 233-238.

Biological activity studies in vivo have shown that saponins' stronger bioactivities are associated with several health benefits. The results suggested that saponins in the diet have a wide spectrum of activity: they may be used as antifungal, antioxidative and antibacterial agents, and saponins are known as actives for the lowering of blood cholesterol and the inhibition of cancer cell growth (Tsukamoto, Yoshiki in "Soy in Health and Disease Prevention", Chapter 9 "Soy Saponin" (pages 155-172), Taylor & Francis Group, 2006 CRC Press, edited by M. Sugano.

Saponins are generally known for having a bitter taste (see e.g. JP 2008/173090, JP H04-364130).

For example, soy saponin I is described as the bitter principle of the pea (Pisum sativum) in J. Sci. Food. Agric 1984, 35(8): 887-92).

US 6,426,112 discloses soy products having improved odour and flavour. US 6,426,112 suggests the use of several substances, for example rosemanol or salts of gallic acid, to obtain an odour-reduced soybean product.

Hu et al. describe in J. Nutr. 2004, 134, 1867-1873 the results of a feeding study conducted to evaluate soy saponin bioavailability in humans. In this study a concentrated soy extract containing a high amount of group B soyasaponin (including soy saponin I and soy saponin II) was used.

Philbrick et al. (Kidney International 2003, 63, 1230-1239) investigated the effect of different soy-derived products comprising soysaponin Bb in a mouse model of polycystic kidney disease.

WO 2010/026003 describes beverages containing certain benzyl carboxylic acid compounds and their derivatives in order to reduce the bitter taste caused by flavan-3-ols, particularly catechins.

In view of the many positive health contributions associated with flavan-3-ols (e.g. those mentioned above), it is desirable to formulate consumable compositions, such as beverages and foods (food products, foodstuffs), with elevated levels of flavan-3-ols. Unfortunately, increased amounts of flavan-3-ols in orally consumable products may result in poor and undesirable organoleptic properties of said products, in particular products having bitter taste and/or astringent taste.

The primary objective of the present invention therefore was to find further substances (one or more compounds) able to modify or to mask (i.e. reduce or suppress) unpleasant taste impressions, in particular bitter and/or astringent taste impressions.

Preferably, said substances should allow the production of consumables, preferably orally consumable compositions, comprising a bitterness and/or astringency causing level of bitter and/or astringent taste impression causing substances, preferably of flavan-3-ols, said consumables having improved taste properties, in particular reduced bitterness and/or reduced astringency.

Further, said substances should preferably be compatible with other ingredients typically used in oral compositions (like solvents, carriers, flavouring substances, sweeteners, antioxidants, vitamins, and the like), in particular preferably be stable and/or be sufficiently soluble in typical diluents. In addition, said substances themselves should preferably not have a strong taste, i.e. have a rather neutral taste profile, and preferably should not impart unpleasant taste impressions, at least not to a significant extent, at the levels said substances are used in the oral compositions. Said substances should then

for example be compatible with many different aroma or flavour substances and flavour types, preferably without deteriorating or affecting the overall taste impression and taste profile of the respective oral composition.

The primary objective of the present invention was achieved by the use of a saponin compound of formula (I) or a physiologically acceptable salt thereof, 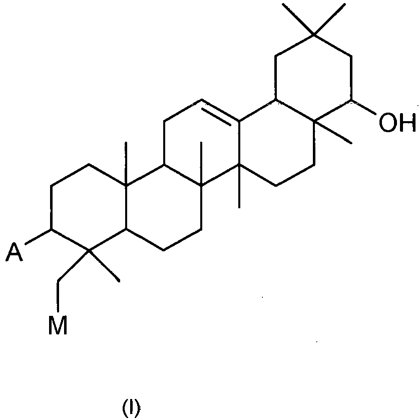 wherein
M is hydrogen or hydroxyl, preferably hydroxyl, and
A is a carbohydrate moiety, preferably an oligosaccharide moiety,
for modulating, reducing or suppressing an unpleasant taste of an unpleasant substance or substance mixture.

The compounds of formula (I) include all stereoisomers, such as those which may exist due to asymmetric carbons on the various substituents, including enantiomeric forms and diastereomeric forms. Individual stereoisomers of the compounds of the formula (I) of the present invention may, for example, be substantially free of other isomers, or may be admixed with one or more other stereoisomers or be in the form of racemates.

To the extent that compounds the formula (I) and salts thereof may exist in their tautomeric form, all such tautomeric forms are contemplated herein as part of the present invention.

The compounds of formula (I) structurally may be described as having an oleanene-type triterpenoid aglycone moiety with an saccharide chain attached thereto in the position indicated in formula (I). Physiologically acceptable salts of the compounds of formula (I) are preferably those in which the counterion is selected from the group consisting of Na⁺, K⁺, NH₄⁺, Ca²⁺, Mg²⁺, Al³⁺ and Zn²⁺.

Surprisingly the saponin compounds of the formula (I) may mask, i.e. reduce or suppress, unpleasant taste impressions, in particular bitter and/or astringent taste impressions (in the human oral cavity), even when used in low concentrations.

As found in our own experiments (see the example 1 hereinbelow), at a level of 100 ppm in a 5 wt.% aqueous sucrose solution soy saponin I showed only faint cardboardy, fatty, dusty and mouth drying taste effects, but no bitterness or astringency. In the same concentration soy saponin II was found to be only very weakly mouth drying. Also in the latter case no bitterness or astringency was observed.

Thus, in view of these results and our other similar experiments with compounds of formula (I) it seems that, in contrast to the results reported in J. Sci. Food. Agric 1984, 35(8): 887-92, that at least certain saponins, in particular those described in more detail hereinbelow - in particular when used in low concentrations - do necessarily produce bitter taste impressions in the oral cavity.

More surprisingly the compounds of formula (I) are able to mask the bitterness of prominent bitter components of green tea and, of black tea and/or of consumables containing a bitterness causing level of flavan-3-ols, in particular of catechins, galloylated catechins, gallocatechins, epigallocatechins or epicatechins or their oligomers, theaflavin, isotheaflavin, neotheaflavin, theaflavin-3-gallate, theaflavin-3'-gallate, theaflavin-3,3'-digallate, isotheaflavin-3-gallate, epitheaflavic acid, epitheaflavic acid-3'-gallate, theaflavic acid, theaflavic acid-3'-gallate.

As used herein the term "flavan-3-ols" is used as a generic term for catechins, theaflavins, thearubigins, and mixtures thereof.

As used herein the term "catechins" is used as a generic term for catechin, gallocatechin, catechin gallate, gallocatechin gallate, epicatechin, epigallocatechin, epicatechin gallate, epigallocatechin gallate, their respective stereoisomers, tautomers, salts, solvates, hydrates, and mixtures thereof (as known from the literature, see e.g. Gu et al., J. Nutr., 2004, 134, 613-7).

As used herein the term "theaflavins" is used as a generic term for theaflavin, isotheaflavin, neotheaflavin, theaflavin-3-gallate, theaflavin-3'-gallate, theaflavin-3,3'digallate, isotheaflavin-3-gallate, epitheaflavic acid, epitheaflavic acid-3'-gallate, theaflavic acid, theaflavic acid-3'-gallate and mixtures thereof. The structures of these compounds are well known (see Drynan et al., Nat. Prod. Rep., 2010, 27: 417-462). The term theaflavins includes all stereoisomers, tautomers, salts, solvates or hydrate forms of these compounds. The preferred theaflavins are theaflavin, theaflavin-3-gallate, theaflavin-3'-gallate, theaflavin-3,3'-digallate and mixtures thereof, as these theaflavins are most abundant in natural sources, such as black tea.

The definitions of terms and expressions given in the present text preferably have the general or specific meaning indicated respectively, and in each embodiment one, more than one or all definitions, independently of each other, may be replaced with the more specific definitions, thus defining further more preferred embodiments of the present invention, respectively.

Examples of compounds which may produce a bitter and/or an astringent taste (which may additionally produce cardboardy, dusty, dry, floury, rancid and/or metallic) taste impressions in the oral cavity are: xanthine alkaloids, xanthines (caffeine, theobromine, theophylline and methylxanthines), alkaloids (quinine, brucine, strychnine, nicotine), phenolic glycosides (for example salicin, arbutin), flavonoid glycosides (for example neohesperidin, hesperidin, naringin, quercitrin, rutin, hyperosides, isoquercitrin, avicularin), isoflavonoids or the glycosides thereof (for example daidzin, genistin and the acyl or malonyl esters thereof), bitter tasting chalcones or chalcone glycosides (for example phloridzin, phloretin-2-O'-xyloglucoside), hydrolyzable tannins (gallic or ellagic acid esters of carbohydrates, for example pentagalloylglucose) non-hydrolyzable tannins (optionally catechins and/or theaflavins as further defined below), afzelechins, epiafzelechins, and the oligomers thereof, for example proanthyocyanidines or procyanidines, thearubigin), flavones (for example quercetin, taxifolin, myricetin or their respective glycosides such as quercetrin, rutin, myricitrin), phenols such as for example salicin or arbutin, polyphenols (for example hydroxycinnamic acids and the esters thereof such as γ-oryzanol, caffeic acid or the esters thereof, for example chlorogenic acid, neochlorogenic acid, cryptochlorogenic acid), terpenoid bitter substances (for example limonoids, such as limonin or nomilin from citrus fruits, lupolones and humulones from hops, iridoids, secoiridoids), triterpene glycosides such as P57A and related active ingredients from Hoodia gordonii, absinthin from wormwood, amarogentin from gentian, metallic salts (in particular potassium, magnesium and calcium salts, potassium chloride, potassium gluconate, potassium carbonate, potassium sulfate, potassium lactate, potassium glutamate, potassium succinate, potassium malate, sodium sulfate, magnesium sulfate), pharmaceutical active ingredients (for example fluoroquinolone antibiotics, paracetamol, aspirin (acetylsalicylic acid), β-lactam antibiotics, ambroxol, omeprazol, propylthiouracil (PROP), guaifenesin), vitamins (for example vitamin H, B-series vitamins such as vitamin B1, B2, B6, B12, niacin, pantothenic acid), denatonium benzoate, sucralose octaacetate, iron salts, aluminum salts, zinc salts, urea, unsaturated fatty acids, in particular unsaturated fatty acids in emulsions, bitter-tasting amino acids (for example leucine, isoleucine, valine, tryptophan, proline, histidine, tyrosine, lysine or phenylalanine) and bitter- tasting peptides (in particular peptides with an amino acid from the group comprising leucine, isoleucine, valine, tryptophan, proline or phenylalanine at the N or C terminus).

Preferred substances which taste bitter and/or astringent (which may additionally taste cardboardy, dusty, dry, floury, rancid and/or metallic) are: caffeine, theobromine and theophylline, quinine, salicin, arbutin, neohesperidin, naringin, quercitrin, rutin, daidzin, genistin and the acyl or malonyl esters thereof, phloridzin, gallic or ellagic acid esters of carbohydrates (for example pentagalloylglucose), optionally catechins as defined below, proanthyocyanidines or procyanidines, theaflavins as defined hereinbelow, quercetin, taxifolin, myricetin, γ-oryzanol, caffeic acid or esters thereof (for example chlorogenic acid and isomers), limonoids such as limonin or nomilin from citrus fruits, lupolones and humulones from hops, triterpene glycosides such as P57A and related active ingredients from Hoodia gordonii, absinthin from wormwood, amarogentin from gentian, metallic salts (in particular potassium, magnesium and calcium salts, potassium chloride, potassium gluconate, potassium carbonate, potassium sulfate, potassium lactate, potassium glutamate, potassium succinate, potassium malate, sodium sulfate, magnesium sulfate) and pharmaceutical active Ingredients (for example fluoroquinolone antibiotics, paracetamol, aspirin, β-lactam antibiotics, ambroxol, omeprazol, propylthiouracil (PROP), guaifenesin).

Particular bitter tasting compounds are catechins, in particular epigallocatechin gallate, epicatechin, epicatechin gallate, and epigallocatechin and their respective stereoisomers or mixtures as described by Gu et al. (J. Nutr., 2004, 134, 613-617), procyanidines (= proanthocyanidines), in particular Procyanidin B1, Procyanidin B2, Procyanidin A2, Procyanidin B5, Procyanidin C1, and theaflavins, in particular theaflavin, isotheaflavin, neotheaflavin, theaflavin-3-gallate, theaflavin-3'-gallate, theaflavin-3,3'digallate, isotheaflavin-3-gallate, epitheaflavic acid, epitheaflavic acid-3'-gallate, theaflavic acid, and theaflavic acid-3'-gallate, as described by Drynan et al. (Nat. Prod. Rep., 2010, 27: 417-462) and their respective stereoisomers and mixtures, and mixtures of these substances.

Compounds which may produce a bitter and/or astringent and optionally a cardboardy, chalky, dusty, dry, floury, rancid and/or metallic aftertaste in the oral cavity may be aroma substances or flavourings having a pleasant primary taste (for example sweet, salty, spicy, umami, sour) and/or odour and may belong, for example, to the group comprising sweeteners, sugar substitutes or aroma substances. Examples which may be mentioned are: potassium salts (in particular potassium chloride, potassium gluconate, potassium carbonate, potassium sulfate, potassium lactate, potassium glutamate, potassium succinate, potassium malate), aspartame, neotame, superaspartame, advantame, saccharin, sucralose, cyclamate, acesulfam K, tagatose, monellin, stevioside, rebaudioside A, rebaudioside C, rebaudioside D, rubusosid, phyllodulcin, hernandulcin, thaumatin, brazzein, miraculin, glycyrrhizin, glycyrrhetinic acid or derivatives thereof, or the physiologically acceptable salts of the these compounds.

For the purpose of the invention the term "carbohydrate" and "saccharide" is used in conformity with the IUPAC recommendations (PAC, 1995, 67, 1307). These terms particularly refer to mono- or oligosaccharidyl moieties bound via one of their oxygen atoms forming a glycosidic bond. The carbohydrates forming the basis for such moieties include, but are not limited to, uronic acids, monosaccharides, disaccharides, further oligosaccharides. Uronic acid for example are monocarboxylic acids formally derived by oxidation to a carboxy group of the terminal -CH2OH group of aldoses. Preferably these uronic acids includes, but are not limited to, oxidation products of hexapyranoses, e.g. glycopyranuronic acids such as glucuronic acid, galacturonic acid, iduronic acid, alluronic acid, alturonic acid, mannuronic acid, taluronic acid. Of particular interest are glucuronic acid and galacturonic acid. Monosaccharides for example include, but are not limited to, aldopentoses such as arabinose, lyxose, ribose and xylose, or desoxypentoses such as deoxyribose; and aldohexoses such as allose, altrose, galactose, glucose, gulose, idose, mannose and talose, or desoxyhexoses such as rhamnose, cymarose, fucose, 2-desoxyglucose or 2-deoxygalactose. Disaccharides for example include, but are not limited to, kojibiose, sophorose, nigerose, laminaribiose, maltose, cellobiose, isomaltose, gentiobiose, lactose, melibiose, neohsperidose, rutinose, primeverose, sambubiose, xylobiose, lathyrose and mannobiose.

Preferably a compound of formula (I) used according to the present invention or a physiologically acceptable salt thereof, comprises two or more saccharide moieties, wherein each saccharide moiety, independently from the other saccharide moieties, comprises a ring having 4 or 5 carbon atoms, and wherein preferably each carbon atom of said rings is substituted by at least one substituent selected from the group consisting of hydrogen, hydroxyl, C1-C5-alkyl, C1-C5-OH, C1-C5-carboxyl and C1-C5-alkoxy.

In a preferred embodiment the invention relates to the use of a compound of formula (I) or a physiologically acceptable salt thereof, wherein
- at least one saccharide moiety in A comprises a COOH substituent, and/or
- each saccharide moiety of A, independently from the other saccharide moieties comprises a ring having 4 or 5 carbon atoms, wherein each ring carbon atom of said rings is (i) substituted by one hydrogen, and (ii) independently from each other, preferably additionally bound to an oxygen atom or a substituent selected from the group consisting of hydrogen, hydroxyl, C1-C5-alkyl, C1-C5-OH, C1-C5-carboxyl, and C1-C5-alkoxy.

The present invention preferably relates to the use of a compound of formula (I) or a physiologically acceptable salt thereof, wherein A comprises at least two saccharide moieties of the general formula (II) 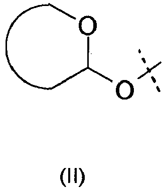 bound to each other or to the triterpene aglycone moiety of the compound of formula (I) via the oxygen, the dotted line marking the linking bond,
wherein each saccharide moiety, independently from each other, comprises a ring having 4 or 5 carbon atoms, and wherein preferably each carbon atom of said rings is substituted by at least one substituent selected from the group consisting of hydrogen, hydroxyl, C1-C5-alkyl, C1-C5-OH, C1-C5-carboxyl and C1-C5-alkoxy,
wherein preferably
- at least one saccharide moiety in A comprises a COOH substituent,
   and/or
- each saccharide moiety of A, independently from the other saccharide moieties comprises a ring having 4 or 5 carbon atoms, wherein each ring carbon atom of said rings is (i) substituted by one hydrogen, and (ii) independently from each other, preferably additionally bound to an oxygen atom or a substituent selected from the group consisting of hydrogen, hydroxyl, C1-C5-alkyl, C1-C5-OH, C1-C5-carboxyl, and C1-C5-alkoxy.

For the sake of clarity, when the dotted line marks the bond between the oxygen atom and the triterpene aglycone moiety, said dotted line marks the bond between the oxygen atom and carbon atom number 3 (according to the oleanane nomenclature) of the triterpene aglycone moiety according to the oleanane nomenclature (see below).

In a preferred embodiment, A corresponds to the formula 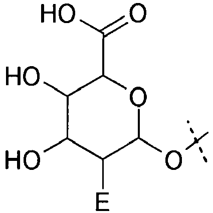 and is bound to the triterpene aglycone moiety via the oxygen, the dotted line marking the linking bond to triterpene aglycone moiety,
wherein E is a saccharide moiety consisting of 1 to 4 saccharide moieties having the meaning given above, preferably the preferred meaning as defined above.

The carbohydrates may carry one, several or all hydroxyl groups in modified form, e.g. as etherified hydroxyl or preferably esterified hydroxyl, respectively, for example in acetylated form, e.g. peracetylated form.

In another preferred embodiment the invention relates to the use of a compound of formula (I) or a physiologically acceptable salt thereof, wherein A comprises or consists of 2 to 5 saccharide moieties, preferably of two or three saccharide moieties.

In the case that group A in formula (I) is a disaccharide, trisaccharide or a higher oligosaccharide the bonds between each saccharide moiety may be of various possible types, e.g. preferably in the form of glycosidic connections of the 1→2, 1→3, 1→4 and 1→6 type, particularly preferred are glycosidic connections are of the 1→2 type (i.e. 1,2-linkages).

Especially preferred disaccharide carbohydrate moieties of group A in formula (I) (preferably with a total of 10 to 12 carbon atoms) are of the hexapyranosyl-pyranosid type, and preferably are selected from the group consisting of alpha-L-Rhamnopyranosyl-(1→2)-beta-D-galactopyranosid, alpha-L-Rhamnopyranosyl-(1→2)-beta-D-glucopyranosid, alpha-L-Rhamnopyranosyl-(1→2)-alpha-L-arabinopyranosid, beta-D-Glucopyranosyl-(1→2)-beta-D-galactopyranosid, beta-D-Glucopyranosyl-(1→2)-alpha-L-arabinopyranosid, glucosidyl (D-Glucohexapyranosidyl).

Preferred compounds in the context of the present invention are:

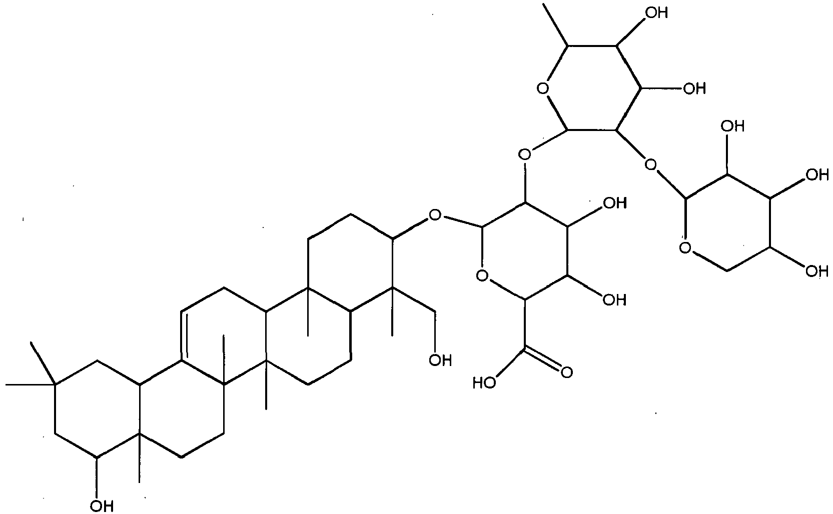

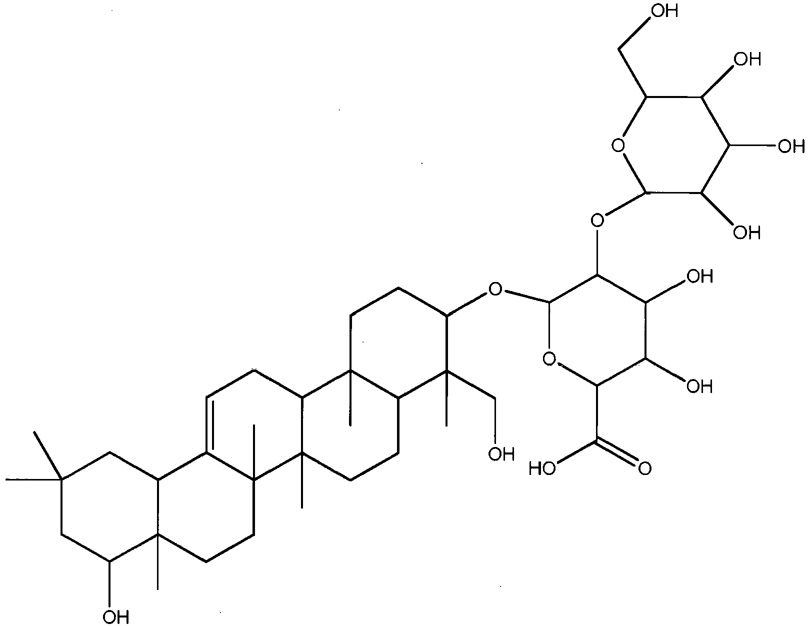

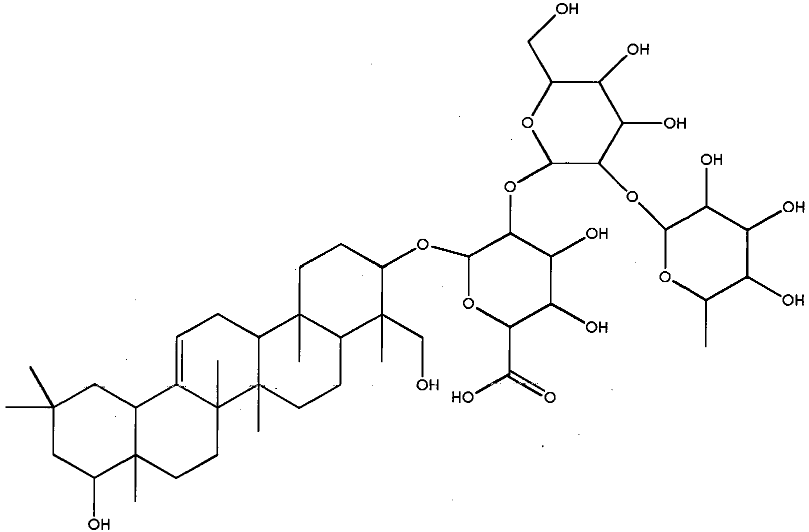

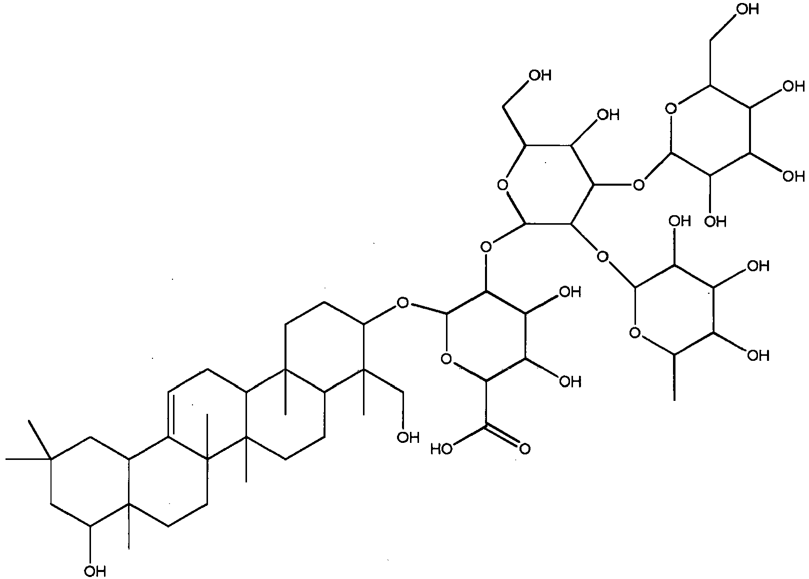

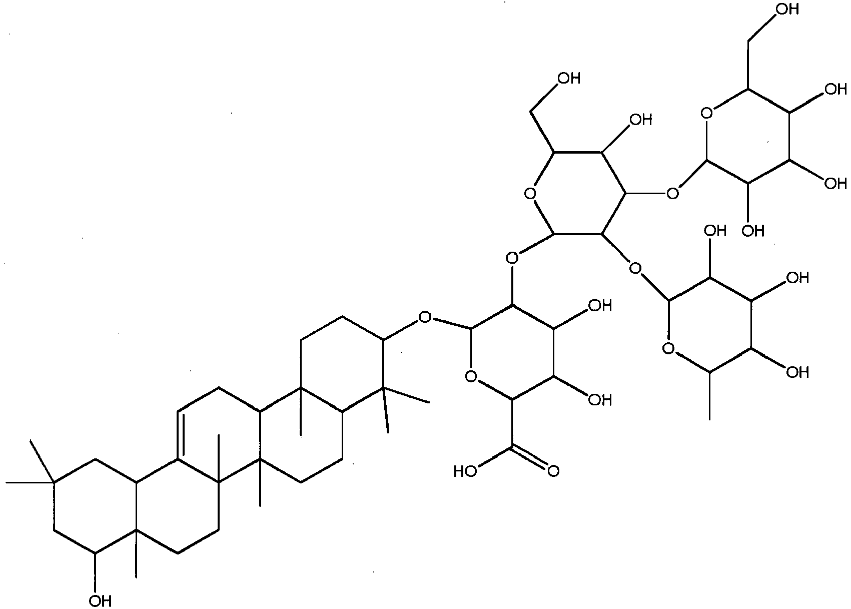

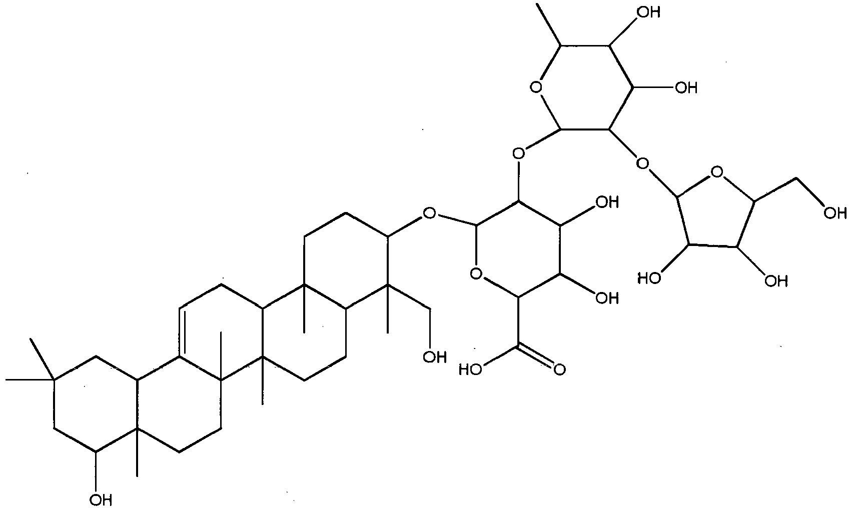

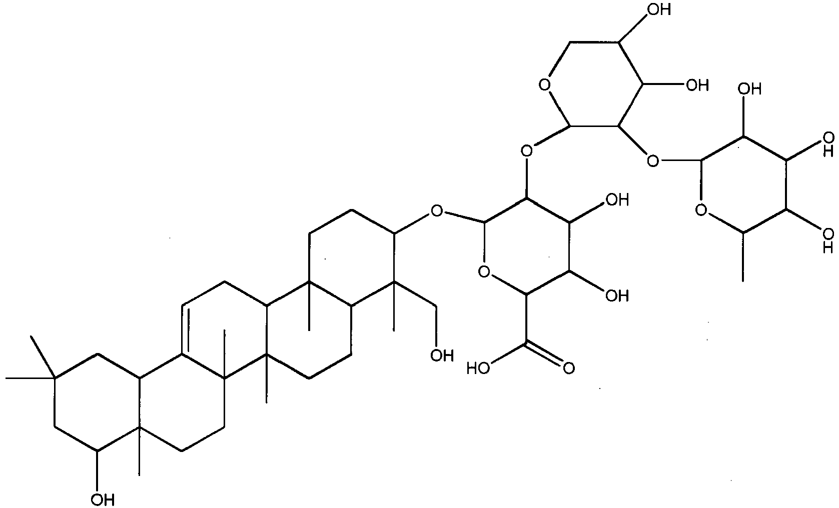

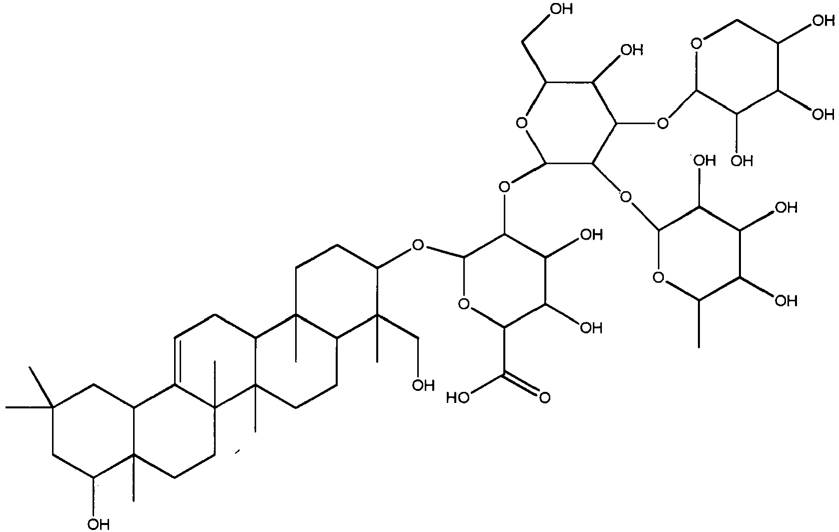

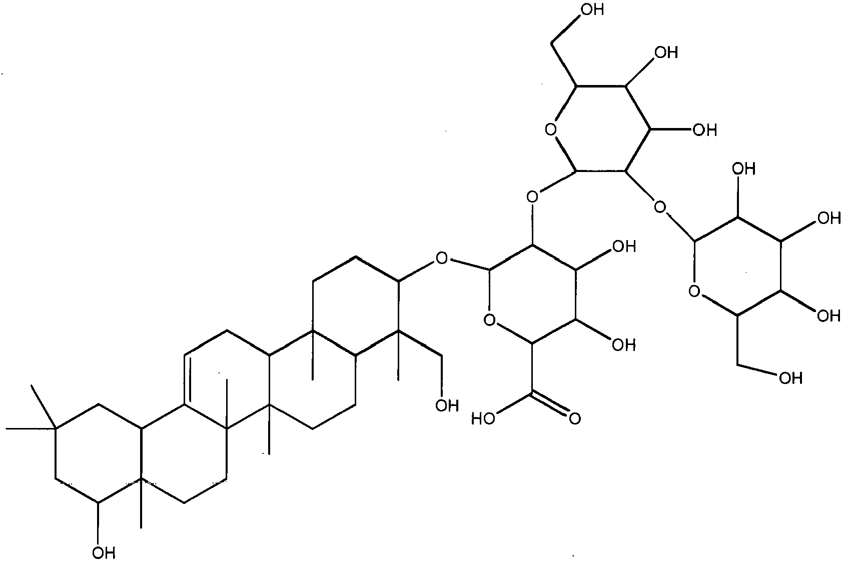

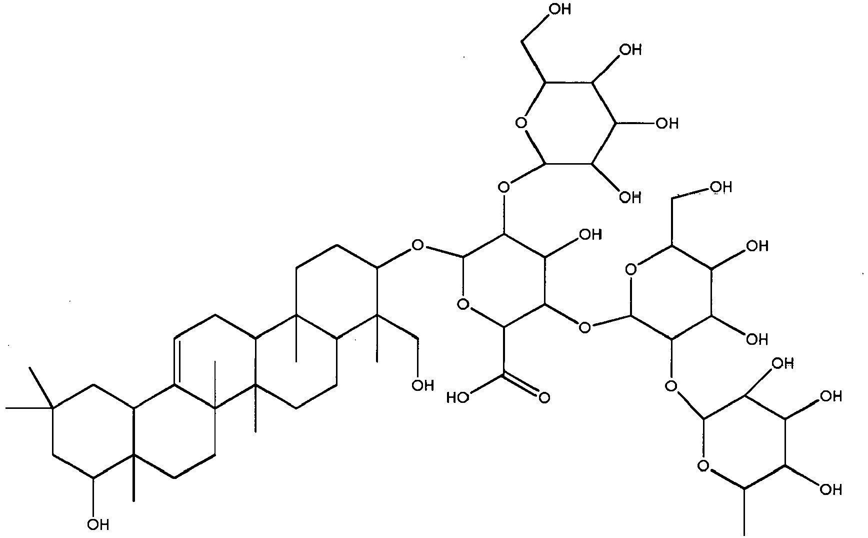

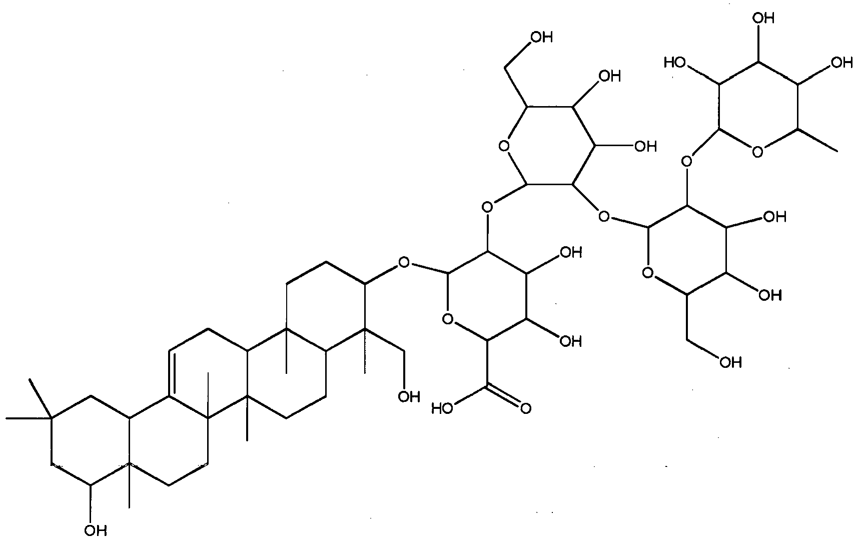

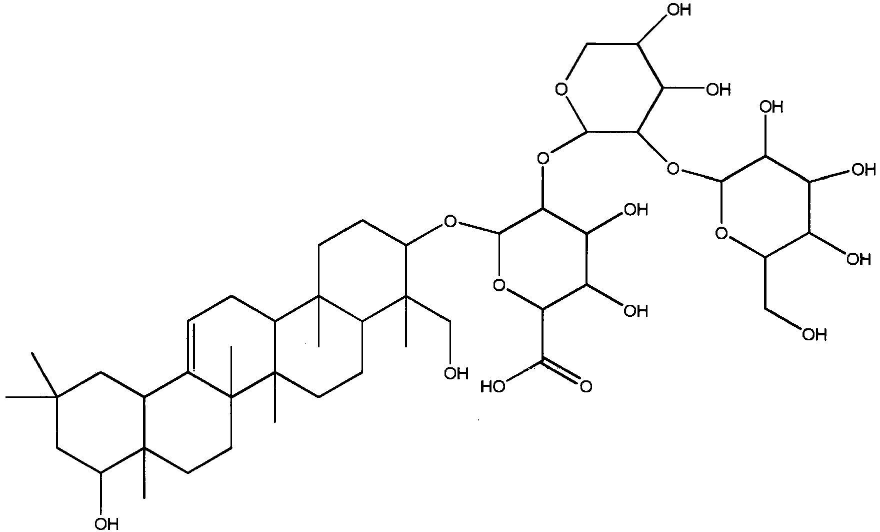

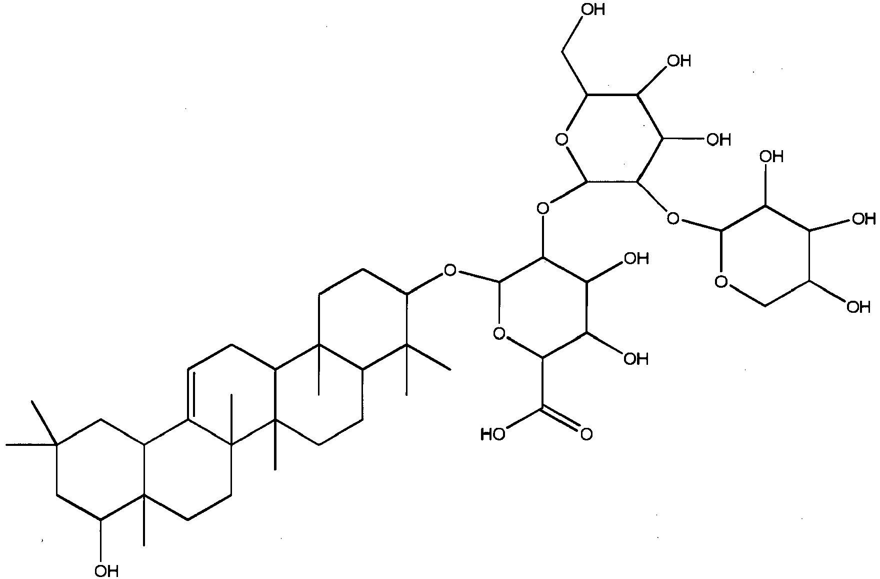

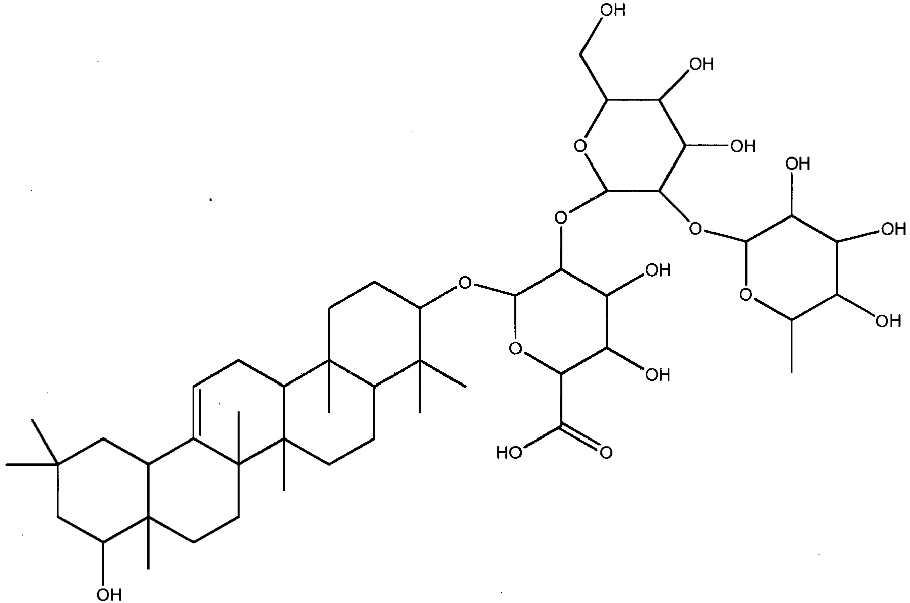

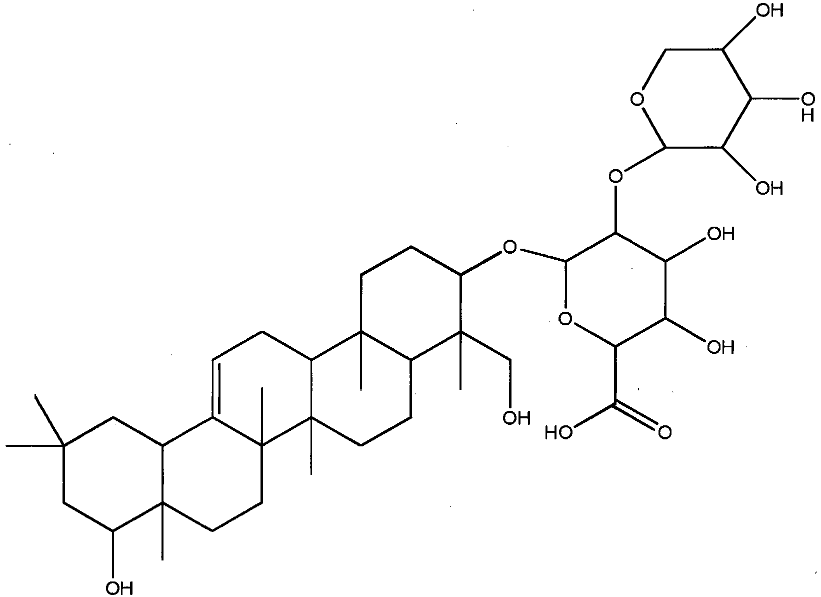

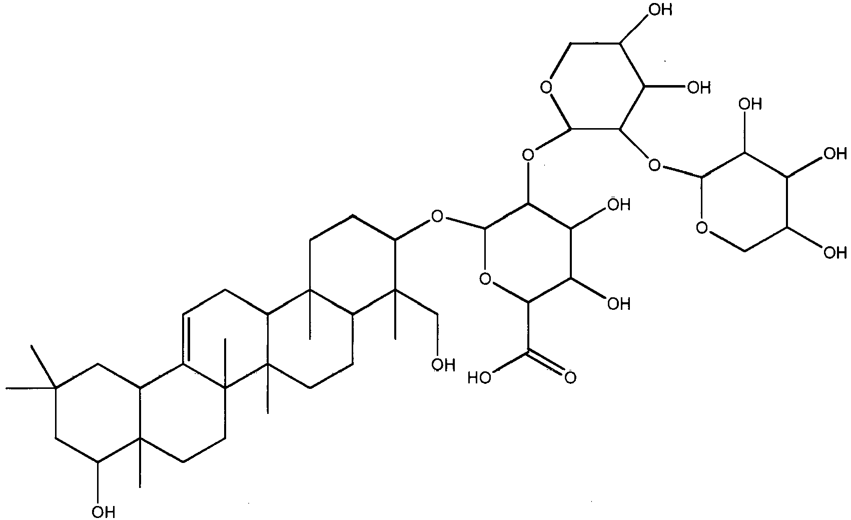

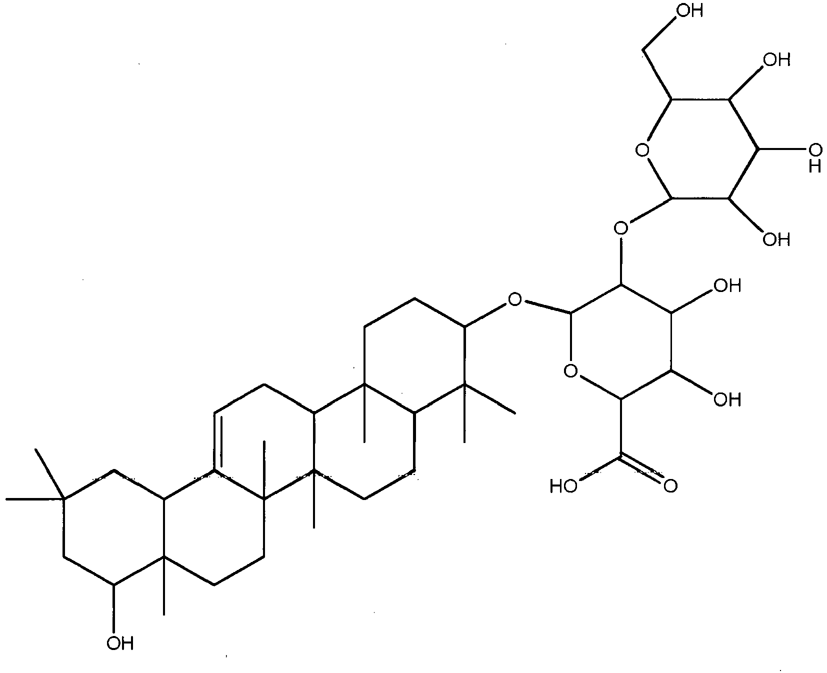

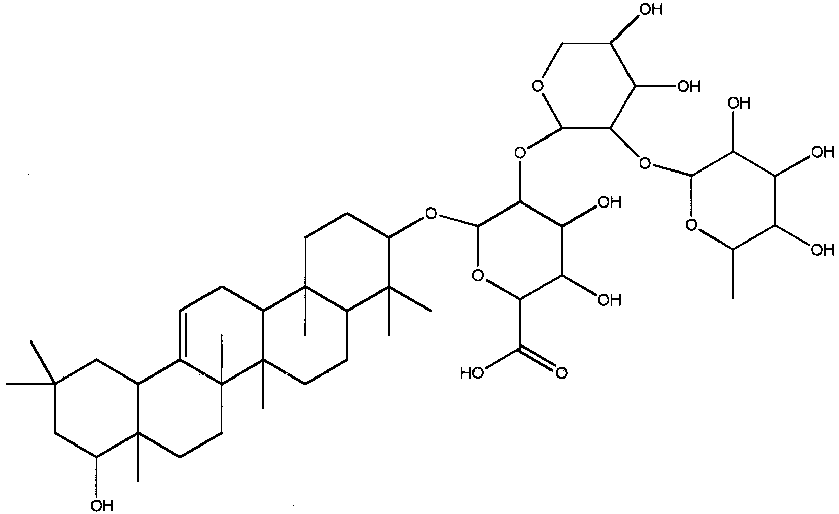

More preferably A is a saccharide moiety of formula (Tri) 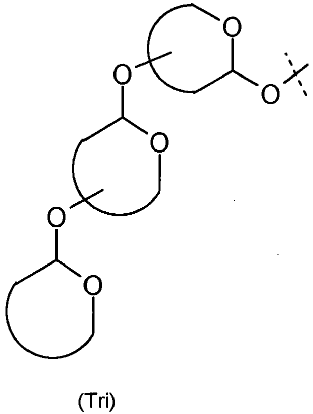 wherein preferably the saccharide moiety bound to the triterpene aglycone moiety of the compound of formula (I) via the linking bond marked with the dotted line comprises a COOH substituent and wherein preferably each saccharide ring carbon atom is bound to at least an oxygen atom or a hydroxyl, carboxyl or methyl substituent.

In another preferred embodiment of the present invention A corresponds to formula (Tri-X) 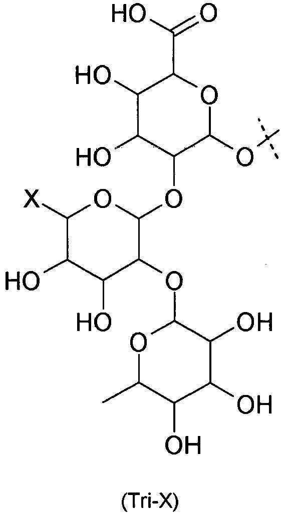 wherein X is hydrogen or -CH2OH, preferably X is -CH2OH.
wherein A is bound to the triterpene aglycone moiety of the compound of formula (I) via the linking bond marked with the dotted line.

In another preferred embodiment of the present invention a compound of formula (III) or a salt thereof is used 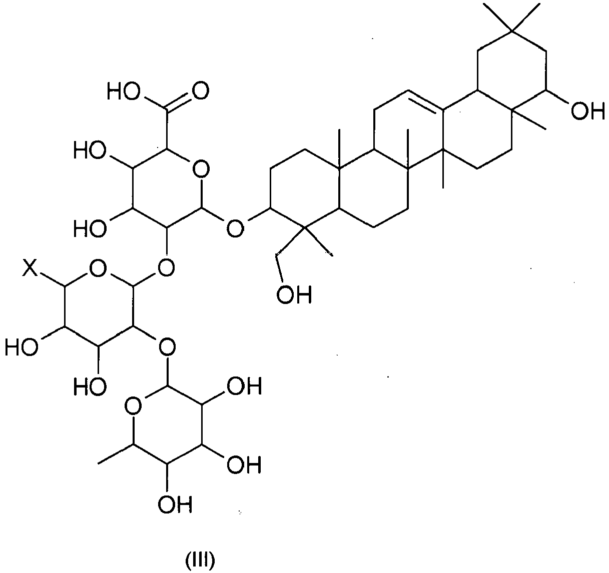 wherein X is hydrogen or -CH₂OH, preferably X is -CH₂OH.

In compounds of formula (I) preferably used in accordance with the present invention the oleanene aglycone has the following absolute stereochemical configuration:

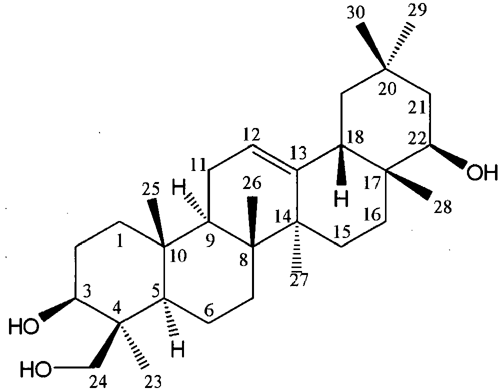

The numbers indicated therein relate to carbon atoms according to the oleanane nomenclature of the IUPAC Recommendations 1999, Revised Section F: Natural Compounds.

Further preferred compounds in the context of the present invention are:

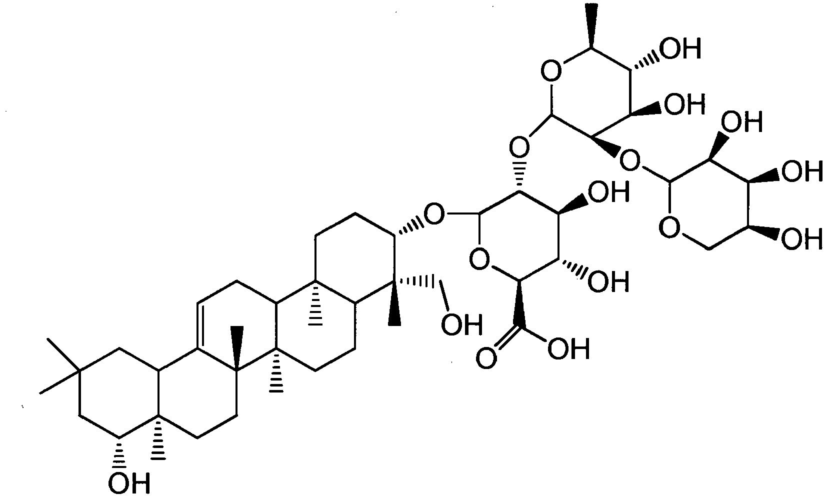

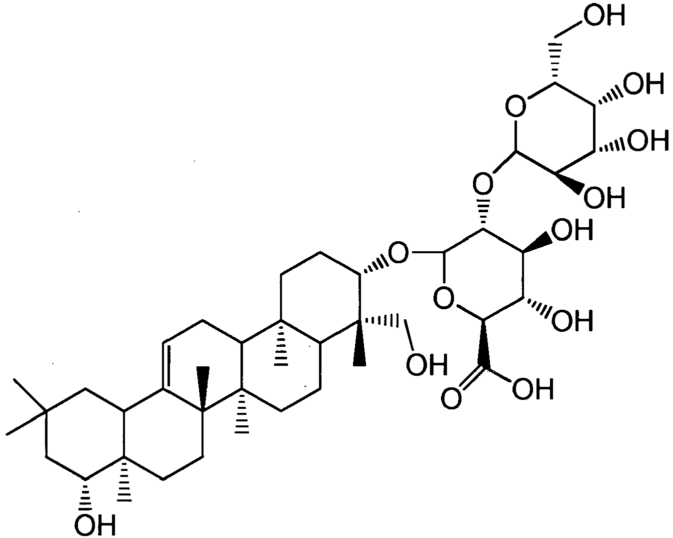

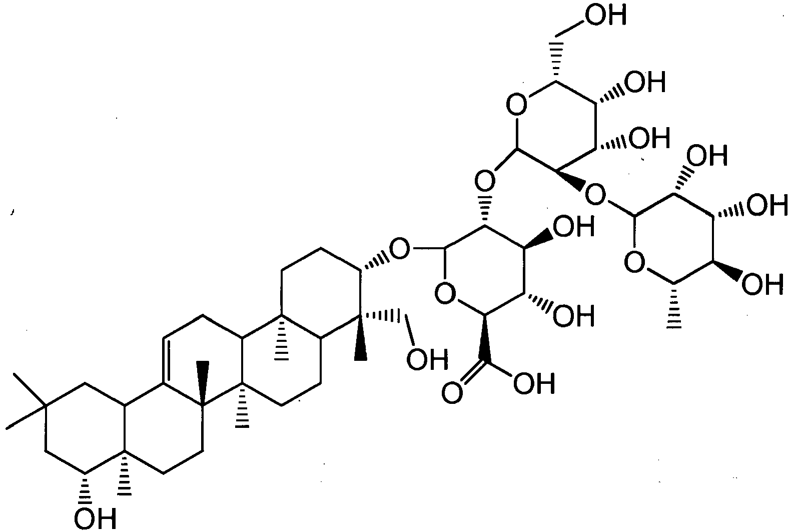

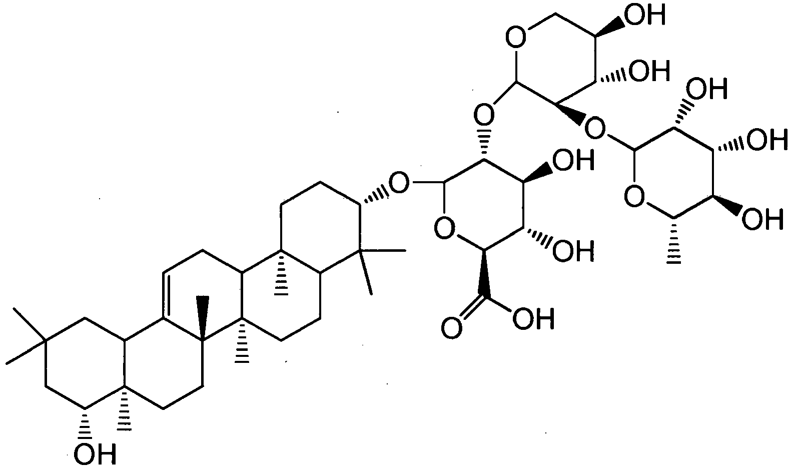

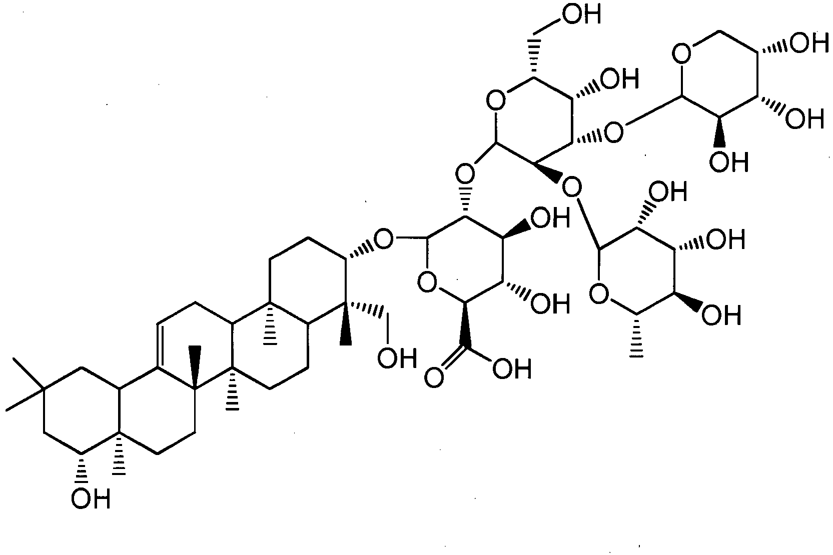

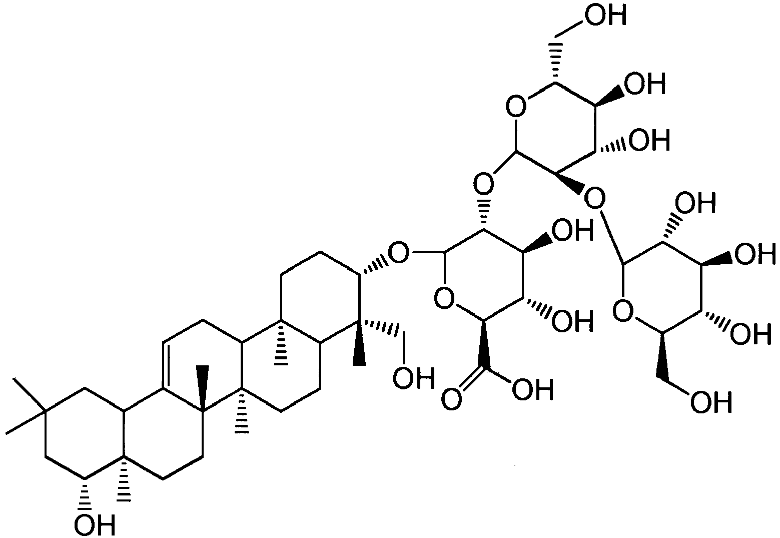

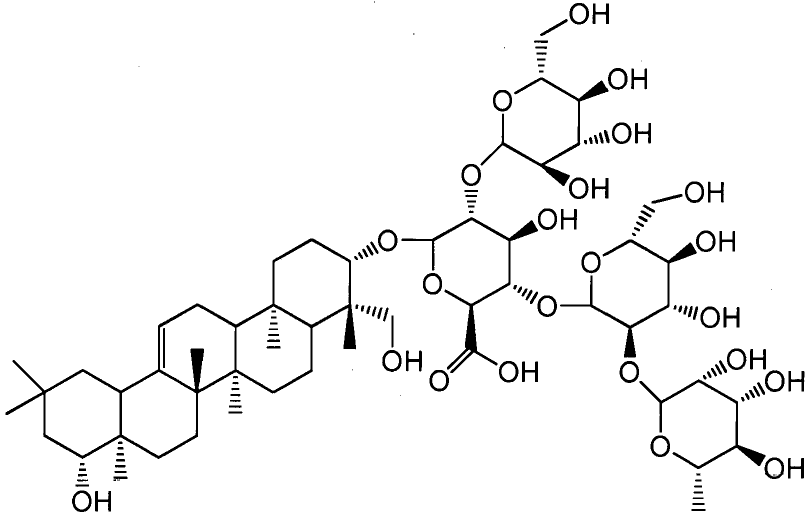

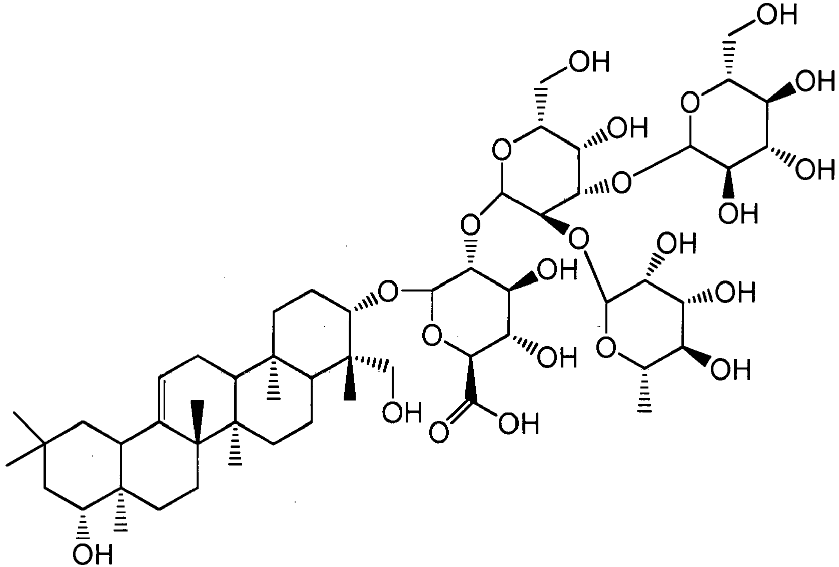

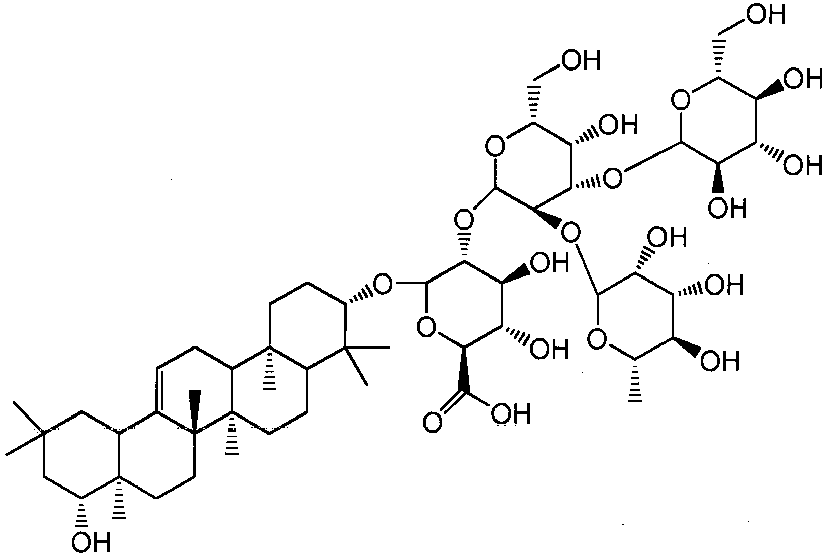

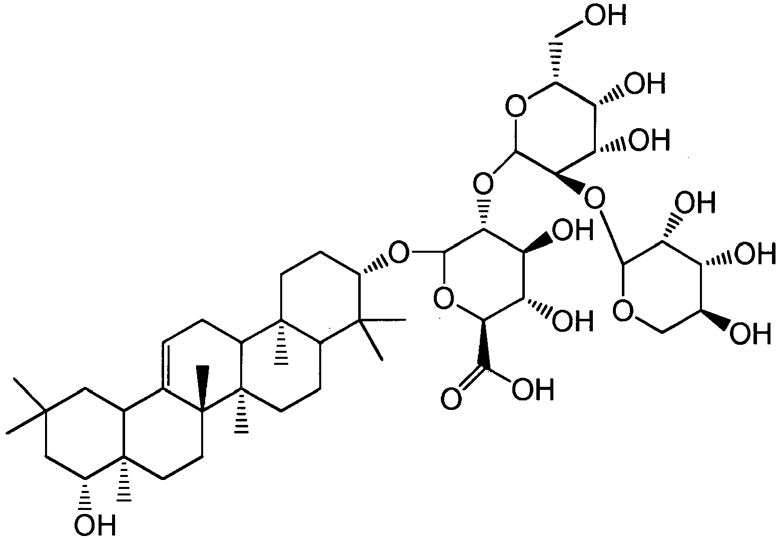

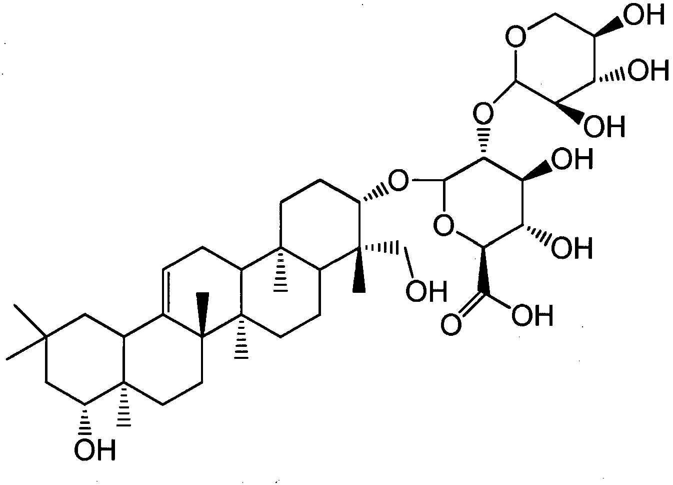

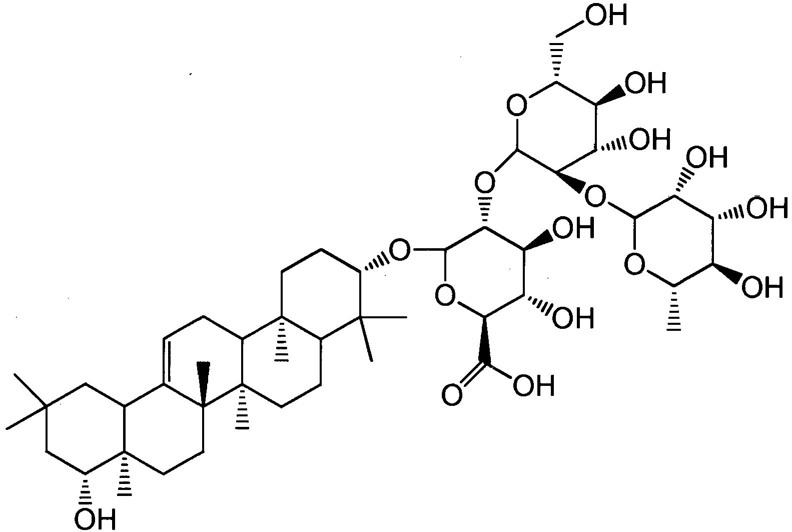

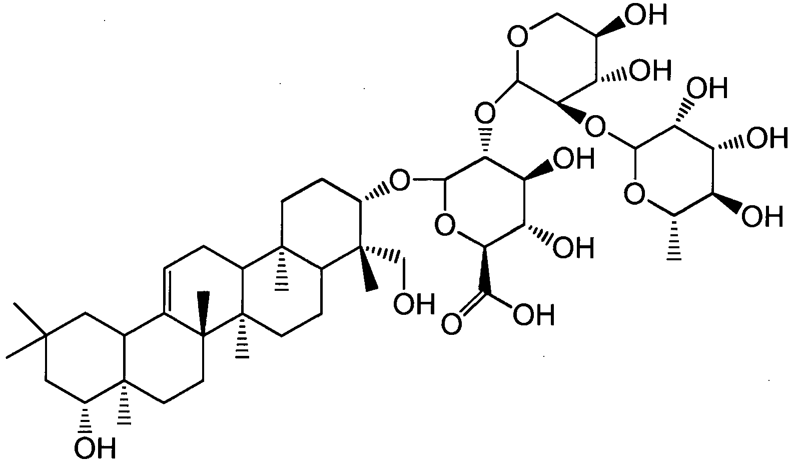

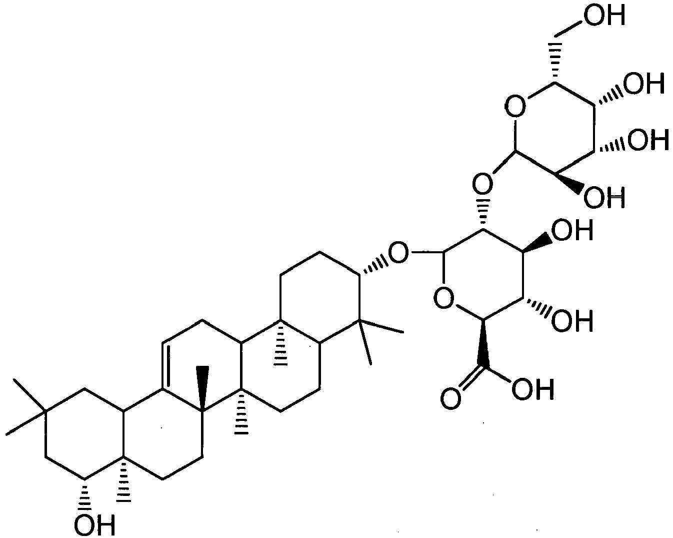

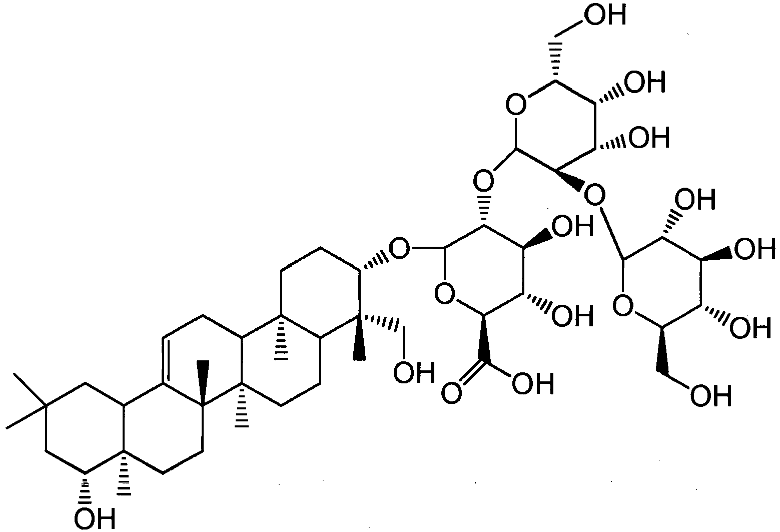

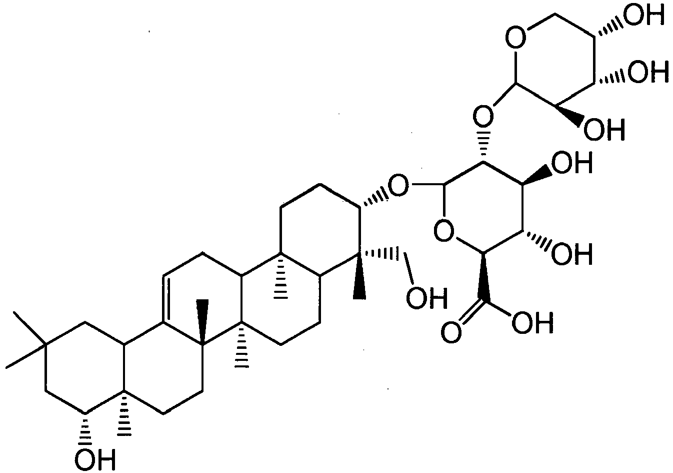

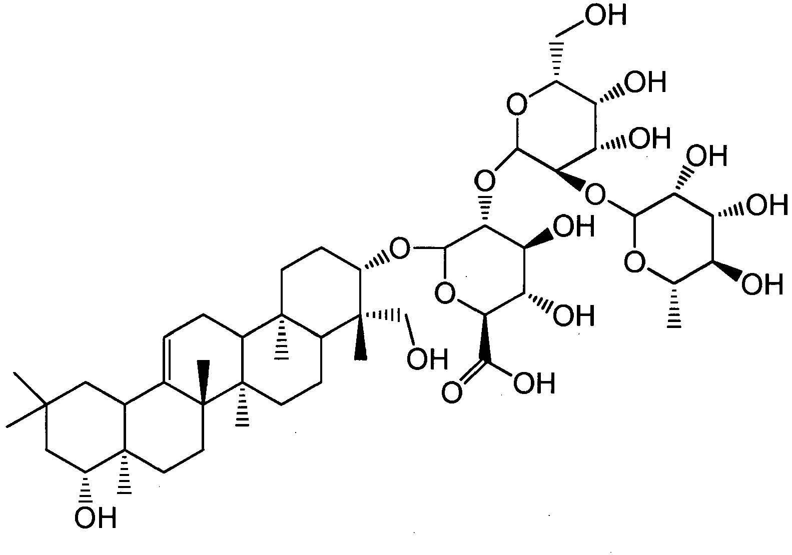

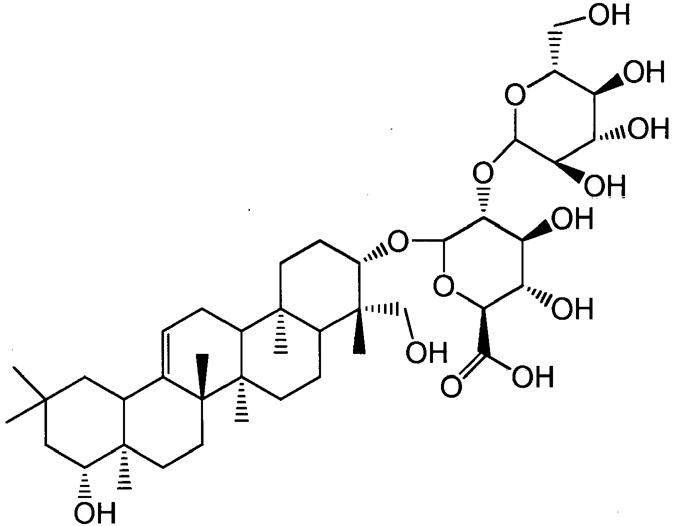

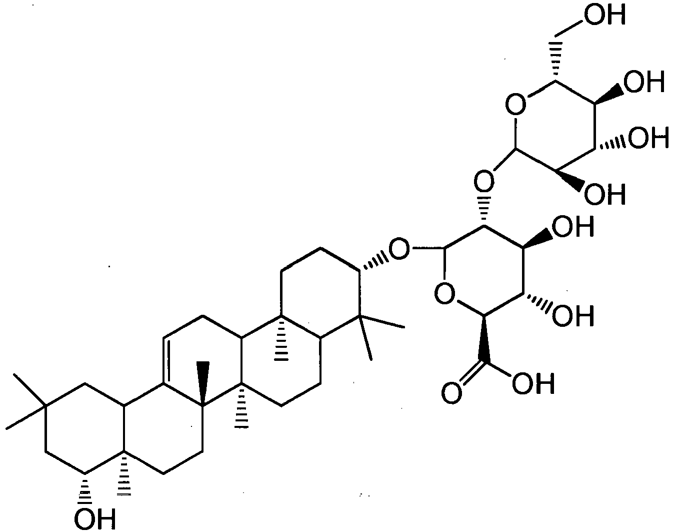

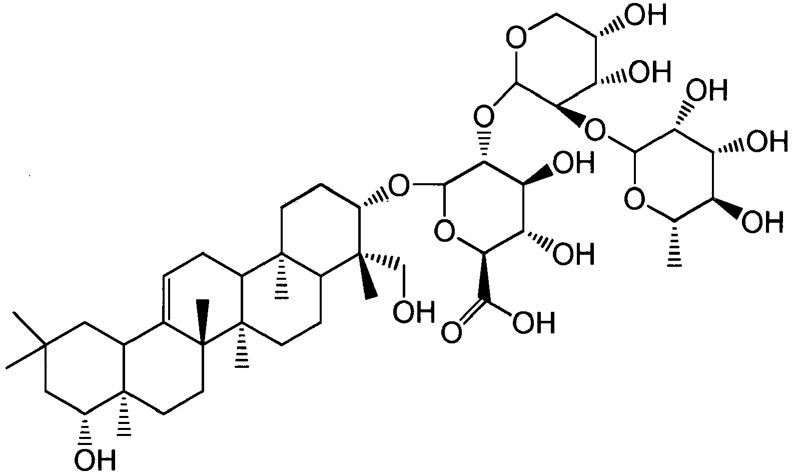

Particularly preferred compounds of formula (III) used in accordance with the present invention are:

| Name(s) and (CAS number) | Compound. Number | |
|---|---|---|
| Soy saponin I (Soyasaponin I) 51330-27-9 | [1] | 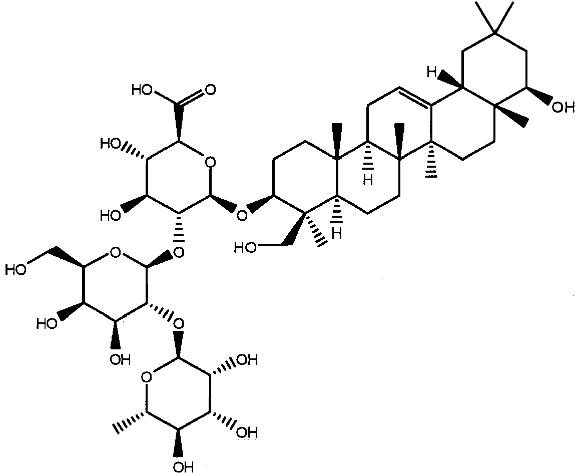 |
| Azukisaponin V (Hispidacin) 82793-05-3 | [2] | 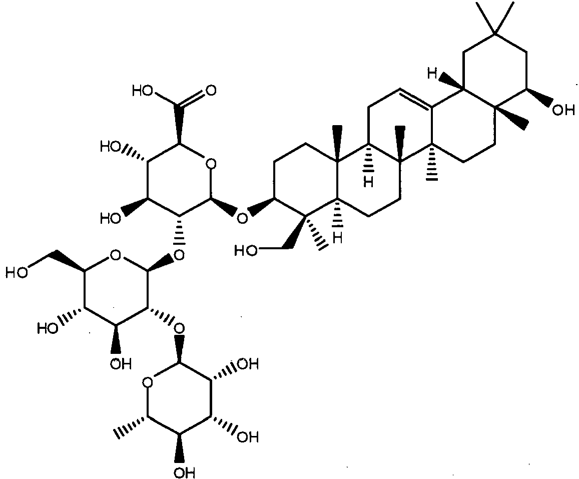 |
| Soy saponin II 55319-36-3 | [3] | 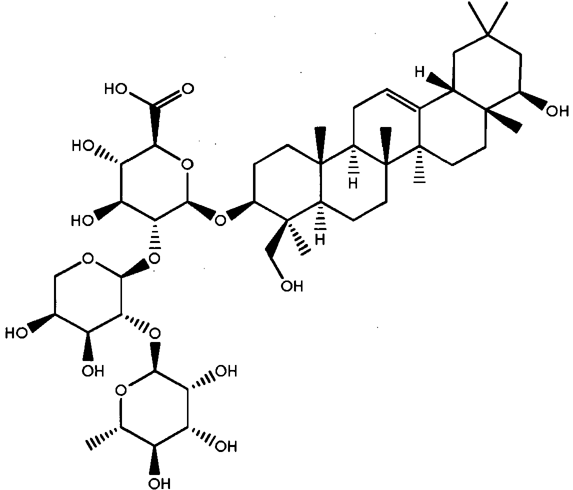 |

More particularly preferred according to the present invention are the compounds of formula (III) and the physiologically acceptable saltes thereof, most particularly soy saponin I [1], azukisaponin V [2], and mixtures thereof.

With compounds of formula (III), and the physiologically acceptable saltes thereof, particularly good masking effects were achieved, preferably of bitter and/or astringend taste impressions.

Particularly good masking effects, preferably of bitter and/or astringend taste impressions, were observed when a mixture comprising (i) soy saponin I [1] and/or azukisaponin V [2], and (ii) one or more further saponins of formula (I) were used.

Particularly good masking effects, preferably of bitter and/or astringend taste impressions, were observed also observed when a mixture comprising (i) soy saponin I [1], azukisaponin V [2], and optionally (ii) one or more further saponins of formula (I) were used.

Soy saponin I (CAS number 51330-27-9), also referred to as soyasaponin I, which is a particularly preferred compound of formula (I) of the present invention, may for example be isolated from Medicago sativa L. (alfalfa), Trifolium pratense L. or Trifolium repens L. seed material according the process disclosed in US 4,594,412 (see example 4 thereof) and described therein in detail.

Soy saponin II (CAS number 55319-36-3), sometimes also referred to as soyasaponin Bb, which is a particularly preferred compound of formula (I) of the present invention, as such is also known form the prior art.

Azukisaponin V (CAS number 82793-05-3), also sometimes called hispidacin, which is a particularly preferred compound of formula (I) of the present invention, may be isolated from Vigna angularis (azuki bean) or Astragalus danicus or Medicago hispida seed material by using the procedure described by Mahato et al., Phytochemistry 1991, 30: 3389-3393, Pelizzoni et al., Gazz. Chim. Ital., 1996, 126: 657-661.

In a preferred embodiment, the present invention relates to the use of a compound of formula (I) or (III), preferably in one of the preferred embodiments as defined above, or a physiologically acceptable salt of formula (I) or (III), preferably in one of the preferred embodiments as defined above, wherein the unpleasant taste is a bitter taste and/or an astringent taste, preferably the bitter and/or astringent taste of a compound selected from the group consisting of xanthine alkaloids, xanthines, alkaloids, phenolic glycosides, bitter-tasting flavonoid glycosides, bitter tasting chalcones or chalcone glycosides, hydrolyzable tannins, non-hydrolyzable tannins, and the oligomers thereof, here in particular flavan-3-ols and more particularly catechins as defined above, bitter-tasting flavones, bitter-tasting phenols, bitter-tasting polyphenols, bitter-tasting terpenoid substances, bitter-tasting triterpene glycosides not in accordance with formula (I), metallic salts, bitter-tasting pharmaceutical active ingredients, vitamins, denatonium benzoate, urea, unsaturated fatty acids, bitter-tasting amino acids, bitter-tasting peptides and bitter-tasting artificial or naturally occurring sweeteners.

The compound(s) of the formula (I) can e.g. be isolated or the extracts prepared as described in the appended examples. The method for detection can comprise high pressure liquid chromatography (HPLC) or on reversed phase silica gel (C18) with water/ acetonitrile-gradient as an elution solvent with UV as well as MS detection which are used for the product analysis and production optimization. It will be clear to those having ordinary skill in this art that the compound(s) of the formula (I), though per se natural products, can alternatively be synthesized according to standard methods leading to compounds identical with the natural compounds, where appropriate methods, for example, can be deduced from the following publications: "March's Advanced Organic Chemistry: Reaction, Mechanisms and Structure", 5th ed. by Michael B. Smith, Jerry March, Wiley-Interscience; 2001; "Classics in Total Synthesis: Targets, Strategies, Methods" by Nicolaou, Sorensen, John Wiley & Son Ltd, 1996 and "The Art and Science of Total Synthesis at the Dawn of the Twenty-First Century" by Nicolaou et al., Angew. Chem. Int. Ed. Engl, 2000, 39 (1): 44 -122.

Preferably, the compounds of the formula (I) are natural compounds, that is, compounds that are present in and can be isolated or extracted from natural sources (especially those mentioned in detail above and below) without chemical synthesis steps (though they may also be prepared or modified by chemical synthesis, e.g. acylated or the like) and are thus present as extracts or purified components of extracts, and not derivatives only obtainable by chemical synthesis.

For example, the extraction or isolation and (partial or complete) purification of the compound(s) of the formula (I) can be conducted by removing the cellular parts of the plant material (e.g. by centrifugation and/or filtration) and removing the supernatant, extracting the obtained cellular material as described above or in the examples to obtain an extract (which can already be used in the various embodiments of the invention) and, if desired, further purifying the compound(s) of the formula (I), e.g. by solvent partition or chromatography, to yield the enriched or pure compounds.

Preferably, the total weight of all compounds of formula (I) in an extract (direct or further enriched) is in the range from 0.01 to 99 % by weight, more preferably from 1 to 99 % by weight, in another embodiment from 5 to 99 % by weight, or from 20 to 95 % by weight, or e.g. from 50 to to 90 % by weight.

By the term "extract", either a direct extract (in liquid or preferably in dried form), e.g. obtained as described below, or preferably a further enriched extract (obtainable e.g. by one or more further purification steps after extraction, e.g. chromatography, for example as described below) containing one or more, preferably two or more compounds of the formula (I) is meant.

In the present text, unless indicated otherwise, the terms "solid", "solids", "liquid", "liquids" and the like relate to the state of a substance or substance mixture at 25°C at 1013 mbar.

Extraction preferably is carried out with a non polar or weakly polar solvent or solvent mixture, i.e. a solvent or solvent mixture being less polar than water; the preferred obtainable or obtained extracts according to the invention are lipophilic extracts.

Examples of appropriate solvents are organic solvents (two or more of which can also be mixed), e.g. a ketone or an ester, such as acetone and/or ethyl acetate, an ether, e.g. a cyclic ether such as dioxane, and/or (also in a specific embodiment) an alcohol e.g. ethanol, and/or a liquid or superfluid gas, especially supercritical carbon dioxide.

The pH value of the solvents can be modified by adding acids, citric acid, malic acid, maleic acid, succinic acid, fumaric acid, acetic and formic acid or ammonium acetate, respectively.

Preferably, the solvent may be removed after extraction, e.g. by evaporation or precipitation (e.g. by the addition of water).

Preferably, the extracts can subsequently be further enriched by one or more additional purification steps, such as distribution, e.g. between an aqueous and an ether or ester (e.g. diethyl ether or ethyl acetate) phase for one or more times, precipitation (e.g. crystallisation) or especially chromatography, e.g. by HPLC or MPLC, by which it is possible to obtain further enriched extracts or isolated compounds of the formula (I).

It is also possible to use other chromatographic methods such as gel permeation chromatography, countercurrent chromatography, or high speed counter current chromatography instead of the absorption chromatography described above.

Subsequent purification by preparative phase HPLC can also be carried out by the person skilled in the art using other stationary phases, such as RP8, phenyl, DIOL, C2, C4, C8 or amino.

The mobile phase mixtures may also contain additional other acids (for example formic acid) or additional buffers (for example ammonium acetate).

Preferably, the compound or compounds, in the embodiments of the invention, are enriched in the mixtures or extract or purified extracts, or in another embodiment as single compound, to a percentage, in independent embodiments of the invention, of up to 10, 20, 30, 40, 50, 60, 70, 75, 80, 85, 90, 92, 94, 95, 96, 97 or 98 % or more than 98 % by weight of the complete extract or purified extract, respectively.

In another embodiment of the invention, the compounds of the formula (I), a physiologically acceptable salt thereof, and/or an ester thereof, is added in the form of an extract from a natural source or obtained from such an extract. Preferably, the source of the extract is a plant or a plant part from an appropriate plant of the family of Fabaceae.

More preferably the plant is selected from the Genera cited in US 4,594,412 and/or *Abrus spec., Albizia spec., Ardisia spec., Astralagus spec., Crotalaria spec., Glycine spec., Glycyrrhiza spec., Gueldenstaedtia spec., Lathyrus spec., Lupinus spec., Medicago spec., Melilotus spec., Milettia spec., Phaseolus spec., Pisum spec., Pueraria spec., Robinia spec., Serjana spec., Sophora spec., Spartium spec., Trifolium spec., Vicia spec., Vigna spec., Wisteria spec.*; more preferable the plant is selected from the group consisting of *Medicago spec., Phaseolus spec.,* Pisum spec., Trifolium spec., *Vigna spec.*, and Vicia spec.; most preferable the Genus is *Glycine spec., Trifolium spec. and Vigna spec.*, in particular the Genus is Trifolium.

In another embodiment the species are selected from the group consisting of T. aitonii Rydb, T. amphianthum Torr. & A. Gray, T. andersonii A. Gray, T. andinum Nutt., T. anemophilum Greene, T. anoden Greene, T. arcuatum, T. arizonicum Greene, T. arvense L., T. attenuatum Greene, T. barbigerum Torr., T. beckwithii Brewer ex S. Watson, T. bicephalum Elmer, T. bifidum A. Gray, T. brandegei S. Watson, T. calocephalum Nutt., T. cassium Boiss., T. caurinum Piper, T. columbianum Greene, T. confusum Rydb., T. dasyphyllum Torr. & A. Gray, T. decodon Greene, T. dichroanthum Boiss., T. elmeri Greene, T. eriocephalum Nutt., T. filipes Greene, T. fragiferum L., T. fucatum Lindl., T. glomeratum, T. gracilentum Torr. & A. Gray, T. guianense Aubl., T. gymnocarpon Nutt., T. hanseni Greene, T. haydenii Porter, T. helleri P. B. Kenn., T. hervieri Freyn, T. heterodon, T. hexanthum Greene, T. hybridum L., T. inaequale Rydb., T. jokerstii Vincent & R. Morgan, T. lacerum Greene, T. laciniatum Greene, T. leibergii A. Nelson & J. F. Macbride, T. lemmonii S. Watson, T. lilacinum Rydb., T. lividum Rydb., T. longipes Nutt., T. macilentum Greene, T. montanense Rydb., T. multicaule M. E. Jones, T. multipedunculatum Kenn., T. nanum Torr., T. nemorale Greene, T. neurophyllum Greene, T. olivaceum Greene, T. oreganum Howell, T. owyheense Gilkey, T. oxyodon Greene ex Rydb., T. palmeri S. Watson, T. parryi A. Gray, T. pauciflorum Nutt., T. pedunculatum Rydb., T. petrophilum A. Heller, T. piliferum Boiss., T. pinetorum Greene, T. plumosum, T. ponticum Albov, T. pratense L., T. pseudoalbopurpureum P. B. Kenn., T. repens L., T. rivulare Boiss., T. rusbyi Greene, T. rydbergii Greene, T. salictorum Greene ex Rydb., T. saxicolum Small, T. scariosum A. Nelson, T. sclerorrhizon Boiss., T. shastense House, T. spinulosum, T. splendens A. Heller, T. stenolobum Rydb., T. stenophyllum Boiss., T. stoloniferum Muhl. ex A. A. Eaton, T. subcaulescens A. Gray, T. thompsonii Morton, T. trichocalyx A. Heller, T. tricuspidatum Bertero ex Steud., T. tridentatum Lindl., T. uintense Rydb., T. variegatum Nutt., T. villiferum House, T. virginicum Small, T. wormskjoldii Lehm. In particular the species is Trifolium repens.

Conventionally, the dried plant parts (for example fresh or dried roots, fruits, seeds, bark, wood, stalks, leaves or blossom [parts]), preferably in comminuted form, are extracted with a solvent suitable for foodstuffs and products consumed for pleasure at temperatures of from 0° C or from the melting point, respectively to the boiling point of the respective solvent or solvent mixture, then filtered and the filtrate is wholly or partially evaporated, preferably by distillation, freeze drying or spray drying. The resultant raw extract may then be further worked up, for example, treated with acid (for example under pressure), with acidic ion exchangers or with steam, generally at pressures of from 0.01 mbar to 100 bar, preferably at 1 mbar to 20 bar, and/or redissolved in a solvent suitable for foodstuffs and products consumed for pleasure.

Wherever "%" and percentages are used in the present text, these refer to the weight, i.e. % means % by weight; except where otherwise explicitly defined.

Wherever used in the invention "ppm" is defined as part per million by the weight portion of the part of interest of the total weight, e.g. ppm is meant as ppm by weight; except where otherwise explicitly defined.

"Obtainable" means that a product (e.g. extract or compound) may be obtained by the specified or other methods, preferably it is obtained by the specified method.

The term "salt(s)", as employed herein, denotes acidic and/or basic salts formed with inorganic and/or organic acids and bases. In addition, when a compound of the formula (I) contains both a basic moiety and an acidic moiety, "inner salts" may be formed and are included within the term "salt(s)" as used herein. Physiologically acceptable salts (i.e. also being pharmaceutically, nutritionally, nutraceutically and cosmetically acceptable) are preferred, although other salts may also be used, e.g., in isolation or purification steps which may be employed during preparation. Salts of compounds of the formula (I) may be formed, for example, by reacting a compound of the formula (I) with an amount of acid or base, such as an equivalent amount, in a medium such as one in which the salt precipitates or in an aqueous medium followed by lyophilization. Also ion exchangers can be used to form salts from free forms or free forms from salts of a compound of the formula (I). In case of more than one salt-forming group are present up to all of these may form salts even with different types of counterions. "Free form" refers to "form without salt-forming counterions", e.g. in non-salt form. Salts of compounds of the formula (I) may be formed in various stoichiometric proportions.

Non acidic compositions contain the one or more compounds according to formula (I) preferably as a salt, wherein the counterion is preferably selected from the group containing Na⁺, K⁺, NH₄⁺, Ca²⁺, Mg²⁺, Al³⁺ and Zn²⁺.

Where the compounds of the formula (I) are mentioned in the present disclosure, this also includes the corresponding (especially physiologically acceptable) salts thereof, also where not explicitly stated.

The compounds of the formula (I) which contain an acidic moiety (e.g. one or more carboxyl groups) may form salts with a variety of organic and inorganic bases. Exemplary basic salts include ammonium salts, non-toxic metal salts derived from metals of groups la, Ib, IIa and IIb of the Periodic Table of Elements, e.g. alkali metal salts such as sodium and potassium salts, alkaline earth metal salts such as calcium or magnesium salts, or salts with other metals, such as zinc, or salts with amino acids such as arginine, ornithine, homoarginine, lysine and the like. Also salts with salt-forming physiologically acceptable carriers are possible and encompassed by the invention.

Further, the compounds of the formula (I) may be in the form of their solvates, such as hydrates, of these derivatives.

"A compound of the formula (I)" or "compound(s) of the formula (I)" and the like also refers to one or more compounds of the formula (I), that is one compound or a mixture of compounds of the formula (I), or to the use of a compound of the formula (I), where reference to compound(s) of the formula (I) includes the compound(s) as such or in the form of a salt (especially a physiologically acceptable salt), a solvate and/or a tautomer thereof.

This means that either a single compound (preferably in substantially pure form or as a direct extract or a further enriched extract) or a mixture of two or more compounds of the formula (I) (mixtures being preferred, preferably in form of an extract) is used according to the present invention.

This also means that either a single compound (preferably in substantially pure form or as a direct extract or a further enriched extract) or a mixture of two or more compounds of the formula (I) (mixtures being preferred, preferably in form of an extract) is present in a composition according to the present invention (such as food, feed, beverage, oral composition, pharmaceutical, nutraceutical, cosmetic and the like).

"Substantially pure form" means that impurities are present only in small or in trace amounts, preferably less than 5 % by weight, more preferably less than 4 % by weight, less than 3 % by weight, less than 2 % by weight, less than 1 % by weight, less than 0.5 % by weight, or less than 0.2 % by weight.

The total amount of compounds of the formula (I) and physiologically acceptable salts thereof in a direct extract or a further enriched extract preferably is 5 wt.% or higher, more preferably is 10 wt.% or higher, more preferably is 20 wt.% or higher, based on the total weight of the dry mass of the extract.

Compounds of the formula (I) or mixtures of compounds or extracts containing compounds of the present invention and/or corresponding salts are useful for consumables, i.e. all goods that are used or intended to be used in the oral cavity or applied to the mucous skin of the oral cavity with our without swallowing, preferred of a mammal, especially in a human, and where the consumables contain one or more compounds in a sufficient concentration to exhibit an unpleasant taste, especially a bitter and/or astringent taste.

The present invention relates to a composition, preferably an orally consumable composition, comprising
(a) one or more compounds of formula (I) or one or more physiologically acceptable salts thereof, preferably in one of the above defined preferred or particularly preferred embodiments,
   and
(b) a substance or substance mixture of an unpleasant taste,
   wherein
   - the total amount of all ingredients (a) is sufficient for modulating or masking the unpleasant taste of the ingredients (b) compared to an identical composition without ingredients (a),
   - the total amount of all ingredients (b) is in the range of 0.0001 - 0.2 wt% (= 1 - 2000 ppm), based on the total weight of composition, and
   wherein preferably the total amount of all ingredients (a) is in the range of 0.0001 - 0.1 wt% (= 1 - 1000 ppm), based on the total weight of composition.

Preferably, a composition according to the present invention further comprises
- one or more carrier-substances selected from the group consisting of maltodextrin, gum arabic, silica, ethanol, isopropanol, 1,2-propylene glycol, glycerol, triacetin, and diacetin.

In a preferred composition according to the present invention ingredient (a) is or comprises a compound of formula (III) (as defined above), or a physiologically acceptable salt thereof, more preferably a compound of formula (III-a) 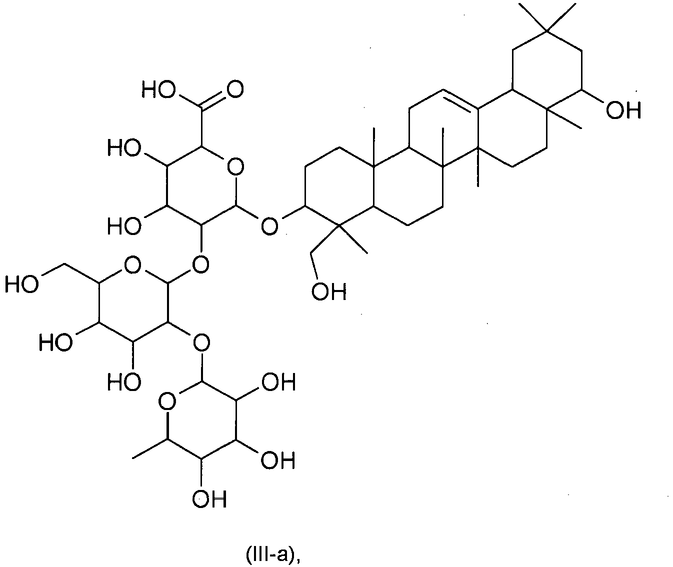 or a physiologically acceptable salt thereof, in an amount sufficient to modulate, reduce or suppress the unpleasant taste of the ingredients (b) compared to an identical composition without said compound of formula (III) or (III-a) or said physiologically acceptable salt thereof.

As already stated above, particularly preferred compounds of formula (III) in a preferred composition according to the present invention are soy saponin I [1], and azukisaponin V [2], and soy saponin II [3] and/or the physiologically acceptable salt thereof.

A preferred composition according to the present invention is a food composition, a feed composition, a nutritional supplement, a beverage, an oral care product, a cosmetic composition or a pharmaceutical composition.

In a preferred embodiment ingredient (b) of a composition according to the present invention is or comprises a compound selected from the group consisting of xanthine alkaloids, xanthines, alkaloids, phenolic glycosides, bitter-tasting flavonoid glycosides, bitter tasting chalcones or chalcone glycosides, hydrolyzable tannins, non-hydrolyzable tannins, and the oligomers thereof, herein in particular flavan-3-ols and catechins as defined above, bitter-tasting flavones, bitter-tasting phenols, bitter-tasting polyphenols, terpenoid bitter substances, bitter-tasting triterpene glycosides, metallic salts, bitter-tasting pharmaceutical active ingredients, vitamins, denatonium benzoate, urea, unsaturated fatty acids, bitter-tasting amino acids, bitter-tasting peptides and bitter-tasting artificial or naturally occurring sweeteners.

In a preferred embodiment ingredient (b) of a composition according to the present invention comprises or consists of one or more compounds selected from the group consisting of
caffeine, theobromine, theophylline and methylxanthines;
quinine, brucine, strychnine, nicotine;
salicin, arbutin;
neohesperidin, hesperidin, naringin, quercitrin, rutin, hyperosides, isoquercitrin, avicularin;
phloridzin, phloretin-2-O'-xyloglucoside;
gallic or ellagic acid esters of carbohydrates, preferably pentagalloylglucose;
catechins or epicatechins, galloylated catechins or galloylated epicatechins, gallocatechins or epigallocatechins, galloylated gallocatechins or galloylated epigallocatechins, theaflavins and/or galloylated theaflavins;
proanthyocyanidines or procyanidines, thearubigins;
quercetin, taxifolin, myricetin or their respective glycosides, preferably quercetrin, rutin, myricitrin;
salicin or arbutin;
hydroxycinnamic acids and the esters thereof, preferably γ-oryzanol, caffeic acid or the esters thereof, preferably chlorogenic acid, neochlorogenic acid, cryptochlorogenic acid;
limonoids, preferably limonin or nomilin from citrus fruits; lupolones and humulones from hops, iridoids, secoiridoids;
P57A and related active ingredients from Hoodia gordonii, absinthin from wormwood, amarogentin from gentian;
potassium, magnesium and calcium salts, potassium chloride, potassium gluconate, potassium carbonate, potassium sulfate, potassium lactate, potassium glutamate, potassium succinate, potassium malate, sodium sulfate, magnesium sulfate, iron salts, aluminum salts, zinc salts;
fluoroquinolone antibiotics, paracetamol, aspirin, β-lactam antibiotics, ambroxol, omeprazol, propylthiouracil PROP, guaifenesin;
vitamin H, B-series vitamins, preferably vitamin B1, B2, B6, B12, niacin, pantothenic acid;
unsaturated fatty acids;
leucine, isoleucine, valine, tryptophan, proline, histidine, tyrosine, lysine, phenylalanine;
peptides with an amino acid from the group comprising leucine, isoleucine, valine, tryptophan, proline or phenylalanine at the N or C terminus;
aspartame, neotame, superaspartame, advantame, saccharin, sucralose, cyclamate, acesulfam K, tagatose, monellin, stevioside, rebaudioside A, rebaudioside C, rebaudioside D, rubusosid, phyllodulcin, hernandulcin, thaumatin, brazzein, miraculin, glycyrrhizin, glycyrrhetinic acid or derivatives thereof;
and the physiologically acceptable salts thereof.

In a preferred embodiment a composition according to the present invention, preferably in one of the preferred or particularly preferred embodiments, is an orally consumable composition comprising water in an amount of 85 wt.% or more, preferably 90 wt.% or more, more preferably 95 wt.% or more, based on the total amount of the orally consumable composition.

In a preferred embodiment in a composition according to the present invention, preferably in one of the preferred or particularly preferred embodiments,
- the total amount of all ingredients (b) is in the range of 0.005 - 0.2 wt% (= 5 - 2000 ppm), preferably in the range of 0.01 - 0.175 wt.% (= 100 - 1750 ppm), more preferably in the range of 0.02 - 0.15 wt.% (= 200 - 1500 ppm), based on the total weight of composition,
   and/or
- the total amount of all ingredients (a) is in the range of 0.0005 - 0.05 wt% (= 5 - 500 ppm), preferably in the range of 0.001 - 0.03 wt.% (= 10 - 300 ppm), more preferably in the range of 0.001 - 0.02 wt.% (= 10 - 200 ppm), most preferably in the range of 0.0015 - 0.0125 wt.% (= 15 - 125 ppm), based on the total weight of composition.

In a preferred embodiment a composition according to the present invention, preferably in one of the preferred or particularly preferred embodiments, further comprises one or more substances suitable for enhancing the taste impression umami, sweet, salty, spicy, and/or sour.

In a preferred embodiment a composition according to the present invention, preferably in one of the preferred or particularly preferred embodiments, further comprises at least one further substance for modulating or masking an unpleasant taste of an unpleasant substance or substance mixture, preferably in an amount sufficient for modulating or masking an unpleasant taste of an unpleasant substance or substance mixture,
wherein preferably the further substance or the further substances are selected from the group consisting of phloretin, homoeriodictyol, eriodictyol, hesperetin, gamma-aminobutyric acid, pellitorine and its isomers, spilanthol, 3',7-dihdroxy-4'-methoxyflavan according to EP 2 253 226 A1, phyllodulcin according to EP 2 298 084 A1, rubusoside (preferably rubusoside extracts as described in European patent application 11 165 566.8), and vanillyllignans (preferably those described in European patent application 11 164 373.0).

In a preferred embodiment, a composition according to the present invention, preferably according to a preferred or particularly preferred embodiment as defined above, has a flavour of berries, citrus fruits, pomaceous fruit, spices, herbs, teas and/or mints, preferably selected from the group consisting of peppermint, spearmint, wintergreen, pineapple, acerola, acai, apple, apricot, banana, pear, pomegranate, blackberry, lemon, lime, grapefruit, pomelo, sweet orange, bitter orange, bergamot, mandarin, guava, rose hip, blueberry, raspberry, lingonberry, bayberry, strawberry, elderberry, gooseberry, red currant, black currant, sweet cherry, cherry, kiwi, lychee, mango, melon, plum, papaya, passion fruit, peach, prune, grape, tamarind, cinnamon, nutmeg, vanilla, green tea, black tea, red tea, yellow tea, white tea, oolong tea, rooibos tea, honeybush tea, mate tea, and mixtures thereof.

An orally consumable composition according to the present invention in the form of a finished product is suitable and intended for direct oral consumption, preferably by a human being.

Finished products are compositions which comprise at least one bitter and/or one astringent-tasting substance, the amount of the bitter and/or of the astringent-tasting substance being sufficient to be perceived as an unpleasant taste in a comparison preparation not containing a compound of formula (I) or a physiologically acceptable salt thereof but otherwise identically composed, and the amount of compounds of formula (I) or the amount of physiologically acceptable salts thereof in the composition being sufficient to modify or mask the unpleasant taste impression of the bitter and/or the astringent-tasting substance in comparison with the comparison preparation. When used according to the invention, it may be advantageous for not all the bitter-tasting nuances (the same also applies optionally to the astringent effect) to be masked, since these may also be desirable to a limited extent under certain circumstances.

The present invention also relates to a semifinished product suitable for the production of a composition according to the present invention, preferably of a composition in one of the preferred or particularly preferred embodiments, comprising
- one or more compounds of formula (I), preferably one or more compounds of formula (III), as defined above, in particular soy saponin I [1], and azukisaponin V [2], and soy saponin II [3], and/or one or more physiologically acceptable salts thereof, and
- one or more carriers selected from the group consisting of maltodextrin, gum arabic, silica, ethanol, isopropanol, 1,2-propylene glycol, glycerol, triacetin, and diacetin.

A semifinished product according to the present invention may be in the form of an odouriferous, aroma or flavouring substance composition or a seasoning mixture comprising one or more compounds of formula (I) and at least one, preferably two, three, four, five or more natural or non-natural flavour compounds, preferably at least one, preferably two, three, four, five or more flavour compounds according to the Leffingwell Flavor Base 2010. Natural flavour compounds can be single aroma chemicals prepared by natural methods, or aroma chemical mixtures, extracts, distillates or isolates from naturally occurring or fermented or cooked food or flavouring materials, especially plants, animals, bacteria and fungi allowed commonly as food or flavouring material. In a preferred embodiment these semifinished products can also contain bitter or astringent compounds according to the invention in amount sufficient to elicit an unpleasant, preferred a bitter and/or astringent taste in the final consumable prepared by using the semifinished product.

In a preferred embodiment, the invention relates to a semifinished product, wherein said semifinished product is a flavour composition, additionally comprising at least one, preferably two, three, four, five, six, seven, eight, nine, ten, or more aroma substances, preferably selected from the group of aroma substances consisting of groups (c-1) and/or (c-2)
(c-1) acetophenone, allyl capronate, alpha-ionone, anisaldehyde, anisyl acetate, anisyl formiate, benzaldehyde, benzothiazole, benzyl acetate, benzyl alcohol, benzyl benzoate, butyl butyrate, butyl capronate, butylidenphthalide, carvone, camphene, caryophyllene, cineole, cinnamyl acetate, citral, citronellol, citronellal, citronellyl acetate, cyclohexyl acetate, cymol, damascone, decalactone, dihydrocoumarin, dimethyl anthranilate, diethyl anthranilate, dodecalactone, ethoxyethyl acetate, ethylbutyric acid, ethyl butyrate, ethyl caprinate, ethyl capronate, ethyl crotonate, ethyl furaneol, ethyl guaiacol, ethyl isobutyrate, ethyl isovalerianate, ethyl lactate, ethylmethyl butyrate, ethyl propionate, eucalyptol, eugenol, ethyl heptylate, 4-(p-hydroxyphenyl)-2-butanone, gamma-decalactone, geraniol, geranyl acetate, grapefruit aldehyde, heliotropine (= piperonal), 2-heptanone, 3-heptanone, 4-heptanone, trans-2-heptenal, cis-4-heptenal, trans-2-hexenal, cis-3-hexenol, trans-2-hexenoic acid, trans-3-hexenoic acid, cis-2-hexenyl acetate, cis-3-hexenyl acetate, cis-3-hexenyl capronate, trans-2-hexenyl capronate, cis-3-hexenyl formiate, cis-2-hexyl acetate, cis-3-hexyl acetate, trans-2-hexyl acetate, cis-3-hexyl formiate, p-hydroxybenzyl acetone, isoamylalcohol, isoamyl isovalerianate, isobutyl butyrate, isobutyraldehyde, isoeugenol methyl ether, 2-isopropyl-4-methyl thiazole, lauric acid, levulinic acid, limonene, linalool, linalool oxide, linalyl acetate, menthol, menthofurane, methyl anthranilate, methylbutanol, methylbutyric acid, 2-methylbutyl acetate, methyl capronate, methyl cinnamate, 5-methyl furfural, 3,2,2-methyl cyclopentenolone, 6-methyl-5-hepten-2-on, methyl dihydrojasmonate, methyl jasmonate, 2-methyl ethyl butyrate, 2-methyl-2-pentenoic acid, S-(methylthio)butyrate, 3-(methylthio)-1-hexanol, 3-(methylthio)hexyl acetate, nerol, neryl acetate, 2,4-nonadienol, 2,6-nonadienol, nootkatone, delta-octalactone, gamma-octalactone, 2-octanol, 3-octanol, 1-octen-3-ol, 3-octen-1-ol, 1-octyl acetate, 3-octyl acetate, palmitinic acid, paraldehyde, phellandrene, pentandione, phenylethyl acetate, phenylethyl alcohol, phenylethyl isovalerianate, propionaldehyde, propyl butyrate, pulegone, pulegol, sinensal, sulfurol, terpinene, terpineol, terpinolene, 8-thiomenthone, 4,4,2-thiomethyl pentanone, thymol, delta-undecalactone, gamma-undecalactone, valencene, valeric acid, bis(2-methyl-3-furyl) disulfide, furfuryl mercaptan, 2-acetyl-2-thiazoline, 3-mercapto-2-pentanone, 2,5-dimethyl-3-furan thiol, 2,4,5-trimethylthiazole, 2-acetylthiazol, 2,4-dimethyl-5-ethylthiazol, 2-acetyl-1-pyrroline, 2-methyl-3-ethylpyrazine, 2-ethyl-3,5-dimethylpyrazine, 2-ethyl-3,6-dimethylpyrazine, 2,3-diethyl-5-methylpyrazine, 3-isopropyl-2-methoxypyrazine, 3-isobutyl-2-methoxypyrazine, 2-acetylpyrazine, 2-pentylpyridine, (E,E)-2,4-decadienal, (E,E)-2,4-nonadienal, (E)-2-octenal, (E)-2-nonenal, 2-undecenal, 12-methyltridecanal, 1-penten-3-one, cinnamic aldehyde, cinnamic alcohol, methyl salicylate, and isopulegol, and all stereoisomers (in particular diastereomers and enantiomers, including the enantiomeric pure compounds as well as the respective racemates) and cis/trans-isomers of the these substances,
(c-2) vanillin, ethyl vanillin, ethyl vanillin isobutyrate (=3-ethoxy-4-isobutyryloxybenzaldehyde), 2,5-dimethyl-4-hydroxy-3(2H)-furanone and its derivatives (preferably homofuraneol, 2-ethyl-4-hydroxy-5-methyl-3(2H)furanone), homofuronol (2-ethyl-5-methyl-4-hydroxy-3(2H)-furanone and 5-ethyl-2-methyl-4-hydroxy-3(2H)-furanone), maltol and its derivatives (preferably ethylmaltol), coumarin and its derivatives, gamma-lactones (preferably gamma-undecalactone, gamma-nonalactone), delta-lactones (preferably 4-methyl delta-lactone, massoilactone, delta-decalactone, tuberolactone), methyl sorbate, diacetyl, divanillin, 4-hydroxy-2(or 5)-ethyl-5(or 2)-methyl-3(2H)-furanone, 2-hydroxy-3-methyl-2-cyclopentenone, 3-hydroxy-4,5-dimethyl-2(5H)-furanone, 4-(p-hydroxyphenyl)-2-butanone, 1,1-dimethoxy-2,2,5-trimethyl-4-hexane, 2,6-dimethyl-5-hepten-1-al, phenylacetaldehyde, and fruit esters (preferably acetic acid n-butyl ester, acetic acid isoamyl ester, propionic acid ethyl ester, butyric acid ethyl ester, butyric acid n-butyl ester, butyric acid isoamyl ester, 3-methylbutyric acid ethyl ester, theaspirane, beta-ionone, damascenone, n-ethyl hexanoate, n-allyl hexanoate, n-hexanoic acid n-butyl ester, n-octanoic acid ethyl ester, ethyl-3-methyl-3-phenyl glycidate, ethyl-2-trans-4-cis-decadienoate), and all stereoisomers (in particular diastereomers and enantiomers, including the enantiomeric pure compounds as well as the respective racemates) and cis/trans-isomers of the these substances,
   and optionally one or more further substances selected from ingredient (d)
(d) substances for modulating, reducing or suppressing an unpleasant taste of an unpleasant substance or substance mixture, preferably in an amount sufficient to modulate, reduce or suppress an unpleasant taste of an unpleasant substance or substance mixture, wherein preferably the further substance or the further substances of group (d) are selected from the group consisting of phloretin, homoeriodictyol, eriodictyol, hesperetin, gamma-aminobutyric acid, pellitorine and its isomers, spilanthol, 3',7-dihdroxy-4'-methoxyflavan, phyllodulcin, rubusoside, and vanillyllignans.

In a preferred embodiment, the invention relates to a semifinished product, wherein the total amount of all ingredients (a) (i.e. the compounds of formula (I), preferably of formula (III) as defined above, and/or the physiologically acceptable salts thereof) is in the range of 0.1 - 50 wt%, preferably in the range of 0.25 - 25 wt.%, more preferably in the range of 0.5 - 10 wt.%, based on the total weight of semifinished product.

In a preferred embodiment, a semifinished product according to the present invention, preferably according to a preferred or particularly preferred embodiment as defined above, has a flavour of berries, citrus fruits, pomaceous fruit, spices, herbs, teas and/or mints, preferably selected from the group consisting of peppermint, spearmint, wintergreen, pineapple, acerola, acai, apple, apricot, banana, pear, pomegranate, blackberry, lemon, lime, grapefruit, pomelo, sweet orange, bitter orange, bergamot, mandarin, guava, rose hip, blueberry, raspberry, lingonberry, bayberry, strawberry, gooseberry, elderberry, red currant, black currant, sweet cherry, cherry, kiwi, lychee, mango, melon, plum, papaya, passion fruit, peach, prune, grape, tamarind, cinnamon, nutmeg, vanilla, green tea, black tea, red tea, yellow tea, white tea, oolong tea, rooibos tea, honeybush tea, mate tea, and mixtures thereof.

Semifinished products according to the present invention may serve to modify or to mask unpleasant taste impressions of a finished product intended for direct oral consumption which is produced using said semifinished product, said finished product intended for direct oral consumption preferably is an orally consumable composition according to the present invention.

A composition, preferably an orally consumable composition in the form of a finished product, according to the present invention preferably includes a finished product according to the present invention, preferably in an amount of 0.001 % to 25 wt.%, more preferably in an amount of 0.01 % to 10 wt.%, particularly preferably in an amount of 0.01 % to 2.5 wt.%, based on the total weight of the composition.

For the purpose of the present invention, said consumables are used in nutrition e.g. human food and/or animal feed; food additives, including flavours and fragrances, colour additives, and/or preservatives; dietary supplements; cosmetics; oral and/or oral care compositions e.g. toothpastes, tooth gels, tooth powders, mouthwashes, chewing gum; and pharmaceutical compositions. Said consumables are for human and/or animal consumption, preferably for consumption by human beings, irrespective of their age, i.e. including babies, children, adults and/or elderly persons. The consumers may be in a healthy state and/or in state of illness, preferably in a healthy state.

"Food" in the present text means a raw, cooked, or processed edible substance, ice, beverage, or ingredient used or intended for use or for sale in whole or in part for human consumption, or chewing gum. Additionally "food" encompasses also articles and substances of no nutritional value which are used for human consumption as well as substances which are intentionally incorporated into the food during its manufacture, preparation or treatment. "Food" even more encompasses also articles which are swallowed together with nutrition e.g. casings, coatings or other encapsulations, or which are conventionally removed again from the oral cavity nevertheless might be swallowed such as chewing gums.

A composition according to the present invention, in a more specific embodiment, may also be a precursor of a beverage, especially a concentrate, a syrup or a powder.

In more detail, "food" relates to a composition serving for nutrition or pleasure for the purposes of the invention are for example bakery products (for example bread, dry biscuits, cakes, other pastry products), confectionery (for example chocolates, chocolate bar products, other bar products, fruit gums, hard and soft caramels, chewing gum), alcoholic or non-alcoholic beverages (for example coffee, tea, wine, beverages containing wine, beer, beverages containing beer, liqueurs, spirits, brandies, fruit-containing carbonated beverages, isotonic beverages, soft drinks, nectars, fruit and vegetable juices, fruit or vegetable juice preparations), instant beverages (for example instant cocoa beverages, instant tea beverages, instant coffee beverages, instant fruit beverages), meat products (for example ham, fresh or cured sausage preparations, spiced or marinated fresh or cured meat products), eggs or egg products (dried egg, egg white, egg yolk), cereal products (for example breakfast cereals, muesli bars, precooked ready rice products), dairy products (for example milk beverages, buttermilk beverages, milk ice cream, yogurt, kefir, curd cheese, soft cheese, hard cheese, dried milk powder, whey, butter, buttermilk, partially or fully hydrolyzed milk protein-containing products), products made from soy protein or other soybean fractions (for example soy milk and products made therefrom, fruit beverages with soy protein, soy lecithin-containing preparations, fermented products such as tofu or tempe or products made therefrom), fruit preparations (for example jams, fruit ice cream, fruit sauces, fruit fillings), vegetable preparations (for example ketchup, sauces, dried vegetables, deep-frozen vegetables, precooked vegetables, preserved vegetables), snack articles (for example baked or fried potato chips or potato dough products, maize- or peanut-based extrudates), fat- or oil-based products or emulsions thereof (for example mayonnaise, remoulade, dressings, other ready-to-serve meals and soups (for example dried soups, instant soups, precooked soups), spices, seasoning mixtures and in particular powdered seasonings, which are for example used in snack food applications.

The compositions for the purpose of the invention may also be used as semifinished products for the production of further preparations serving for nutrition or for pleasure. The compositions for the purpose of the invention may also be nutritional supplements in the form of capsules, tablets (uncoated and coated tablets, for example coatings resistant to gastric juices), sugar-coated tablets, granules, pellets, mixtures of solids, dispersions in liquid phases, as emulsions, as powders, as solutions, as pastes or as other swallowable or chewable preparations.

The term "beverage" refers to a liquid product for drinking, usually including water, which may be consumed to quench thirst, to provide nutrition, for pleasure or relish purposes and/or for other functional purposes (e.g. to administer medicines or other functional materials).

Among the liquids for human or animal consumption those can be mentioned which are labelled as juice, drink (including soft drink, such as lemonade), non-alcoholic or alcoholic beverage, carbonated or non carbonated beverage, cocktail, including non-dairy milks, and the like.

Preferably, a composition and/or a semifinished product according to the present invention is free of phosphatidylcholine.

Preferably, a composition and/or a semifinished product according to the present invention is free of oxidized phosphatidylcholine.

Preferably, a composition and/or a semifinished product according to the present invention does not comprise soy proteins.

A composition and/or a semifinished product according to the present invention preferably is free of oxidized phosphatidylcholine and free of soy proteins.

Preferably, a composition and/or a semifinished product according to the present invention is free of casein.

A composition and/or a semifinished product according to the present invention preferably is free of choline chloride.

Preferably, a composition and/or a semifinished product according to the present invention does not comprise unsaturated fatty acids.

A composition and/or a semifinished product according to the present invention preferably is free of oxidized phosphatidylcholine, free of soy proteins, free of choline chloride and free of casein.

Preferably, the total amount of fats in a composition and/or in a semifinished product according to the present invention does not exceed 2.2 wt.%, based on the total weight of the composition or the semifinished product.

Preferably, the total amount of fatty acid triglycerides with fatty acids having six or more carbon atoms in a composition and/or in a semifinished product according to the present invention does not exceed 2.0 wt.%, based on the total weight of the composition or the semifinished product.

Preferably, the total amount of proteins in a composition and/or in a semifinished product according to the present invention does not exceed 4 wt.%, preferably does not exceed 3 wt.%, based on the total weight of the composition or the semifinished product.

In a preferred embodiment, a composition according to the present invention comprises less than 2 wt.% of proteins and less than 2 wt.% of fatty acid triglycerides with fatty acids having six or more carbon atoms, based on the total weight of the composition.

Many substances with bitter and/or astringent taste are significantly stronger and faster perceived from a liquid composition in comparison to a semisolid or solid composition containing the same amount of the same bitter and/or astringent tasting substances. Flavourings (including bitter and/or astringent tasting substances) are released from a liquid composition very early, that is to say essentially immediately upon consumption, in their full strength, and therefore are perceived comparatively as much stronger. This is in particular the case if the semisolid or solid composition contains a higher amount of proteins and/or fats or fatty oils. This is believed to be due to matrix effects.

In a preferred embodiment, a composition and/or a semifinished product according to the present invention is a liquid.

A preferred composition and/or a semifinished product according to the present invention at 25°C and 1013 mbar has a dynamic viscosity of less than 100 mPas, preferably of less than 75 mPas, more preferably of less than 50 mPas, most preferably of less than 25 mPas.

Since such liquids generally are liquids with newtonian flow behaviour, viscosity is independent of the shear rate.

The dynamic viscosity is preferably measured with a plate viscosimeter, preferably according to DIN 53018, e.g. measured with a Brookfield^{®} viscometer.

In another preferred embodiment, a composition and/or a semifinished product according to the present invention is not an oil-in-water emulsion.

In another preferred embodiment, a composition and/or a semifinished product according to the present invention is not a milk or milk product.

In another preferred embodiment, a composition and/or a semifinished product according to the present invention is not a soy milk product, preferably not a soybean product.

In another preferred embodiment, a composition and/or a semifinished product according to the present invention is free of soybeans, soy milk, soy yoghurt, tofu and tempeh.

In another preferred embodiment a composition and/or a semifinished product according to the present invention is free two, three, four, five, six, seven, eight or more, or preferably free of all of the following components: phosphatidylcholine, oxidized phosphatidylcholine, soy proteins, casein, choline chloride, unsaturated fatty acids, soybeans, soy milk, soy yoghurt, tofu and tempeh, and is preferably not an oil-in-water emulsion, not a milk and not a milk product.

Preferably, a composition and/or a semifinished according to the present invention, in particular a composition according to the present invention, has a very low turbidity. The turbidity is generally measured in nephelometric turbidity units (NTU).

Preferably, a composition and/or a semifinished product according to the present invention is transparent.

Preferably, a composition and/or a semifinished according to the present invention, in particular a composition according to the present invention, has a turbidity of less than 10 NTU (nephelometric turbidity units) as determined according to DIN ISO EN 27027.

More preferably, a composition and/or a semifinished according to the present invention, in particular a composition according to the present invention, has a turbidity of less than 5 NTU (nephelometric turbidity units), more preferably of less than 3 NTU, as determined according to DIN ISO EN 27027.

The turbidity is determined in accordance with DIN ISO EN 27027 using scattered light at an angle of 90°. In our own experiments, a LED with 860 nm infrared light was used.

The measurements of turbidity may for example be carried out using a laboratory turbidimeter e.g. such as the Hach 2100N IS or NEPHLA turbidimeter from Hach Lange GmbH (Germany).

Preferably, a composition according to the present invention is a beverage, preferably a transparent beverage (preferably with a turbidity of less than 10 NTU, more preferably with a turbidity of less than 5 NTU as defined above), comprising
- water in an amount of 90 wt.% or more, more preferably 95 wt.% or more,
- one or more sweet tasting substances, preferably selected from the group consisting of the substances of groups (s-1), (s-2) and (s-3)
   (s-1) sweet tasting carbohydrates, preferably sucrose, maltose, fructose, glucose,
   (s-2) sugar alcohols, preferably sorbitol, xylitol and/or mannitol,
   (s-3) sweeteners, preferably aspartame, neotame, saccharin, sucralose, cyclamate, acesulfam K, stevioside, rebaudioside A, rubusoside, phyllodulcin, glycyrrhizin, glycyrrhetinic acid, and the physiologically acceptable salts thereof,
- one or more compounds of formula (I), preferably of formula (III), or a physiologically acceptable salt thereof, preferably in a total amount of 0.0005 - 0.05 wt%, and
- one or more substances with a bitter and/or astringent taste in a total amount of 0.005 - 0.2 wt.% (= 50 - 2000 ppm), preferably in the range of 0.01 - 0.15 wt.% (= 100 - 1500 ppm),
in each case based on the total amount of the beverage.

Preferably, a composition according to the present invention is an orally consumable composition comprising
- water in an amount of 90 wt.% or more, more preferably 95 wt.% or more,
- less than 2 wt.% of proteins,
- less than 2 wt.% of fatty acid triglycerides with fatty acids having six or more carbon atoms, based on the total weight of the composition,
- one or more sweet tasting substances, preferably selected from the groups (s-1), (s-2) and/or (s-3) as defined above,
- compounds of formula (I), preferably of formula (III), or a physiologically acceptable salt thereof, in a total amount of 0.00025 - 0.05 wt% (= 2.5 - 500 ppm), preferably in the range of 0.005 - 0.03 wt.% (= 5 - 300 ppm), more preferably in the range of 0.001 - 0.02 wt.% (= 10 - 200 ppm), most preferably in the range of 0.0015 - 0.0125 wt.% (= 15 - 125 ppm), and
- one or more flavan-3-ols, preferably in a total amount of 0.005 - 0.175 wt.% (= 50 - 1750 ppm), preferably in the range of 0.01 - 0.15 wt.% (= 100 - 1500 ppm),
   in each case based on the total amount of the orally consumable composition,
   and preferably is free of soy proteins and free of casein.

Preferably, a composition according to the present invention is a liquid and transparent orally consumable composition (preferably with a turbidity of less than 10 NTU, more preferably with a turbidity of less than 5 NTU, as defined above), comprising
- water in an amount of 90 wt.% or more, more preferably 95 wt.% or more,
- less than 0.5 wt.% of proteins,
- less than 1 wt.% of fatty acid triglycerides with fatty acids having six or more carbon atoms, based on the total weight of the composition,
- one or more sweet tasting substances, preferably selected from the groups (s-1), (s-2) and/or (s-3) as defined above,
- compounds of formula (I), preferably of formula (III), or a physiologically acceptable salt thereof, in a total amount of 0.00025 - 0.05 wt% (= 2.5 - 500 ppm), preferably in the range of 0.005 - 0.03 wt.% (= 5 - 300 ppm), more preferably in the range of 0.001 - 0.02 wt.% (= 10 - 200 ppm), most preferably in the range of 0.0015 - 0.0125 wt.% (= 15 - 125 ppm), and
- one or more flavan-3-ols, preferably in a total amount of 0.005 - 0.175 wt.% (= 50 - 1750 ppm), preferably in the range of 0.01 - 0.15 wt.% (= 100 - 1500 ppm),
in each case based on the total amount of the orally consumable composition,
and is free of oxidized phosphatidylcholine, free of soy proteins, free of choline chloride and free of casein.

"Juice" refers to the aqueous liquid expressed or extracted from one or more fruits or vegetables, purées of the edible portions of one or more fruits or vegetables, or any concentrates of such liquid or purée.

The compound or compounds of the formula (I) may also be used in precursor products of beverages, e.g. concentrates, syrups and/or powders will reconstitute to a beverage in the sense of the invention by the addition of water.

Beverages may include water, flavoured water, fortified waters, flavoured beverages, carbonated water, e.g. flavoured seltzer or soda waters, juices, cola, lemon-lime, ginger ale, and root beer beverages which are carbonated in the manner of soft drinks, as well as beverages that provide health or wellness benefits from the presence of metabolically active substances, such as vitamins, amino acids, proteins, carbohydrates, lipids, or polymers thereof, where such products may also be formulated to contain milk, coffee, or tea (e.g. green tea) or other botanical solids, syrup, diet beverages, carbonated soft drinks, fruit juices, e.g. orange juice, grapefruit juice, apple juice, red grape juice, white grape juice, pear juice, concord grape juice, pineapple juice, pomegranate juice, cranberry juice, passion fruit juice, lime juice, lemon juice, mango juice, guava juice, banana juice, red currant juice, black currant juice, cashew apple juice, cantaloupe melon juice, apricot juice, blackberry juice, lingonberry juice, dewberry juice, gooseberry juice, crabapple juice, prune juice, plum juice, kiwi juice, strawberry juice, blueberry juice, red raspberry juice, black raspberry juice, cherry juice, watermelon juice, peach juice, nectarine juice, loganberry juice, honeydew melon juice, papaya juice, boysenberry juice, youngberry juice, rhubarb juice, guanabana juice, acai juice, goji juice, fig juice, elderberry juice, date juice, carambola juice, acerola juice, quince juice, bilberry juice, tangerine juice, fruit containing beverages, e.g. fruit drinks which provide the flavour of any of the e.g. aforementioned fruit juices and contain more than 0% fruit juice but less than 100% fruit juice fruit flavoured beverages, vegetable juices, e.g. tomato juice, beet juice, carrot juice, celery juice, vegetable containing beverages, which provide the flavour of any of the aforementioned vegetable juices and contain more than 0% vegetable juice but less than 100% vegetable juice, isotonic beverages, non-isotonic beverages, soft drinks containing a fruit juice, coffee, tea, tea beverages prepared from tea concentrate. extracts, or powders, drinkable dairy products, e.g. drinkable yogurts (drink yoghurt), kefir or buttermilk, hot chocolate, chocolate powders/mixes, drinkable soy products, non-diary milks, e.g. coconut milk, alcoholic beverages, e.g. malt beverages, wine, beer, distilled liquors, spirits, sparkling wine, champagne or liqueurs, fruit smoothies, horchata (vegetable and/or rice components made into a beverage), sport drinks, energy drinks, health drinks, shakes, protein drinks (e.g. dairy, soy, rice or other), drinkable soy yogurts, low acid beverages as defined in US 21 C.F.R. Part 113, acidified beverages as defined in US 21 C.F.R. Part 114, nectars, tonics, frozen carbonated beverages, frozen uncarbonated beverages, liquid meal replacements, infant formulations, and combinations or mixtures thereof.

The term "infant formula" means a food which purports to be or is represented for special dietary use solely as a food for infants by reason of its simulation of human milk or its suitability as a complete or partial substitute for human milk.

Preferably, a beverage comprises at least 85 wt.% of water, more preferably at least 90 wt.% and most preferably from 95 to 99.9 wt.%, based on the total weight of the beverage.

The term "food additive" means any substance the intended use of which results or may reasonably be expected to result, directly or indirectly, in its becoming a component or otherwise affecting the characteristics of any food (including any substance intended for use in producing, manufacturing, packing, processing, preparing, treating, packaging, transporting, or holding food; and including any source of radiation intended for any such use).

A composition according to the present invention generally comprises one or more additives, preferably one or more food additives and/or one or more cosmetic additives.

For the purpose of the present invention the following food additives are or particular relevance: "sweeteners" are substances used to impart a sweet taste to foods (this term in the present paragraph also including beverages) or in table-top sweeteners; "antioxidants" are substances that hinder the oxidation of components, e.g. avoiding that the material becomes rancid; "colours" are substances which add or restore colour in a food, and include natural constituents of foods and natural sources which are normally not consumed as foods as such and not normally used as characteristic ingredients of food. Preparations obtained from foods and other edible natural source materials obtained by physical and/or chemical extraction resulting in a selective extraction of the pigments relative to the nutritive or aromatic constituents are colours within the meaning of this text; "preservatives" are substances which prolong the shelf-life of foods by protecting them against deterioration caused by micro-organisms and/or which protect against growth of pathogenic micro-organisms; "antioxidants" are substances which prolong the shelf-life of foods by protecting them against deterioration caused by oxidation, such as fat rancidity and colour changes; "carriers" are substances used to dissolve, dilute, disperse or otherwise physically modify a food additive or a flavouring, food enzyme, nutrient and/or other substance added for nutritional or physiological purposes to a food without altering its function (and without exerting any technological effect themselves) in order to facilitate its handling, application or use; "acids" are substances which increase the acidity of a foodstuff and/or impart a sour taste to it; "acidity regulators" are substances which alter or control the acidity or alkalinity of a foodstuff; "anti-caking agents" are substances which reduce the tendency of individual particles of a foodstuff to adhere to one another; "anti-foaming agents" are substances which prevent or reduce foaming; "bulking agents" are substances which contribute to the volume of a foodstuff without contributing significantly to its available energy value; "emulsifiers" are substances which make it possible to form or maintain a homogenous mixture of two or more immiscible phases such as oil and water in a foodstuff; "emulsifying salts" are substances which convert proteins contained in cheese into a dispersed form and thereby bring about homogenous distribution of fat and other components; "firming agents" are substances which make or keep tissues of fruit or vegetables firm or crisp, or interact with gelling agents to produce or strengthen a gel; "flavour enhancers" are substances which enhance the existing taste and/or odour of a foodstuff; "foaming agents" are substances which make it possible to form a homogenous dispersion of a gaseous phase in a liquid or solid foodstuff; "gelling agents" are substances which give a foodstuff texture through formation of a gel; "glazing agents" (including lubricants) are substances which, when applied to the external surface of a foodstuff, impart a shiny appearance or provide a protective coating; "humectants" are substances which prevent foods from drying out by counteracting the effect of an atmosphere having a low degree of humidity, or promote the dissolution of a powder in an aqueous medium; "modified starches" are substances obtained by one or more chemical treatments of edible starches, which may have undergone a physical or enzymatic treatment, and may be acid or alkali thinned or bleached; "packaging gases" are gases other than air, introduced into a container before, during or after the placing of a foodstuff in that container; "propellants" are gases other than air which expel a foodstuff from a container; "raising agents" are substances or combinations of substances which liberate gas and thereby increase the volume of a dough or a batter; "sequestrants" are substances which form chemical complexes with metallic ions; "stabilisers" are substances which make it possible to maintain the physicochemical state of a foodstuff; stabilisers include substances which enable the maintenance of a homogenous dispersion of two or more immiscible substances in a foodstuff, substances which stabilise, retain or intensify an existing colour of a foodstuff and substances which increase the binding capacity of the food, including the formation of cross-links between proteins enabling the binding of food pieces into re-constituted food; "thickeners" are substances which increase the viscosity of a foodstuff; "flour treatment agents" are substances, other than emulsifiers, which are added to flour or dough to improve its baking quality.

Among the cosmetic additives, the following, without limiting the scope of possible additives, may be mentioned: "abrasives" are substances which remove materials from various body surfaces or aids mechanical tooth cleaning or improves gloss, "absorbents" are substances which take up water-and/or oil-soluble dissolved or finely dispersed substances, "anti-cakings" are substances which allow free flow of solid particles and thus avoids agglomeration of powdered cosmetics into lumps or hard masses, "anti-corrosives" are substances which prevent corrosion of the packaging, "anti-dandruffs" are substances which help to control dandruff, "anti-foaming" are substances which suppress foam during manufacturing or reduce the tendency of finished products to generate foam, "anti-microbials" are substances which help to control the growth of micro-organisms on the skin, "anti-oxidants" are substances which inhibit reactions promoted by oxygen, thus avoiding oxidation and rancidity, "antiperspirants" are substances which reduce perspiration, "anti-plaques" are substances which help to protect against plaque, "anti-seborrhoeics" are substances which help to control sebum production, "anti-statics" are substances which reduce static electricity by neutralising electrical charge on a surface, "astringents" are substances which contract the skin, "bindings" are substances which provide cohesion in cosmetics, "bleachings" are substances which lightens the shade of hair or skin, "bufferings" are substances which stabilise the pH of cosmetics, "bulkings" are substances which reduce bulk density of cosmetics, "chelatings" are substances which react and form complexes with metal ions which could affect the stability and/or appearance of cosmetics, "cleansings" are substances which help to keep the body surface clean, "cosmetic colourants" are substances which colour cosmetics and/or imparts colour to the skin and/or its appendages (e.g. hair or nails) (e.g. dyes or pigments, e.g. lactoflavin, caramel capsanthin, capsorubin, beetroot red, anthocyanins, bromothymol blue, bromocresol green, acid red, aluminum, magnesium, calcium and zinc stearates); "denaturants" are substances which render cosmetics unpalatable, mostly added to cosmetics containing ethyl alcohol; "deodorants" are substances which reduce or mask unpleasant body odours, "depilatories" are substances which remove unwanted body hair; "detanglings" are substances which reduce or eliminate hair intertwining due to hair surface alteration or damage and, thus, helps combing; "emollients" are substances which soften and smooth the skin; "emulsifiers" are substances which promote the formation of intimate mixtures of non-miscible liquids by altering the interfacial tension; "emulsion stabilizers" are substances which help the process of emulsification and improves emulsion stability and shelf-life; "film formings" are substances which produce, upon application, a continuous film on skin, hair or nails; "foamings" trap numerous small bubbles of air or other gas within a small volume of liquid by modifying the surface tension of the liquid; "foam boosters" are substances which improve the quality of the foam produced by a system by increasing one or more of the following properties: volume, texture and/or stability; "gel formers" are substances which give the consistency of a gel (a semi-solid preparation with some elasticity) to a liquid preparation; "hair conditioners" are substances which leave the hair easy to comb, supple, soft and shiny and/or imparts volume, lightness, gloss, etc; "hair dyes" are substances which colour hair; "hair fixers" are substances which permit physical control of hairstyle; "hair waving or straighteners" are substances which modify the chemical structure of the hair, allowing it to be set in the style required; "humectants" are substances which hold and retain moisture; "hydrotropers" are substances which enhance the solubility of substance which is only slightly soluble in water; "keratolytics" are substances which help to eliminate the dead cells of the stratum corneum; "masking agents" are substances which reduce, inhibit or suppress the basic odour or taste of the product; "moisturing" or "moisturizing" compounds increase the water content of the skin and helps keep it soft and smooth; "nail conditioners" are substances which improve the cosmetic characteristics of the nail; "opacifiers" are substances which reduce transparency or translucency of cosmetics; "oral care" provides cosmetic effects to the oral cavity, e.g. cleansing, deodorizing, protecting; "oxidizers" are substances which change the chemical nature of another substance by adding oxygen or removing hydrogen; "pearlescents" are substances which impart a nacreous appearance to cosmetics; "plasticizers" are substances which soften and make supple another substance that otherwise could not be easily deformed, spread or worked out; "preservatives" are substances which inhibit primarily the development of micro-organisms in cosmetics; "propellants" are substances which generate pressure in an aerosol pack, expelling contents when the valve is opened, some liquefied propellants can act as solvents; "reducers" are substances which change the chemical nature of another substance by adding hydrogen or removing oxygen; "refatters" are substances which replenish the lipids of the hair or of the top layers of the skin; "refreshers" are substances which impart a pleasant freshness to the skin; "skin conditioners" are substances which maintain the skin in good condition; "skin protectors" are substances which help to avoid harmful effects to the skin from external factors; "smoothers" are substances which seek to achieve an even skin surface by decreasing roughness or irregularities; "solvents" are substances which dissolve other substances; "soothers" are substances which helps lightening discomfort of the skin or of the scalp; "stabilizers" are substances which improve ingredients or formulation stability and shelf-life; "surfactants" are substances which lower the surface tension of cosmetics as well as aids the even distribution of the product when used; "tanning" is a process which darkens the skin with or without exposure to UV; "tonics" are substances which produce a feeling of well-being on skin and hair; "UV absorbers" are substances which protect the cosmetic product from the effects of UV light; "UV filters" are substances which filter certain UV rays in order to protect the skin or the hair from harmful effects of these rays; "viscosity controllers" are substances which increase or decrease the viscosity of cosmetics.

In a particularly preferred embodiment of the invention, the compounds of the formula (I), the salts and/or mixtures thereof are used in the compositions according to the invention in combination with at least one further (other) substance to modify, mask or reduce the unpleasant taste impression of an unpleasant tasting substance. In this way, particularly effective and/or efficient masking may be achieved.

Further taste-correcting agents may be selected from the following list, without the invention being limited thereto: nucleotides (for example adenosine 5'-monophosphate, cytidine 5'-monophosphate, inosine 5'-monophosphate) or the physiologically acceptable salts thereof, lactisole, 2,4-dihydroxybenzoic acid, 3-hydroxybenzoic acid, sodium salts (for example sodium chloride, sodium lactate, sodium citrate, sodium acetate, sodium gluconate), hydroxyflavanones (for example eriodictyol, homoeriodictyol or the sodium salts thereof), in particular according to EP 1 258 200 A2, hydroxybenzoic acid amide (for example 2,4-dihydroxybenzoic acid vanillylamide, 2,4-dihydroxybenzoic acid *N*-(4-hydroxy-3-methoxybenzyl)amide, 2,4,6-trihydroxybenzoic acid *N*-(4-hydroxy-3-methoxybenzyl)-amide, 2-hydroxybenzoic acid *N*-(4-hydroxy-3-methoxybenzyl)amide, 4-hydroxybenzoic acid *N-*(4-hydroxy-3-methoxybenzyl)amide, 2,4-dihydroxybenzoic acid *N*-(4-hydroxy-3-methoxybenzyl)amide monosodium salt, 2,4-dihydroxybenzoic acid *N*-2-(4-hydroxy-3-methoxyphenyl)ethylamide, 2,4-dihydroxybenzoic acid *N*-(4-hydroxy-3-ethoxybenzyl)amide, 2,4-dihydroxybenzoic acid *N*-(3,4-dihydroxybenzyl)amide and 2-hydroxy-5-methoxy-N-[2-(4-hydroxy-3-methoxyphenyl)ethyl]amide (aduncamide), 4-hydroxybenzoic acid vanillylamide), hydroxydeoxybenzoins (for example 2-(4-hydroxy-3-methoxyphenyl)-1-(2,4,6-trihydroxyphenyl)ethanone, 1-(2,4-dihydroxyphenyl)-2-(4-hydroxy-3-methoxyphenyl)ethanone, 1-(2-hydroxy-4-methoxyphenyl)-2-(4-hydroxy-3-methoxy-phenyl)ethanone, hesperetin according to WO 2007/014879, diacetyl trimers according to WO 2006/058893, deoxybenzoins according to WO 2006/106023, ginger diones according to WO 2007/003527, mixtures for amplifying salty taste according to PCT/EP 2006/067120 and documents based thereon, amino acids (for example gamma aminobutyric acid, taurine, beta-alanine, arginine, ornithine, lysine), divanillin according to WO 2004/078302, pellitorines according to WO 2004/043960 and WO 2004/000787, lactones as mentioned above, preferably nonenolide and/or 4-methyl-5-hydroxy-hexanoic acid lactone or mixtures thereof, or mixtures of whey proteins with lecithins.

Particularly preferred further taste-correcting agents are 2,4-dihydroxybenzoic acid, 3-hydroxybenzoic acid, sodium lactate, sodium citrate, sodium acetate, sodium gluconate, hydroxyflavanones (for example eriodictyol, homoeriodictyol or the sodium salts thereof), in particular according to EP 1 258 200 A2, hydroxybenzoic acid amide (for example 2,4-dihydroxybenzoic acid vanillylamide, 2,4-dihydroxybenzoic acid *N*-(4-hydroxy-3-methoxybenzyl)amide, 2,4,6-trihydroxybenzoic acid *N-*(4-hydroxy-3-methoxybenzyl)amide, 2-hydroxybenzoic acid *N*-(4-hydroxy-3-methoxybenzyl)amide, 4-hydroxybenzoic acid *N*-(4-hydroxy-3-methoxybenzyl)amide, 2,4-dihydroxybenzoic acid *N-*(4-hydroxy-3-methoxybenzyl)amide monosodium salt, 2,4-dihydroxybenzoic acid *N*-2-(4-hydroxy-3-methoxyphenyl)ethylamide, 2,4-dihydroxybenzoic acid *N*-(4-hydroxy-3-ethoxybenzyl)amide, 2,4-dihydroxybenzoic acid *N*-(3,4-dihydroxybenzyl)amide and 2-hydroxy-5-methoxy-N-[2-(4-hydroxy-3-methoxyphenyl)ethyl]amide (aduncamide), 4-hydroxybenzoic acid vanillylamide), hydroxydeoxybenzoins (for example 2-(4-hydroxy-3-methoxyphenyl)-1-(2,4,6-trihydroxyphenyl)ethanone, 1-(2,4-dihydroxyphenyl)-2-(4-hydroxy-3-methoxyphenyl)ethanone, 1-(2-hydroxy-4-methoxyphenyl)-2-(4-hydroxy-3-methoxyphenyl)ethanone, hesperetin according to WO 2007/014879, diacetyl trimers according to WO 2006/058893, deoxybenzoins according to WO 2006/106023, ginger diones according to WO 2007/003527, divanillin according to WO 2004/078302, pellitorines according to WO 2004/043960 and WO 2004/000787, 3',7-dihdroxy-4'-methoxyflavan according to EP 2 253 226 A1, phyllodulcin according to EP 2 298 084 A1, rubusoside (preferably rubusoside extracts as described in European patent application 11 165 566.8), and vanillyllignans (preferably those described in European patent application 11 164 373.0), lactones as mentioned above, preferably nonenolide and/or 4-methyl-5-hydroxy-hexanoic acid lactone or mixtures thereof.

Particularly preferred further taste-correcting agents are hydroxy flavanones (for example eriodictyol, homoeriodictyol or the sodium salts thereof), in particular according to EP 1 258 200, 2,4-dihydroxybenzoic acid vanillylamide, 2,4,6-trihydroxybenzoic acid *N*-(4-hydroxy-3-methoxybenzyl)amide, 2,4-dihydroxybenzoic acid *N*-(4-hydroxy-3-methoxybenzyl)amide monosodium salt, hesperetin according to WO 2007/014879, diacetyl trimers according to WO 2006/058893, ginger dione [2] according to WO 2007/003527, divanillin according to WO 2004/078302, trans-pellitorine according to WO 2004/043960 and WO 2004/000787, 3',7-dihdroxy-4'-methoxyflavan according to EP 2 253 226 A1, phyllodulcin according to EP 2 298 084 A1, rubusoside (preferably rubusoside extracts as described in European patent application 11 165 566.8), and vanillyllignans (preferably those described in European patent application 11 164 373.0), lactones as mentioned above, preferably nonenolide and/or 4-methyl-5-hydroxy-hexanoic acid lactone or mixtures thereof.

The term "colour additive" means a material which is a dye, pigment, or other substance made by a process of synthesis or similar artifice, or extracted, isolated, or otherwise derived, with or without intermediate or final change of identity, from a vegetable, animal, mineral, or other source, and when added or applied to a food, drug, or cosmetic, or to the human body or any part thereof, is capable (alone or through reaction with other substance) of imparting colour thereto.

In more detail but not intended to be limited to this list "colour additives" are canthaxanthin; caramel; carotenoids, e.g.β-apo-8'-carotenal, β-carotene; cochineal extract; carmine; sodium copper chlorophyllin; toasted partially defatted cooked cottonseed flour; ferrous salts, e.g. ferrous gluconate, ferrous lactate, synthetic iron oxide; grape colour extract; grape skin extract (enocianina); fruit and/or vegetable juices, concentrates and/or dried fruits or vegetables e.g. annatto extract, carrot oil, dehydrated beets (beet powder), paprika, paprika oleoresin, mica-based pearlescent pigments, saffron, titanium dioxide, tomato lycopene extract and/or concentrate, turmeric, turmeric oleoresin; or natural or synthetic dyes or colouring pigments e.g. flavonoids, anthocyans, chlorophyll and the derivates thereof; and riboflavin.

The term "preservatives" means a material which prolong the shelf-life of foods by protecting them against deterioration caused by micro-organisms and/or which protect against growth of pathogenic micro-organisms.

The term "dietary supplement" means particular use for which a food purports or is represented to be used, including but not limited to supplying a special dietary need that exists by reason of a physical, physiological, pathological, or other condition, including but not limited to the condition of disease, convalescence, pregnancy, lactation, infancy, allergic hypersensitivity to food, underweight, overweight, or the need to control the intake of sodium; supplying a vitamin, mineral, or other ingredient for use by man to supplement his diet by increasing the total dietary intake; and/or supplying a special dietary need by reason of being a food for use as the sole item of the diet. "Dietary supplements" encompasses special dietary use solely as a food for infants by reason of its simulation of human milk or its suitability as a complete or partial substitute for human milk.

The term "cosmetic" as used herein is intended to mean
(1) an article, e.g. a mixture or substance or product, intended to be placed in contact with the various external parts of the human body or animal body (epidermis, hair system, nails, lips and external genital organs), e.g. which can be rubbed, poured, sprinkled, or sprayed on, or otherwise applied to the human body or any part thereof, including the oral cavity and the teeth, skin and hair,
   with a view exclusively or mainly to cleaning them, perfuming them, changing their appearance and/or correcting body odours, and/or protecting them or keeping them in good condition; and
(2) articles intended for use as a component of any such articles; explicitly including soap.

Compositions according to the invention serving for oral care (also known as oral hygiene product or oral hygiene preparation) for cleaning and caring for the oral cavity and the pharynx and for freshening breath are in particular such as toothpastes, tooth gels, tooth powders, mouthwashes, chewing gum and other oral care products. This expressly includes care of the teeth and gums. Dosage forms of customary oral hygiene formulations are creams, gels, pastes, foams, emulsions, suspensions, aerosols, sprays and capsules, granules, pastilles, tablets, candies or chewing gums, this list being understood not to be limiting for the purposes of the present invention.

Dental care products (as an example of an oral care product according to the present invention) containing one or more compounds of formula (I), a physiologically acceptable salt thereof or a flavour composition in accordance with the present invention (as defined above) preferably comprise an abrasive system (abrasive or polishing agent), such as for example silicas, calcium carbonates, calcium phosphates, aluminum oxides and/or hydroxyapatites, surface-active substances such as for example sodium lauryl sulfate, sodium lauryl sarcosinate and/or cocamidopropyl betaine, humectants such as for example glycerol and/or sorbitol, thickeners, such as for example carboxymethylcellulose, polyethylene glycols, carrageenan and/or Laponite^{®}, sweeteners, such as for example saccharin, other taste-correcting agents for unpleasant taste impressions, taste-correcting agents for further, generally not unpleasant taste impressions, taste-modulating substances (for example inositol phosphate, nucleotides such as guanosine monophosphate, adenosine monophosphate or other substances such as sodium glutamate or 2-phenoxypropionic acid), cooling active ingredients such as for example menthol, menthol derivatives (for example L-menthol, L-menthyl lactate, L-menthyl alkylcarbonates, menthone ketals, menthane carboxamides), 2,2,2-trialkylacetamides (for example 2,2-diisopropylpropionic acid methylamide), icilin derivatives, stabilizers and active ingredients, such as for example sodium fluoride, sodium monofluorophosphate, tin difluoride, quaternary ammonium fluorides, zinc citrate, zinc sulfate, tin pyrophosphate, tin dichloride, mixtures of different pyrophosphates, triclosan, cetylpyridinium chloride, aluminum lactate, potassium citrate, potassium nitrate, potassium chloride, strontium chloride, hydrogen peroxide, aromas, sodium bicarbonate and/or odour-correcting agents.

Chewing gums (as a further example of compositions serving for oral care) containing one or more compounds of formula (I), a physiologically acceptable salt thereof or a flavour composition according to the present invention preferably comprise a chewing gum base, i.e. a chewable mass which becomes plastic on chewing, sugars of various kinds, sugar substitutes, sweeteners, sugar alcohols, other taste-correcting agents for unpleasant taste impressions, taste-correcting agents for further, generally not unpleasant taste impressions, taste-modulating substances (for example inositol phosphate, nucleotides such as guanosine monophosphate, adenosine monophosphate or other substances, such as sodium glutamate or 2-phenoxypropionic acid), the cooling active ingredients, humectants, thickeners, emulsifiers, aromas, stabilizers and/or odour-correcting agents mentioned in the previous section.

The term "animal feed" means an article which is intended for use for food for animals other than man and which is intended for use as a substantial source of nutrients in the diet of the animal, and is not limited to a mixture intended to be the sole ration of the animal. Additionally, "animal feed" means any substance or product, including additives, whether processed, partially processed or unprocessed, intended to be used for oral feeding to animals.

The further constituents for compositions according to the invention may comprise conventional basic materials, auxiliary substances and additives for foodstuffs or products consumed for pleasure. Some of these substances have an unpleasant taste in the sense of the definition given above.

Examples of conventional basic materials, auxiliary substances and additives for compositions according to the invention are water, mixtures of fresh or processed, plant or animal basic or raw materials (for example raw, roasted, dried, fermented, smoked and/or boiled meat, bone, cartilage, fish, vegetables, fruit, herbs, nuts, vegetable or fruit juices or pastes or mixtures thereof), digestible or non-digestible carbohydrates (for example sucrose, maltose, fructose, glucose, dextrins, amylose, amylopectin, inulin, xylans, cellulose), sugar alcohols (for example sorbitol, xylitol, mannitol), natural or hardened fats (for example tallow, lard, palm fat, coconut oil, hardened vegetable fat), oils (for example sunflower oil, peanut oil, maize germ oil, olive oil, fish oil, soy oil, sesame oil), fatty acids or the salts thereof (for example potassium stearate), proteinogenic or non-proteinogenic amino acids and related compounds (for example taurine), peptides, native or processed proteins (for example gelatin), enzymes (for example peptidases), nucleic acids, nucleotides, taste-correcting agents for unpleasant taste impressions other than those described above, taste-correcting agents for further, generally not unpleasant taste impressions, taste-modulating substances (for example inositol phosphate, nucleotides such as guanosine monophosphate, adenosine monophosphate or other substances such as sodium glutamate or 2-phenoxypropionic acid), emulsifiers (for example lecithins, diacylglycerols), stabilizers (for example carageenan, alginate), preservatives, (for example benzoic acid, sorbic acid), antioxidants (for example tocopherol, ascorbic acid), chelating agents (for example citric acid), organic or inorganic acidulants (for example malic acid, acetic acid, citric acid, tartaric acid, phosphoric acid), additional bitter substances (for example quinine, caffeine, limonin, amarogentin, humulone, lupulone, catechins, tannins), sweeteners (for example saccharin, cyclamate, aspartame, neotame), mineral salts (for example sodium chloride, potassium chloride, magnesium chloride, sodium phosphate), substances preventing enzymatic browning (for example sulfite, ascorbic acid), essential oils, plant extracts, natural or synthetic dyes or colouring pigments (for example carotenoids, flavonoids, anthocyans, chlorophyll and the derivatives thereof), spices, synthetic, natural or nature-identical aroma substances or odouriferous substances and odour-correcting agents.

As used herein, the term "tea solids" refers to dry material extractable from the leaves of the plant *Camellia sinensis* var. *sinensis* and/or *C. sinensis* var. *assamica.* The material may have been subjected to a so-called "fermentation" step wherein it is oxidised by certain endogenous enzymes that are released during the early stages of "black tea" manufacture. This oxidation may even be supplemented by the action of exogenous enzymes such as oxidases, laccases and peroxidases. Alternatively the material may have been partially fermented ("oolong" tea) or substantially unfermented ("green tea").

The term "tea-based beverage" refers to a beverage comprising at least 0.01 wt.% of tea solids. Preferably, a tea-based beverage comprises from 0.04 to 3 wt.% tea solids, more preferably from 0.06 to 2 wt.%, most preferably from 0.1 to 1 wt.%, based on the total weight of the tea-based beverage.

Solvents (as an example of carrier substances) which are in particular suitable for foodstuffs and orally consumed compositions are water, ethanol, methanol, 1,2-propylene glycol, glycerol, acetone, dichloromethane, acetic acid ethyl ester, diethyl ether, hexane, heptane, diacetin, triacetin, plant oils, fats, or supercritical carbon dioxide, and mixtures thereof.

Preferred solid carriers (as an example of auxiliary substances) are maltodextrin, starch, natural or artificial polysaccharides and/or vegetable gums such as modified starches or gum arabic, preferred liquid carriers approved for aroma and flavouring compositions such as for example ethanol, 1,2-propylene glycol, water, glycerol, triacetin, plant oil triglycerides, colouring agents, for example approved food dyes, colouring plant extracts, stabilizers, preservatives, antioxidants, viscosity-influencing substances.

Preferred are consumables or compositions to prepare consumables which contain further flavour compounds or aroma substances, preferred further flavour compounds or aroma substances which suppress unwanted flavour attributes, so called malodours and can modify pleasant or unpleasant taste attributes.

Preferred aroma substances which suppress malodours are vanillin, ethyl vanillin, ethyl vanillin isobutyrate (=3-ethoxy-4-isobutyryloxybenzaldehyde), Furaneol^{®} (2,5-dimethyl-4-hydroxy-3(2H)-furanone) and derivatives (for example homofuraneol, 2-ethyl-4-hydroxy-5-methyl-3(2H)furanone), homofuronol (2-ethyl-5-methyl-4-hydroxy-3(2H)-furanone and 5-ethyl-2-methyl-4-hydroxy-3(2H)-furanone), maltol and derivatives (for example ethylmaltol), coumarin and derivatives, gamma-lactones (for example gamma-undecalactone, gamma-nonalactone), delta-lactones (for example 4-methyl delta-lactone, massoilactone, deltadecalactone, tuberolactone), methyl sorbate, diacetyl, 4-hydroxy-2(or 5)-ethyl-5(or 2)-methyl-3(2H)-furanone, 2-hydroxy-3-methyl-2-cyclopentenones, 3-hydroxy-4,5dimethyl-2(5H)-furanone, fruit esters and fruit lactones (for example acetic acid n-butyl ester, acetic acid isoamyl ester, propionic acid ethyl ester, butyric acid ethyl ester, butyric acid n-butyl ester, butyric acid isoamyl ester, 3-methylbutyric acid ethyl ester, theaspirane, beta-ionone, damascenone, n-ethyl hexanoate, n-allyl hexanoate, n-hexanoic acid n-butyl ester, n-octanoic acid ethyl ester, ethyl-3-methyl-3-phenyl glycidate, ethyl-2-trans-4-cis-decadienoate), 4-(p-hydroxyphenyl)-2-butanone, 1,1-dimethoxy-2,2,5-trimethyl-4-hexane, 2,6-dimethyl-5-hepten-1-al, and phenylacetaldehyde.

Preferred flavour substances or substance mixtures which can modify (pleasant or unpleasant) taste impressions are described in EP 1 258 200 A2, WO 2005/096841, WO 2006/024587, EP 1 868 452, EP 1 901 618, EP 2 008 530, EP 2 058 297, EP 2 253 226, EP 2 008 530 and EP 1 972 203, European patent application 11 164 373.0 and European patent application 11 165 566.8 which are incorporated herein regarding said taste modifying flavour substances.

These documents describe methods to reduce, mask, modulate and/or suppress bitter, sour as well as astringent impressions or enhance sweet or umami impressions for example by the use of flavanoids, e.g. flavanes, especially hydroxyflavanones, gamma-amino butyric acid, hydroxybenzoic acid amides, deoxybenzoins, gingerdiones, 4-hydroxydihydrochalcones, alkamides such as pellitorine or spilanthol, rubusoside or extracts from Rubus suavissimus, phyllodulcin or extracts from Hydrangea dulcis, or vanillyllignans.

Especially preferred flavour substances which can modify (pleasant or unpleasant) taste impressions are phloretin, homoeriodictyol, eriodictyol, hesperetin, gamma-aminobutyric acid, pellitorine and its isomers, spilanthol, 3',7-dihdroxy-4'-methoxyflavan, phyllodulcin, rubusoside, and vanillyllignans (i.e. lignans containing one or more vanillyl (= (4-hydroxy-3-methoxyphenyl)-moieties, preferably one or two vanillyl-moieties), in particular those described in European patent application 11 164 373.0), or mixtures thereof.

In a further preferred production method, the compound of the formula (I) or the salts or mixtures thereof is previously complexed with one or more suitable complexing agents, for example with cycloglycans, for example cyclofructans, cyclodextrins or cyclodextrin derivatives, preferably alpha-, gamma- and beta-cyclodextrin, and used in this complexed form.

One composition which is particularly preferred according to the invention is one in which the matrix is so selected that the compound of the formula (I) is released by the matrix in delayed manner, such that a longlasting action is obtained.

Preferably, the compositions according to the invention further contain one, two, three, four, five or more aroma substances in order to round off and refine the flavour and/or odour of the composition. Suitable flavour compositions contain for example synthetic, natural or nature-identical aroma, odouriferous and flavour substances and suitable auxiliary substances and carriers.

Further conventional active ingredients, basic materials, auxiliary substances and additives for consumables and compositions serving for nutrition, for oral care or for pleasure may be present in quantities of 5 to 99.9999 wt.%, preferably of 10 to 80 wt.%, relative to the total weight of the composition according to the present invention. The compositions according to the present invention may comprise water in a quantity of up to 99.9999 wt.%, preferably in the range of 5 to 99.9 wt.%, more preferably in the range of 25 to 99.9 wt.%, even more preferably in the range of 50 to 99.8 wt.%, relative to the total weight of the composition.

According to a further preferred embodiment, compositions according to the present invention may be produced by incorporating one or more compounds of formula (I) and/or physiologically acceptable salts of compounds of formula (I) and optionally further constituents into emulsions, into liposomes, for example starting from phosphatidyl choline, into microspheres, into nanospheres or also into capsules, granules or extrudates prepared from a matrix suitable for foodstuffs and products consumed for pleasure, for example prepared from starch, starch derivatives, cellulose or cellulose derivatives (for example hydroxypropylcellulose), other polysaccharides (for example alginate), natural fats, natural waxes (for example beeswax, camauba wax) or from proteins, for example gelatine.

The present invention also relates to a method for producing a composition according to the present invention, preferably in one of the preferred or particularly preferred embodiments defined above, comprising the step of
- contacting, preferably mixing, one or more substances having an unpleasant taste, in particular a bitter and/or astringent taste, with one or more compounds of formula (I), preferably in one of the preferred or particularly preferred embodiments defined above, and/or one or more physiologically acceptable salts of a compound of formula (I), preferably in one of the preferred or particularly preferred embodiments defined above.

In a preferred embodiment, the present invention relates to a method for producing a composition according to the present invention, preferably in one of the preferred or particularly preferred embodiments defined above, comprising the step of
- contacting, preferably mixing, one or more substances having an unpleasant taste with a semifinished product as defined above, preferably in one of the preferred or particularly preferred embodiments defined above.

The present invention also relates to a method for modulating or masking an unpleasant taste of a substance or substance mixture comprising the step of
- contacting, preferably mixing, one or more substances having an unpleasant taste, in particular a bitter and/or astringent taste, with one or more compounds of formula (I), preferably as defined in one of the preferred or particularly preferred embodiments above, and/or one or more physiologically acceptable salts of a compound of formula (I), preferably as defined in one of the preferred or particularly preferred embodiments above,
   and/or
- contacting, preferably mixing, one or more substances having an unpleasant taste with a semifinished product as defined above, preferably in one of the preferred or particularly preferred embodiments defined above.

### Examples

Unless indicated otherwise all data and figures, in particular amounts, refer to the weight.

### Example 1:

### Example 1.1: Isolation of a mixture comprising soy saponin I and azukisaponin V from Trifolium repens

Saponin fractions from *Trifolium repens* were obtained in a method similar to the method described in US 4,594,412. Analysis of a saponin fraction (hereinafter referred to as [Mix B]) by ¹H-NMR showed that [Mix B] consisted of soy saopinin I (32%), azukisaponin V (50%) and a third saponin of formula (I) of the present invention with M = hydroxyl, i.e. the triterpene aglycone moiety of said saponin corresponded to sapogenol B (18%). These proportions are based on the signal intensities in the NMR spectrum and do not necessarily reflect the proportions by weight.

### Example 1.2: Evaluation of taste properties and masking activities

Prior to the experiments regarding the masking activity, the compounds were tested for their taste profiles in a 5 % sucrose solution in water by an expert panel (5-8 skilled persons).

Soy saponin I (CAS number 51330-27-9) at 100 ppm showed some faint cardboardy, fatty, dusty and mouth drying effects, soy saponin II (CAS number 55319-36-3) at 100 ppm exhibited a very neutral taste profile and was only very weakly mouth drying.

Multiple Time-Intensity Profiling (mTIP) is a descriptive method for sensory evaluation to rate the intensity of different attributes in parallel over a certain period of time. This method combines the advantages of dual-attribute time-intensity (DATI), reducing the number of tests, and of time-intensity profiling (TIP), which allows evaluation of more than two attributes per session.

15 Trained panellists were asked to take two sips of the sample (5 mL). The first sip is to coat the whole mouth with the sample. After the second sip the actual measurement starts and intensities are rated repeatedly after defined time intervals. Multiple attributes can be rated in parallel by using horizontal unstructured line scales for each descriptor. The line scales are presented on the computer screen and the intensities are rated after the first 10 seconds and afterwards repeatedly every 20 seconds over a period of 70 seconds. Data were analyzed by *Compusense*^{®} *five* (trademark by Compusense Inc., Guelph, Canada) and represented graphically in a time-intensity curve.

To evaluate the bitterness and astringency masking effects of a 4: 6 (w/w) - mixture consisting of soy saponin I and azukisaponin V (hereinafter referred to as [Mix A]), a trained sensory panel was asked to taste and evaluate a test solution comprising 750 ppm epigallocatechin gallate (EGCG) and 125 ppm ascorbic acid according to the method described above. In a next step, the same panel was asked to rate the bitterness and astringency of a test solution containing EGCG and ascorbic acid in the same concentration as described above and, in addition, 20 ppm of [Mix A]. The results of both time intensity curves are compared statistically to determine the reduction of bitterness and astringency after addition of the masking compound. The test was performed twice: The results regarding bitterness and astringency reduction (mean values) are given in the following tables 1A and 1B. For calculation of significance, Student's matched pair test was used.

**Table 1A: Bitterness reduction after addition of 20 ppm of a mixture of soy saponin I and azukisaponin V [Mix A]**

| Time (sec) | Bitterness without [Mix A] | Bitterness with [Mix A] | Reduction |
|---|---|---|---|
| 0 | 5.05 | 4.34 | - 14 % |
| 10 | 4.22 | 3.38 | - 20 % |
| 30 | 3.16 | 2.12 | - 33 % |
| 50 | 2.15 | 1.59 | - 26 % |
| 70 | 1.59 | 1.11 | - 30 % |

**Table 1B: Astringency reduction after addition of 20 ppm of a mixture of soy saponin I and azukisaponin V [Mix A]**

| Time (sec) | Astringency without [Mix A] | Astringency with [Mix A] | Reduction |
|---|---|---|---|
| 0 | 4.89 | 4.89 | 0 % |
| 10 | 4.72 | 4.16 | -12 % |
| 30 | 3.68 | 3.11 | -15 % |
| 50 | 2.93 | 2.29 | -22 % |
| 70 | 2.07 | 1.49 | -28 % |

In contrast thereto soyasapogenol B, i.e. the aglycone of soy saponin I and azukisaponin V, did not exhibit any bitter or astringent masking activity.

When using 20 ppm of [Mix B] (as described in example 1.1) instead of [Mix A] above, the bitterness and astringency masking effect of was comparable to the masking effect of [Mix A].

When using 40 ppm of soy saponin I [1] alone instead of [Mix A] above, the bitterness and astringency masking effect of was comparable to the masking effect of [Mix A].

When using 20 ppm of soy saponin II [3] alone instead of mixture [Mix A] above, an astringency masking effect was observed.

### Example 2: Semifinished compositions - Flavour compositions

| | Flavour composition (amounts in wt.%) | | | | | | | |
|---|---|---|---|---|---|---|---|---|
| Ingredients | A | B | C | D | E | F | G | H |
| Soy saponin I [1] | 10 | | 5 | 5 | | 2.5 | 5 | |
| Azukisaponin V [2] | | 10 | 5 | | 5 | 2.5 | 10 | 20 |
| Homoeriodictyol | 5 | | 2.5 | | | | | |
| Eriodictyol | | 2.5 | | | | | | |
| Phloretin | | | | 1 | | | | |
| Hesperetin | | | | | 0.5 | | | |
| 10 % trans-pellitorine (according to WO 2004/043906) in 1,2-propylene glycol/ diethyl malonate | | | 0.25 | 0.25 | 0.25 | 0.5 | 0.25 | |
| 3',7-Dihdroxy-4'-methoxyflavan | | | 2.5 | | | | | 2.5 |
| 1,2-Propylene glycol | | 20 | | ad 100 | ad 100 | 20 | ad 100 | |
| Glycerol | | ad 100 | | 20 | 20 | ad 100 | 20 | |
| Maltodextrin | ad 100 | | ad 100 | | | | | ad 100 |

The ingredients - except for 1,2-propylene glycol, glycerol and maltodextrin - were mixed in the above-indicated quantity ratios and then either mixed with 1,2-propylene glycol and glycerol and completely dissolved therein by gentlly warming said mixture or mixed with maltodextrin until homogeneous.

### Example 3: Spray dried semifinished products for the preparation of a finished consumable

| Compounds | Amount in wt.% | | |
|---|---|---|---|
| | A | B | C |
| Water | 60.8 | 60.8 | 60.8 |
| Maltodextrin from wheat | 24.3 | 24.3 | 24.3 |
| Gum arabic | 6.1 | 6.1 | 6.1 |
| Soy saponin I [1] | 8.8 | --- | 4.4 |
| Azukisaponln V [2] | --- | 8.8 | 4.4 |

The drinking water is initially introduced into a container and the maltodextrin and gum arabic are dissolved therein. Then soy saponin I [1] and/or azukisaponin V [2] is emulsified into the carrier solution with a Turrax. The temperature of the spray solution should not exceed 30°C. The mixture is then spray-dried (specified inlet temperature: 185 - 195°C, specified outlet temperature: 70 - 75°C). The spray-dried semifinished product contains approx. 18 - 22% of the active ingredients soy saponin I [1] and/or azukisaponin V [2].

### Example 4: Tea compositions

| Compounds | Amount in wt.% | | |
|---|---|---|---|
| | A | B | C |
| Black tea, Ceylon, leaves | 94 | --- | --**-** |
| Green tea, China, leaves | --- | 92 | --- |
| Mate tea, Peru, leaves | --- | --- | 95 |
| Semifinished product A from example 3 | 6 | --- | --- |
| Semifinished product B from example 3 | --- | 8 | --- |
| Semifinished product C from example 3 | --- | --- | 5 |

The tea leaves and the semifinished product(s) are mixed and packaged in teabags of filter paper. For use, 100 - 250 ml of boiling water were poured onto the teabag, which was left to brew for 2 - 5 min.

### Example 5: Tea compositions

| Compounds | Amount in wt.% | |
|---|---|---|
| | A | B |
| Black Tea, Ceylon, leaves | 94 | **-**-- |
| Green tea, Japan Sencha, leaves | --- | 95 |
| Semifinished product A from example 2 | 3 | --- |
| Semifinished product C from example 2 | 3 | 5 |

The tea leaves and the semifinished product(s) are mixed and packaged in teabags of filter paper. For use, 100 - 250 ml of boiling water are poured onto the teabag, which is left to brew for 2 - 5 min.

### Example 6: Ice tea based on black tea

| Compounds | Amount in wt.% | |
|---|---|---|
| | A | B |
| Black tea, Assam, leaves | 1.4 | 1.4 |
| Water | Ad 100 | Ad 100 |
| Natural peach flavour | 0.65 | 0.65 |
| Sucrose | 7 | 7 |
| Citric acid (crystalline) | 1.2 | 1.2 |
| Ascorbic acid | 0.2 | 0.2 |
| Soy saponin I [1], 10 wt.% solution in ethanol | 0.05 | --- |
| Azukisaponin V [2], 10 wt.% solution in ethanol | --- | 0.1 |

### Example 7: Ice tea based on green tea, calorie reduced

| Compounds | Amount in wt.% | |
|---|---|---|
| | A | B |
| Green tea extract, catechin content 10 wt.% | 1.4 | 1.2 |
| Water | Ad 100 | Ad 100 |
| Flavour type lemon | 0.65 | 0.65 |
| Sucrose | 3.45 | 3.45 |
| Saccharin, sodium salt | 0.1 | --- |
| Rebaudiosid A | --- | 0.02 |
| Citric acid (crystalline) | 1.2 | 1.2 |
| Ascorbic acid | 0.2 | 0.2 |
| Soy saponin I [1], 10 wt.% solution in ethanol | 0.05 | --- |
| Azukisaponin V [2], 10 wt.% solution in ethanol | --- | 0.05 |

### Example 8: Ice tea based on black tea, sugar free

| Compounds | Amount in wt.% | |
|---|---|---|
| | A | B |
| Black tea extract | 1.4 | 1.4 |
| Water | Ad 100 | Ad 100 |
| Saccharin | 0.035 | 0.035 |
| Flavour type lemon | 0.65 | 0.65 |
| Citric acid (crystalline) | 1.2 | 1.2 |
| Ascorbic acid | 0.2 | 0.2 |
| Soy saponin I [1], 10 wt.% solution in ethanol | 0.05 | - |
| Azukisaponin V [2], 10 wt.% solution in ethanol | - | 0.05 |

### Example 9: Cappuccino beverage

| Compounds | Amount in wt.% | |
|---|---|---|
| | A | B |
| Coffee-extract, spray dried | 14.0 | 16.0 |
| Sucrose | 28.3 | 25.3 |
| Fat powder | 18.2 | 18.2 |
| Coffee whitener, foaming | Ad 100 | Ad 100 |
| Hydrocolloids/ emulsifiers | 1.8 | 1.8 |
| Lactose | 4.7 | 4.7 |
| Semi finished product A from example 2 | 3.0 | --- |
| Semi finished product B from example 2 | --- | 6.0 |

The compounds were blended. Subsequently, 12.5 g of the final blend are put into 150 ml hot water to prepare the final consumable.

### Example 10: Dark chocolate

A bitter chocolate was prepared from the following compounds by melting and optionally conching them, pouring the melt into forms and cooling down and tempering the chocolate bars.

| Compounds | Amount in wt.% | Amount in wt.% |
|---|---|---|
| Cocoa mass | Ad 100 | Ad 100 |
| Cocoa butter | 11.70 | 11.70 |
| Sucrose | 29.50 | 29.50 |
| Semi skimmed milk | 3.00 | 3.00 |
| Soy lecithin | 0.2 | 0.2 |
| Vanillin | 0.035 | 0.035 |
| Soy saponin I [1], 10 wt.% solution in ethanol | --- | 0.05 |
| Azukisaponin V [2], 10 wt.% solution in ethanol | 0.05 | 0.05 |

### Example 11: Chewing gums containing sweeteners

| Part | Compounds | Amount in wt.% |
|---|---|---|
| A | Gum base "Jagum T" | 30.00 |
| B | Sorbitol, powder | 39.00 |
| | Isomalt^{®} (Palatinit GmbH) | 9.50 |
| | Xylitol | 2.00 |
| | Mannitol | 3.00 |
| | Saccharin sodium salt | 0.10 |
| | Acesulfam^{®} K | 0.05 |
| | Rebaudiosid A | 0.05 |
| | Emulgum^{®} (Colloides Naturels, Inc.) | 0.30 |
| C | Sorbitol, 70 wt.% in water | 14.00 |
| | Glycerol | 1.00 |
| D | Peppermint aroma containing 5 % menthol and 1 % Soysaponin I [1] and 1 % Azukisaponin V [2] | 1.00 |

Parts A to D are mixed and kneaded intensively. The raw chewing gum mass can be formed to thin stripes or alternatively to small rectangular pieces and optionally treated with a sorbit/xylit based coating to yield finally ready to use chewing gums.

## Claims

1. Use of a compound of formula (I) or a physiologically acceptable salt thereof, 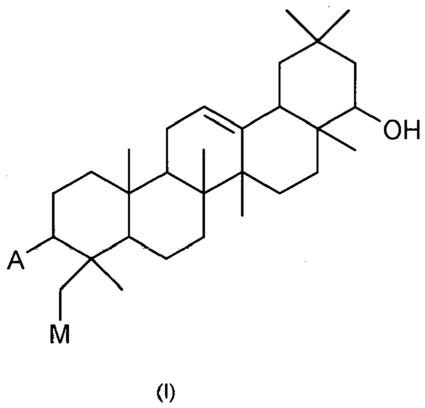 wherein
M is hydrogen or hydroxyl, preferably hydroxyl, and
A is a carbohydrate moiety, preferably an oligosaccharide moiety,
for modulating, reducing or suppressing an unpleasant taste of an unpleasant substance or substance mixture.

2. Use according to claim 1, wherein A comprises at least two saccharide moieties of the general formula (II) 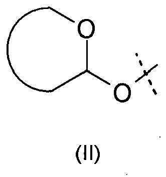 bound to each other or to the triterpene aglycone moiety of the compound of formula (I) via the oxygen, the dotted line marking the linking bond,
wherein each saccharide moiety, independently from each other, comprises a ring having 4 or 5 carbon atoms, and wherein preferably each carbon atom of said rings is substituted by at least one substituent selected from the group consisting of hydrogen, hydroxyl, C1-C5-alkyl, C1-C5-OH, C1-C5-carboxyl and C1-C5-alkoxy.

3. Use according to any of the previous claims, wherein
- at least one saccharide moiety in A comprises a COOH substituent,
and/or
- each saccharide moiety of A, independently from each other, comprises a ring having 4 or 5 carbon atoms, wherein each ring carbon atom of said rings is (i) substituted by one hydrogen, and (ii) independently from each other, preferably additionally bound to an oxygen atom or a substituent selected from the group consisting of hydrogen, hydroxyl, C1-C5-alkyl, C1-C5-OH, C1-C5-carboxyl, and C1-C5-alkoxy.

4. Use according to any of the previous claims, wherein A comprises or consists of 2 to 5 saccharide moieties, preferably comprises or consists of two or three saccharide moieties, more preferably A is a saccharide moiety of formula (Tri) 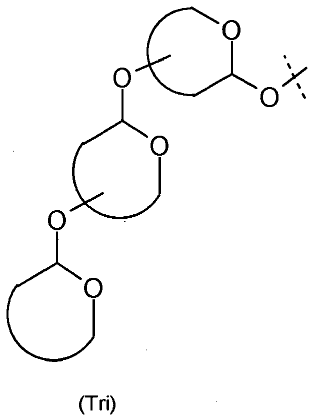 wherein preferably the saccharide moiety bound to the triterpene aglycone moiety of the compound of formula (I) via the linking bond marked with the dotted line comprises a COOH substituent and wherein preferably each saccharide ring carbon atom is bound to at least an oxygen atom or a hydroxyl, carboxyl or methyl substituent.

5. Use according to any of the previous claims, wherein A corresponds to formula (Tri-X) 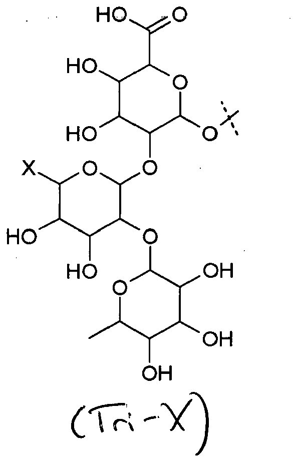 wherein X is hydrogen or -CH₂OH, and
wherein A is bound to the triterpene aglycone moiety of the compound of formula (I) via the linking bond marked with the dotted line.

6. Composition, preferably orally consumable composition, comprising
(a) one or more compounds of formula (I) or one or more physiologically acceptable salts thereof, as defined in any of claims 1 to 5,
and
(b) a substance or substance mixture of an unpleasant taste,
wherein
- the total amount of all ingredients (a) is sufficient for modulating or masking the unpleasant taste of the ingredients (b) compared to an identical composition without ingredients (a),
- the total amount of all ingredients (b) is in the range of 0.0001 - 0.2 wt%, based on the total weight of composition, and
wherein preferably
- the total amount of all ingredients (a) is in the range of 0.0001 - 0.1 wt%, based on the total weight of composition, and/or
wherein the composition preferably further comprises
- one or more carrier-substances selected from the group consisting of maltodextrin, gum arabic, silica, ethanol, isopropanol, 1,2-propylene glycol, glycerol, triacetin, and diacetin.

7. Composition according to claim 6, wherein the ingredient (a) is or comprises a compound of formula (III) 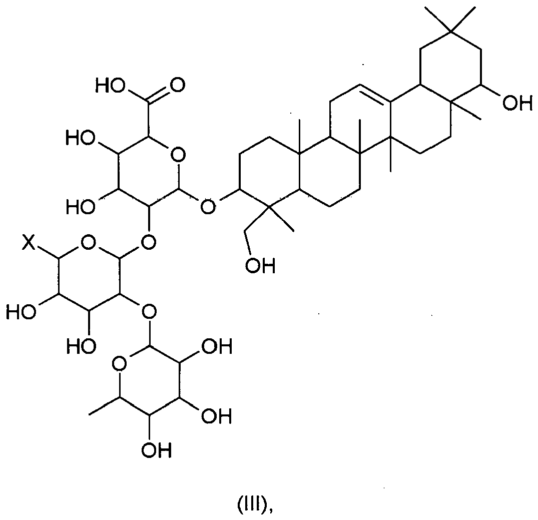
wherein X is hydrogen or -CH₂OH,
or a physiologically acceptable salt a compound of formula (III), in an amount sufficient to modulate, reduce or suppress the unpleasant taste of the ingredients (b) compared to an identical composition without said compound of formula (III) or said physiologically acceptable salt.

8. Composition according to claim 6 or 7, wherein ingredient (b) is or comprises a compound selected from the group consisting of xanthine alkaloids, xanthines, alkaloids, phenolic glycosides, bitter-tasting flavonoid glycosides, bitter tasting chalcones or chalcone glycosides, hydrolyzable tannins, non-hydrolyzable tannins, and the oligomers thereof, in particular flavan-3-ols and catechins, bitter-tasting flavones, bitter-tasting phenols, bitter-tasting polyphenols, terpenoid bitter substances, bitter-tasting triterpene glycosides, metallic salts, bitter-tasting pharmaceutical active ingredients, vitamins, denatonium benzoate, urea, unsaturated fatty acids, bitter-tasting amino acids, bitter-tasting peptides and bitter-tasting artificial or naturally occurring sweeteners,
wherein preferably ingredient (b) comprises or consists of one or more compounds selected from the group consisting of
caffeine, theobromine, theophylline and methylxanthines;
quinine, brucine, strychnine, nicotine;
salicin, arbutin;
neohesperidin, hesperidin, naringin, quercitrin, rutin, hyperosides, isoquercitrin, avicularin; phloridzin, phloretin-2-O'-xyloglucoside;
gallic or ellagic acid esters of carbohydrates, preferably pentagalloylglucose;
catechins or epicatechins, galloylated catechins or galloylated epicatechins, gallocatechins or epigallocatechins, galloylated gallocatechins or galloylated epigallocatechins, theaflavins and/or galloylated theaflavins;
proanthyocyanidines or procyanidines, thearubigins;
quercetin, taxifolin, myricetin or their respective glycosides, preferably quercetrin, rutin, myricitrin;
salicin or arbutin;
hydroxycinnamic acids and the esters thereof, preferably y-oryzanol, caffeic acid or the esters thereof, preferably chlorogenic acid, neochlorogenic acid, cryptochlorogenic acid;
limonoids, preferably limonin or nomilin from citrus fruits; lupolones and humulones from hops, iridoids, secoiridoids;
P57A and related active ingredients from Hoodia gordonii, absinthin from wormwood, amarogentin from gentian;
potassium, magnesium and calcium salts, potassium chloride, potassium gluconate, potassium carbonate, potassium sulfate, potassium lactate, potassium glutamate, potassium succinate, potassium malate, sodium sulfate, magnesium sulfate, iron salts, aluminum salts, zinc salts;
fluoroquinolone antibiotics, paracetamol, aspirin, β-lactam antibiotics, ambroxol, omeprazol, propylthiouracil PROP, guaifenesin;
vitamin H, B-series vitamins, preferably vitamin B1, B2, B6, B12, niacin, pantothenic acid; unsaturated fatty acids;
leucine, isoleucine, valine, tryptophan, proline, histidine, tyrosine, lysine, phenylalanine; peptides with an amino acid from the group comprising leucine, isoleucine, valine, tryptophan, proline or phenylalanine at the N or C terminus;
aspartame, neotame, superaspartame, advantame, saccharin, sucralose, cyclamate, acesulfam K, tagatose, monellin, stevioside, rebaudioside A, rebaudioside C, rebaudioside D, rubusosid, phyllodulcin, hernandulcin, thaumatin, brazzein, miraculin, glycyrrhizin, glycyrrhetinic acid or derivatives thereof;
and the physiologically acceptable salts thereof.

9. Composition according to any of claims 6 to 8, wherein
- said composition is an orally consumable composition comprising water in an amount of 85 wt.% or more, preferably 90 wt.% or more, more preferably 95 wt.% or more, based on the total amount of the orally consumable composition,
and/or
- the total amount of all ingredients (b) is in the range of 0.005 - 0.2 wt%, preferably in the range of 0.01 - 0.175 wt.%, more preferably in the range of 0.02 - 0.15 wt.%, based on the total weight of composition,
and/or
- the total amount of all ingredients (a) is in the range of 0.0005 - 0.05 wt%, preferably in the range of 0.001 - 0.03 wt.%, more preferably in the range of 0.001 - 0.02 wt.%, most preferably in the range of 0.0015 - 0.0125 wt.%, based on the total weight of composition.

10. Composition according to any of claims 6 to 9, further comprising
- one or more substances suitable for enhancing the taste impression umami, sweet, salty, spicy, and/or sour,
and/or
- at least one further substance for modulating or masking an unpleasant taste of an unpleasant substance or substance mixture, preferably in an amount sufficient for modulating or masking an unpleasant taste of an unpleasant substance or substance mixture, wherein preferably the further substance or the further substances are selected from the group consisting of phloretin, homoeriodictyol, eriodictyol, hesperetin, gammaaminobutyric acid, pellitorine and its isomers, spilanthol, 3',7-dihdroxy-4'-methoxyflavan, phyllodulcin, rubusoside, and vanillyllignans.

11. Semifinished product for the production of a composition according to any of claims 6 to 10, comprising
- one or more compounds of formula (I) as defined in any of claims 1 to 5 and/or one or more physiologically acceptable salts of a compound of formula (I) as defined in any of claims 1 to 5, and
- one or more carriers selected from the group consisting of maltodextrin, gum arabic, silica, ethanol, isopropanol, 1,2-propylene glycol, glycerol, triacetin, and diacetin.

12. Semifinished product according to claim 11, wherein said semifinished product is a flavour composition, additionally comprising at least one, preferably two, three, four, five, six, seven, eight, nine, ten, or more aroma substances, preferably selected from the group of aroma substances consisting of groups (c-1) and/or (c-2)
(c-1) acetophenone, allyl capronate, alpha-ionone, anisaldehyde, anisyl acetate, anisyl formiate, benzaldehyde, benzothiazole, benzyl acetate, benzyl alcohol, benzyl benzoate, butyl butyrate, butyl capronate, butylidenphthalide, carvone, camphene, caryophyllene, cineole, cinnamyl acetate, citral, citronellol, citronellal, citronellyl acetate, cyclohexyl acetate, cymol, damascone, decalactone, dihydrocoumarin, dimethyl anthranilate, diethyl anthranilate, dodecalactone, ethoxyethyl acetate, ethylbutyric acid, ethyl butyrate, ethyl caprinate, ethyl capronate, ethyl crotonate, ethyl furaneol, ethyl guaiacol, ethyl isobutyrate, ethyl isovalerianate, ethyl lactate, ethylmethyl butyrate, ethyl propionate, eucalyptol, eugenol, ethyl heptylate, 4-(p-hydroxyphenyl)-2-butanone, gamma-decalactone, geraniol, geranyl acetate, grapefruit aldehyde, heliotropine (= piperonal), 2-heptanone, 3-heptanone, 4-heptanone, trans-2-heptenal, cis-4-heptenal, trans-2-hexenal, cis-3-hexenol, trans-2-hexenoic acid, trans-3-hexenoic acid, cis-2-hexenyl acetate, cis-3-hexenyl acetate, cis-3-hexenyl capronate, trans-2-hexenyl capronate, cis-3-hexenyl formiate, cis-2-hexyl acetate, cis-3-hexyl acetate, trans-2-hexyl acetate, cis-3-hexyl formiate, p-hydroxybenzyl acetone, isoamylalcohol, isoamyl isovalerianate, isobutyl butyrate, isobutyraldehyde, isoeugenol methyl ether, 2-isopropyl-4-methyl thiazole, lauric acid, levulinic acid, limonene, linalool, linalool oxide, linalyl acetate, menthol, menthofurane, methyl anthranilate, methylbutanol, methylbutyric acid, 2-methylbutyl acetate, methyl capronate, methyl cinnamate, 5-methyl furfural, 3,2,2-methyl cyclopentenolone, 6-methyl-5-hepten-2-on, methyl dihydrojasmonate, methyl jasmonate, 2-methyl ethyl butyrate, 2-methyl-2-pentenoic acid, S-(methylthio)butyrate, 3-(methylthio)-l-hexanol, 3-(methylthio)hexyl acetate, nerol, neryl acetate, 2,4-nonadienol, 2,6-nonadienol, nootkatone, delta-octalactone, gamma-octalactone, 2-octanol, 3-octanol, 1-octen-3-ol, 3-octen-l-ol, 1-octyl acetate, 3-octyl acetate, palmitinic acid, paraldehyde, phellandrene, pentandione, phenylethyl acetate, phenylethyl alcohol, phenylethyl isovalerianate, propionaldehyde, propyl butyrate, pulegone, pulegol, sinensal, sulfurol, terpinene, terpineol, terpinolene, 8-thiomenthone, 4,4,2-thiomethyl pentanone, thymol, delta-undecalactone, gamma-undecalactone, valencene, valeric acid, bis(2-methyl-3-furyl) disulfide, furfuryl mercaptan, 2-acetyl-2-thiazoline, 3-mercapto-2-pentanone, 2,5-dimethyl-3-furan thiol, 2,4,5-trimethylthiazole, 2-acetylthiazol, 2,4-dimethyl-5-ethylthiazol, 2-acetyl-1-pyrroline, 2-methyl-3-ethylpyrazine, 2-ethyl-3,5-dimethylpyrazine, 2-ethyl-3,6-dimethylpyrazine, 2,3-diethyl-5-methylpyrazine, 3-isopropyl-2-methoxypyrazine, 3-isobutyl-2-methoxypyrazine, 2-acetylpyrazine, 2-pentylpyridine, (E,E)-2,4-decadienal, (E,E)-2,4-nonadienal, (E)-2-octenal, (E)-2-nonenal, 2-undecenal, 12-methyltridecanal, 1-penten-3-one, cinnamic aldehyde, cinnamic alcohol, methyl salicylate, and isopulegol, and all stereoisomers (in particular diastereomers and enantiomers, including the enantiomeric pure compounds as well as the respective racemates) and cis/trans-isomers of the these substances,
(c-2) vanillin, ethyl vanillin, ethyl vanillin isobutyrate (=3-ethoxy-4-isobutyryloxybenzaldehyde), 2,5-dimethyl-4-hydroxy-3(2H)-furanone and its derivatives (preferably homofuraneol, 2-ethyl-4-hydroxy-5-methyl-3(2H)furanone), homofuronol (2-ethyl-5-methyl-4-hydroxy-3(2H)-furanone and 5-ethyl-2-methyl-4-hydroxy-3(2H)-furanone), maltol and its derivatives (preferably ethylmaltol), coumarin and its derivatives, gamma-lactones (preferably gamma-undecalactone, gamma-nonalactone), delta-lactones (preferably 4-methyl delta-lactone, massoilactone, delta-decalactone, tuberolactone), methyl sorbate, diacetyl, divanillin, 4-hydroxy-2(or 5)-ethyl-5(or 2)-methyl-3(2H)-furanone, 2-hydroxy-3-methyl-2-cyclopentenone, 3-hydroxy-4,5-dimethyl-2(5H)-furanone, 4-(p-hydroxyphenyl)-2-butanone, 1,1-dimethoxy-2,2,5-trimethyl-4-hexane, 2,6-dimethyl-5-hepten-l-al, phenylacetaldehyde, and fruit esters (preferably acetic acid n-butyl ester, acetic acid isoamyl ester, propionic acid ethyl ester, butyric acid ethyl ester, butyric acid n-butyl ester, butyric acid isoamyl ester, 3-methylbutyric acid ethyl ester, theaspirane, beta-ionone, damascenone, n-ethyl hexanoate, n-allyl hexanoate, n-hexanoic acid n-butyl ester, n-octanoic acid ethyl ester, ethyl-3-methyl-3-phenyl glycidate, ethyl-2-trans-4-cis-decadienoate), and all stereoisomers (in particular diastereomers and enantiomers, including the enantiomeric pure compounds as well as the respective racemates) and cis/trans-isomers of the these substances,
and optionally one or more further substances selected from ingredient (d)
(d) substances for modulating, reducing or suppressing an unpleasant taste of an unpleasant substance or substance mixture, preferably in an amount sufficient to modulate, reduce or suppress an unpleasant taste of an unpleasant substance or substance mixture, wherein preferably the further substance or the further substances of group (d) are selected from the group consisting of phloretin, homoeriodictyol, eriodictyol, hesperetin, gammaaminobutyric acid, pellitorine and its isomers, spilanthol, 3',7-dihdroxy-4'-methoxyflavan, phyllodulcin, rubusoside, and vanillyllignans.

13. Semifinished product according to claim 11 or 12, wherein the total amount of all ingredients (a) is in the range of 0.1 - 50 wt%, preferably in the range of 0.25 - 25 wt.%, more preferably in the range of 0.5 - 10 wt.%, based on the total weight of semifinished product.

14. Composition according to any of claims 6 to 10 or semifinished product according to any of claims 11 to 13, wherein the composition or semifinished product has an flavour of berries, citrus fruits, pomaceous fruit, spices, herbs, teas and/or mints, preferably selected from the group consisting of peppermint, spearmint, wintergreen, pineapple, acerola, acai, apple, apricot, banana, pear, pomegranate, blackberry, lemon, lime, grapefruit, pomelo, sweet orange, bitter orange, bergamot, mandarin, guava, rose hip, blueberry, raspberry, lingonberry, bayberry, strawberry, gooseberry, elderberry, red currant, black currant, sweet cherry, cherry, kiwi, lychee, mango, melon, plum, papaya, passion fruit, peach, prune, grape, tamarind, cinnamon, nutmeg, vanilla, green tea, black tea, red tea, yellow tea, white tea, oolong tea, rooibos tea, honeybush tea, mate tea, and mixtures thereof.

15. Method for modulating or masking an unpleasant taste of a substance or substance mixture comprising the step of
contacting, preferably mixing, one or more substances having an unpleasant taste, in particular a bitter and/or astringent taste, with
one or more compounds of formula (I) as defined in any of claims 1 to 5, and/or one or more physiologically acceptable salts of a compound of formula (I) as defined in any of claims 1 to 5,
and/or
a semifinished product as defined in any of claims 11 to 14.

## Patentansprüche

1. Verwendung einer Verbindung der Formel (I) oder eines physiologisch akzeptablen Salzes davon, 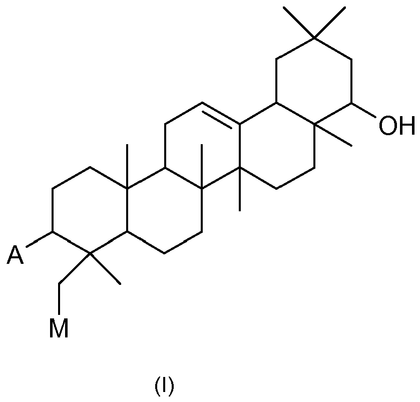 wobei
M Wasserstoff oder Hydroxyl-, vorzugsweise Hydroxyl-, ist, und
A eine Kohlenhydrateinheit, vorzugsweise eine Oligosaccharid-Einheit, ist,
zum Modulieren, Reduzieren oder Unterdrücken eines unangenehmen Geschmacks einer unangenehmen Substanz oder Substanzmischung.

2. Verwendung nach Anspruch 1, wobei A wenigstens zwei Saccharid-Einheiten der allgemeinen Formel (II) umfasst 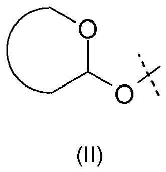 gebunden aneinander oder an die Triterpen-Aglykon-Einheit der Verbindung der Formel (I) über den Sauerstoff, wobei die gestrichelte Linie die verbrückende Bindung markiert,
wobei jede Saccharid-Einheit, unabhängig von einander, einen Ring mit 4 oder 5 Kohlenstoffatomen umfasst, und wobei vorzugsweise jedes Kohlenstoffatom des besagten Rings mit wenigstens einem Substituenten ausgewählt aus der Gruppe bestehend aus Wasserstoff, Hydroxyl-, C1-C5-Alkyl, C1-C5-OH, C1-C5-Carboxyl-und C1-C5-Alkoxy- substituiert ist.

3. Verwendung nach einem der vorangehenden Ansprüche, wobei
- wenigstens eine Saccharid-Einheit in A einen COOH-Substituenten umfasst, und/oder
- jede Saccharid-Einheit von A, unabhängig von einander, einen Ring mit 4 oder 5 Kohlenstoffatomen umfasst, wobei jedes Ring-Kohlenstoffatom des besagten Rings (i) mit einem Wasserstoff substituiert ist, und (ii), unabhängig voneinander, vorzugsweise zusätzlich an ein Sauerstoffatom oder an einen Substituenten ausgewählt aus der Gruppe bestehend aus Wasserstoff, Hydroxyl-, C1-C5-Alkyl-, C1-C5-OH, C1-C5-Carboxyl-, und C1-C5-Alkoxy gebunden ist.

4. Verwendung nach einem der vorangehenden Ansprüche, wobei A 2 bis 5 Saccharid-Einheiten umfasst oder daraus besteht, vorzugsweise zwei oder drei Saccharid-Einheiten umfasst oder daraus besteht, weiter bevorzugt ist A eine Saccharid-Einheit der Formel (Tri) 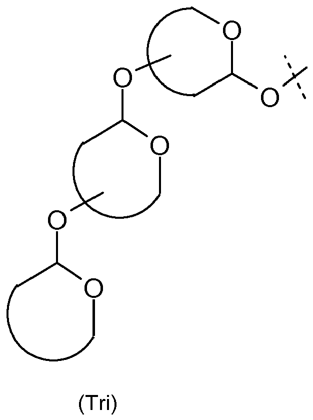 wobei vorzugsweise die an die Triterpen-Aglykon-Einheit der Verbindung der Formel (I) über die verbrückende Bindung, markiert durch die gestrichelte Linie, gebundene Saccharid-Einheit einen COOH-Substituenten umfasst und wobei vorzugsweise jedes Saccharid-Ring-Kohlenstoffatom an wenigstens ein Sauerstoffatom oder einen Hydroxyl-, Carboxyl- oder Methyl-Substituenten gebunden ist.

5. Verwendung nach einem der vorangehenden Ansprüche, wobei A der Formel (Tri-X) entspricht 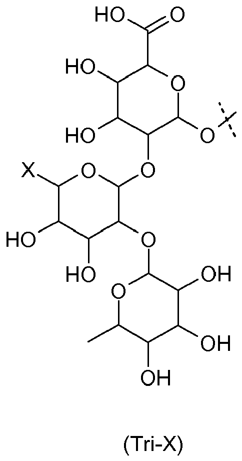
wobei X Wasserstoff oder -CH₂OH ist, und
wobei A an die Triterpen-Aglykon-Einheit der Verbindung der Formel (I) über die verbrückende Bindung, markiert durch die gestrichelte Linie, gebunden ist.

6. Zusammensetzung, vorzugsweise oral konsumierbare Zusammensetzung, umfassend
(a) eine oder mehrere Verbindung(en) der Formel (I) oder ein oder mehrere physiologisch akzeptable(s) Salz(e) davon wie in einem der Ansprüche 1 bis 5 definiert,
und
(b) eine Substanz oder Substanzmischung mit einem unangenehmen Geschmack,
wobei
- die Gesamtmenge aller Inhaltsstoffe (a) ausreichend ist, um den unangenehmen Geschmack der Inhaltsstoffe (b) im Vergleich zu einer identischen Zusammensetzung ohne die Inhaltsstoffe (a) zu modulieren oder zu maskieren,
- die Gesamtmenge aller Inhaltsstoffe (b) im Bereich von 0.0001 - 0.2 Gew.-% liegt, basierend auf dem Gesamtgewicht der Zusammensetzung, und wobei vorzugsweise
- die Gesamtmenge aller Inhaltsstoffe (a) im Bereich von 0.0001 - 0.1 Gew.-% liegt, basierend auf dem Gesamtgewicht der Zusammensetzung, und /oder
wobei die Zusammensetzung vorzugsweise weiterhin
- eine oder mehrere Träger-Substanzen ausgewählt aus der Gruppe bestehend aus Maltodextrin, Gummi Arabicum, Kieselerde, Ethanol, Isopropanol, 1,2-Propyleneglykol, Glyzerin, Triacetin und Diacetin
umfasst.

7. Zusammensetzung nach Anspruch 6, wobei der Inhaltsstoff (a) eine Verbindung der Formel (III) 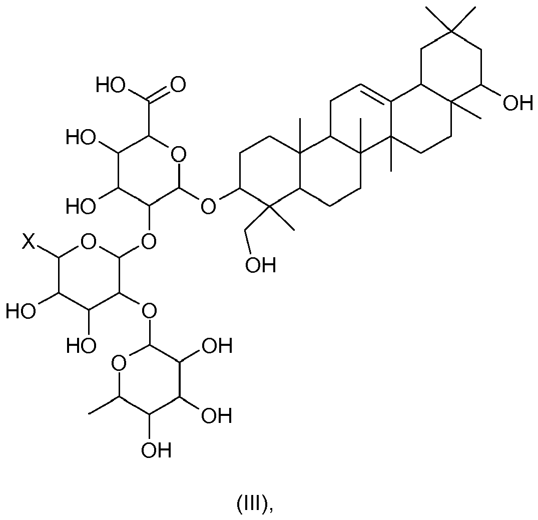 ist oder umfasst,
wobei X Wasserstoff oder -CH₂OH ist,
oder ein physiologisch akzeptables Salz einer Verbindung der Formel (III), in einer ausreichenden Menge, um den unangenehmen Geschmack der Inhaltsstoffe (b) im Vergleich zu einer identischen Zusammensetzung ohne die besagte Verbindung der Formel (III) oder das besagte physiologisch akzeptable Salz zu modulieren, reduzieren oder zu unterdrücken.

8. Zusammensetzung nach Anspruch 6 oder 7, wobei Inhaltsstoff (b) eine Verbindung ausgewählt aus der Gruppe bestehend aus Xanthin-Alkaloide, Xanthine, Alkaloide, phenolische Glykoside, bitter-schmeckende Flavonoid-Glykoside, bitter-schmeckende Chalkone oder Chalkon-Glykoside, hydrolysierbare Tannine, nichthydrolysierbare Tannine, und die Oligomere davon, insbesondere Flavan-3-ole und Catechine, bitter-schmeckende Flavone, bitter-schmeckende Phenole, bitter-schmeckende Polyphenole, terpenoide Bitterstoffe, bitter-schmeckende Triterpen-Glykoside, metallische Salze, bitter-schmeckende pharmazeutisch-aktive Inhaltsstoffe, Vitamine, Denatoniumbenzoat, Harnstoff, ungesättigte Fettsäuren, bitter-schmeckende Aminosäuren, bitter-schmeckende Peptide und bitter-schmeckende künstliche oder natürlich vorkommende Süßstoffe, ist oder eine solche umfasst,
wobei vorzugsweise der Inhaltsstoff (b) eine oder mehrere Verbindung(en) ausgewählt aus der Gruppe bestehend aus
Koffein, Theobromin, Theophyllin und Methylxanthine;
Chinin, Brucin, Strychnin, Nikotin;
Salicin, Arbutin;
Neohesperidin, Hesperidin, Naringin, Quercitrin, Rutin, Hyperoside, Isoquercitrin, Avicularin;
Phloridzin, Phloretin-2-O'-xyloglukosid;
Gallussäure- oder Ellagsäure-Ester von Kohlenhydraten, vorzugsweise Pentagalloylglukose;
Catechine oder Epicatechine, galloylierte Catechine oder galloylierte Epicatechine, Gallocatechine oder Epigallocatechine, galloylierte Gallocatechine oder galloylierte Epigallocatechine, Theaflavine und/oder galloylierte Theaflavine;
Proanthyocyanidine oder Procyanidine, Thearubigine;
Quercetin, Taxifolin, Myricetin oder deren jeweilige Glykoside, vorzugsweise Quercitrin, Rutin, Myricitrin;
Salicin oder Arbutin;
Hydroxyzimtsäuren und Ester davon, vorzugsweise γ-Oryzanol, Kaffeesäure oder Ester davon, vorzugsweise Chlorogensäure, Neochlorogensäure, Cryptochlorogensäure;
Limonoide, vorzugsweise Limonin oder Nomilin aus Zitrusfrüchten; Lupolone und Humulone aus Hopfen, Iridoide, Secoiridoide;
P57A und verwandte aktive Inhaltsstoffe aus Hoodia gordonii, Absinthin aus Wermut, Amarogentin aus Enzian;
Kalium-, Magnesium- und Kalzium-Salze, Kaliumchlorid, Kaliumgluconat, Kaliumcarbonat, Kaliumsulfat, Kaliumlactat, Kaliumglutamat, Kaliumsuccinat, Kaliummalat, Natriumsulfat, Magnesiumsulfat, Eisensalze, Aluminumsalze, Zinksalze;
Fluoroquinolon-Antibiotika, Paracetamol, Aspirin, β-Lactam-Antibiotika, Ambroxol, Omeprazol, Propylthiouracil PROP, Guaifenesin;
Vitamin H, B-Serien Vitamine, vorzugsweise Vitamin B1, B2, B6, B12, Niacin, Pantothensäure;
ungesättigte Fettsäuren;
Leucin, Isoleucin, Valin, Tryptophan, Prolin, Histidin, Tyrosin, Lysin, Phenylalanin; Peptide mit einer Aminosäure aus der Gruppe umfassend Leucin, Isoleucin, Valin, Tryptophan, Prolin oder Phenylalanin am N- oder C-Terminus;
Aspartam, Neotam, Superaspartam, Advantam, Saccharin, Sucralose, Cyclamat, Acesulfam-K, Tagatose, Monellin, Steviosid, Rebaudiosid-A, Rebaudiosid-C, Rebaudiosid-D, Rubusosid, Phyllodulcin, Hernandulcin, Thaumatin, Brazzein, Miraculin, Glycyrrhizin, Glycyrrhizinsäure oder Derivate davon;
und die physiologisch akzeptablen Salze davon
umfasst oder daraus besteht.

9. Zusammensetzung nach einem der Ansprüche 6 bis 8, wobei
- die besagte Zusammensetzung eine oral konsumierbare Zusammensetzung ist, die Wasser in einer Menge von 85 Gew.-% oder mehr, vorzugsweise 90 Gew.-% oder mehr, mehr bevorzugt 95 Gew.-% oder mehr, basierend auf die Gesamtmenge der oral konsumierbaren Zusammensetzung, umfasst,
und/oder
- die Gesamtmenge aller Inhaltsstoffe (b) im Bereich von 0.005 - 0.2 Gew.-%, vorzugsweise im Bereich von 0.01 - 0.175 Gew.-%, mehr bevorzugt im Bereich von 0.02 - 0.15 Gew.-%, basierend auf dem Gesamtgewicht der Zusammensetzung, liegt,
und/oder
- die Gesamtmenge aller Inhaltsstoffe (a) im Bereich von 0.0005 - 0.05 Gew.-%, vorzugsweise im Bereich von 0.001 - 0.03 Gew.-%, mehr bevorzugt im Bereich von 0.001 - 0.02 Gew.-%, am meisten bevorzugt im Bereich von 0.0015 - 0.0125 Gew.-%, basierend auf dem Gesamtgewicht der Zusammensetzung, liegt.

10. Zusammensetzung nach einem der Ansprüche 6 bis 9, weiterhin umfassend
- eine oder mehrere Substanzen zum Verstärken des Geschmackseindrucks umami, süß, salzig, scharf und/oder sauer,
und/oder
- wenigstens eine weitere Substanz zum Modulieren oder Maskieren eines unangenehmen Geschmacks einer unangenehmen Substanz oder Substanzmischung, vorzugsweise in einer Menge, die ausreicht, um den unangenehmen Geschmack einer unangenehmen Substanz oder Substanzmischung zu modulieren oder maskieren, wobei vorzugsweise die weitere Substanz oder die weiteren Substanzen ausgewählt sind aus der Gruppe bestehend aus Phloretin, Homoeriodictyol, Eriodictyol, Hesperetin, gamma-Aminobuttersäure, Pellitorin und seine Isomere, Spilanthol, 3',7-Dihdroxy-4'-methoxyflavan, Phyllodulcin, Rubusosid und Vanillyllignane.

11. Halbfertiges Produkt für die Produktion einer Zusammensetzung nach einem der Ansprüche 6 bis 10, umfassend
- eine oder mehrere Verbindung(en) der Formel (I) wie in einem der Ansprüche 1 bis 5 definiert und/oder ein oder mehrere physiologisch akzeptable(s) Salz(e) einer Verbindung der Formel (I) wie in einem der Ansprüche 1 bis 5 definiert, und
- einen oder mehrere Träger ausgewählt aus der Gruppe bestehend aus Maltodextrin, Gummi Arabicum, Kieselerde, Ethanol, Isopropanol, 1,2-Propyleneglykol, Glyzerin, Triacetin und Diacetin.

12. Halbfertiges Produkt nach Anspruch 11, wobei das besagte halbfertige Produkt eine Aromazusammensetzung ist, die zusätzlich wenigstens eine, vorzugsweise zwei, drei, vier, fünf, sechs, sieben, acht, neun, zehn, oder mehr Aromasubstanzen enthält, vorzugsweise ausgewählt aus der Gruppe bestehend aus den Gruppen (c-1) und/oder (c-2)
(c-1) Acetophenon, Allylcapronat, alpha-Ionon, Anisaldehyd, Anisylacetat, Anisylformiat, Benzaldehyd, Benzothiazol, Benzylacetat, Benzylalkohol, Benzylbenzoat, Butylbutyrat, Butylcapronat, Butylidenphthalid, Carvon, Camphen, Caryophyllen, Cineol, Zimtacetat, Citral, Citronellol, Citronellal, Citronellylacetat, Cyclohexylacetat, Cymol, Damascon, Decalacton, Dihydrocumarin, Dimethylanthranilat, Diethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguaiacol, Ethylisobutyrat, Ethylisovalerianat, Ethyllactat, Ethylmethylbutyrat, Ethylpropionat, Eukalyptol, Eugenol, Ethylheptylat, 4-(p-Hydroxyphenyl)-2-butanon, gamma-Decalacton, Geraniol, Geranylacetat, Grapefruit-Aldehyd, Heliotropin (= Piperonal), 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, p-Hydroxybenzylaceton, Isoamylalkohol, Isoamylisovalerianat, Isobutylbutyrat, Isobutyraldehyd, Isoeugenolmethylether, 2-Isopropyl-4-methylthiazol, Laurinsäure, Lävulinsäure, Limonen, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6-Methyl-5-hepten-2-on, Methyldihydrojasmonat, Methyljasmonat, 2-Methylethylbutyrat, 2-Methyl-2-pentensäure, S-(Methylthio)butyrat, 3-(Methylthio)-1-hexanol, 3-(Methylthio)hexylacetat, Nerol, Nerylacetat, 2,4-Nonadienol, 2,6-Nonadienol, Nootkaton, delta-Octalacton, gamma-Octalacton, 2-Octanol, 3-Octanol, 1-Octen-3-ol, 3-Octen-1-ol, 1-Octylacetat, 3-Octylacetat, Plamitinsäure, Paraldehyd, Phellandren, Pentandion, Phenylethylacetat, Phenylethylalkohol, Phenylethylisovalerianat, Propionaldehyd, Propylbutyrat, Pulegon, Pulegol, Sinensal, Sulfurol, Terpinen, Terpineol, Terpinolen, 8-Thiomenthon, 4,4,2-Thiomethylpentanon, Thymol, delta-Undecalacton, gamma-Undecalacton, Valencen, Valeriansäure, bis(2-Methyl-3-furyl)-disulfid, Furfurylmercaptan, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-one, Zimtaldehyd, Zimtalkohol, Methylsalicylat, und Isopulegol, und alle Stereoisomere (insbesondere Diastereomere und Enantiomere, einschließlich der enantiomerenreinen Verbindungen sowie den jeweiligen Racematen) und cis/trans-Isomeren dieser Substanzen,
(c-2) Vanillin, Ethylvanillin, Ethylvanillinisobutyrat (=3-Ethoxy-4-isobutyryloxybenzaldehyd), 2,5-Dimethyl-4-hydroxy-3(2H)-furanon und seine Derivate (vorzugsweise Homofuraneol, 2-Ethyl-4-hydroxy-5-methyl-3(2H)furanon), Homofuronol (2-Ethyl-5-methyl-4-hydroxy-3(2H)-furanon und 5-Ethyl-2-methyl-4-hydroxy-3(2H)-furanon), Maltol und seine Derivate (vorzugsweise Ethylmaltol), Cumarin und seine Derivate, gamma-Lactone (vorzugsweise gamma-Undecalacton, gamma-Nonalacton), delta-Lactone (vorzugsweise 4-Methyl-delta-lacton, Massoilacton, delta-Decalacton, Tuberolacton), Methylsorbat, Diacetyl, Divanillin, 4-Hydroxy-2(oder 5)-ethyl-5(oder 2)-methyl-3(2H)-furanon, 2-Hydroxy-3-methyl-2-cyclopentenon, 3-Hydroxy-4,5-dimethyl-2(5H)-furanon, 4-(p-Hydroxyphenyl)-2-butanon, 1,1-Dimethoxy-2,2,5-trimethyl-4-hexan, 2,6-Dimethyl-5-hepten-1-al, Phenylacetaldehyd, und Frucht-Ester (vorzugsweise Essigsäure-n-butylester, Essigsäureisoamylester, Propionsäureethylester, Buttersäureethylester, Buttersäure-n-butylester, Buttersäureisoamylester, 3-Methylbuttersäureethylester, Theaspiran, beta-Ionon, Damascenon, n-Ethylhexanoat, n-Allylhexanoat, n-Hexansäure-n-butylester, n-Octansäureethylester, Ethyl-3-methyl-3-phenylglycidat, Ethyl-2-trans-4-cis-decadienoat), und alle Stereoisomere (insbesondere Diastereomere und Enantiomere, einschließlich der enantiomerenreinen Verbindungen sowie den jeweiligen Racematen) und cis/trans-Isomeren dieser Substanzen,
und optional eine oder mehrere weitere Substanzen ausgewählt aus Inhaltsstoff (d)
(d) Substanzen zum Modulieren, Reduzieren oder Unterdrücken eines unangenehmen Geschmacks einer unangenehmen Substanz oder Substanzmischung, vorzugsweise in einer Menge, die ausreicht, um den unangenehmen Geschmack einer unangenehmen Substanz oder Substanzmischung zu modulieren, reduzieren oder unterdrücken, wobei vorzugsweise die weitere Substanz oder die weiteren Substanzen der Gruppe (d) ausgewählt sind aus der Gruppe bestehend aus Phloretin, Homoeriodictyol, Eriodictyol, Hesperetin, gamma-Aminobuttersäure, Pellitorin und seinen Isomeren, Spilanthol, 3',7-Dihdroxy-4'-methoxyflavan, Phyllodulcin, Rubusosid und Vanillyllignane.

13. Halbfertiges Produkt nach Anspruch 11 oder 12, wobei die Gesamtmenge aller Inhaltsstoffe (a) im Bereich von 0.1 - 50 Gew.-%, vorzugsweise im Bereich von 0.25 - 25 Gew.-%, mehr bevorzugt im Bereich von 0.5 - 10 Gew.-.%, basierend auf dem Gesamtgewicht des halbfertigen Produkts, liegt.

14. Zusammensetzung nach einem der Ansprüche 6 bis 10 oder halbfertiges Produkt nach einem der Ansprüche 11 bis 13, wobei die Zusammensetzung oder das halbfertige Produkt einen Geschmack von Beeren, Zitrusfrüchten, Kernobst, Gewürzen, Kräutern, Tees und/oder Minzen, vorzugsweise ausgewählt aus der Gruppe bestehend aus Pfefferminze, grüne Minze, Wintergrün, Ananas, Acerola, Acai, Apfel, Aprikose, Banane, Birne, Granatapfel, Brombeere, Zitrone, Limette, Grapefruit, Pomelo, süße Orange, bittere Orange, Bergamotte, Mandarine, Guave, Hagebutte, Heidelbeere, Himbeere, Preiselbeere, Lorbeerbeere, Erdbeere, Stachelbeere, Holunderbeere, rote Johannisbeere, schwarze Johannisbeere, Süßkirsche, Kirsche, Kiwi, Litschi, Mango, Melone, Pflaume, Papaya, Maracuja, Pfirsich, Zwetschge, Traube, Tamarinde, Zimt, Muskat, Vanille, Grüntee, Schwarztee, roter Tee, gelber Tee, weißer Tee, Oolong-Tee, Rooibos-Tee, Honeybush-Tee, Mate-Tee und Mischungen davon hat.

15. Verfahren zum Modulieren oder Maskieren eines unangenehmen Geschmacks einer Substanz oder Substanzmischung umfassend den Schritt in Kontakt Bringen, vorzugsweise Mischen, einer oder mehrerer Substanzen mit einem unangenehmen Geschmack, insbesondere einem bitteren und/oder adstringierenden Geschmack, mit
einer oder mehreren Verbindung(en) der Formel (I) wie in einem der Ansprüche 1 bis 5 definiert und/oder einem oder mehreren physiologisch akzeptablen Salzen einer Verbindung der Formel (I) wie in einem der Ansprüche 1 bis 5 definiert,
und/oder
einem halbfertigen Produkt wie in einem der Ansprüche 11 bis 14 definiert.

## Revendications

1. Utilisation d'un composé de la formule (I) ou d'un sel physiologiquement acceptable de celui-ci, 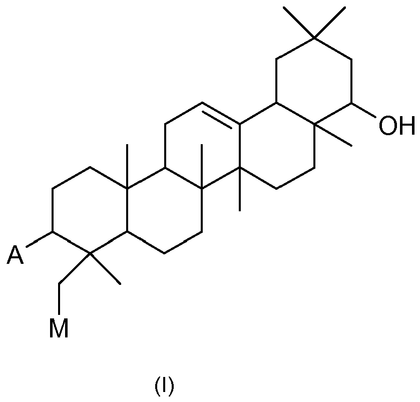 dans laquelle
M est de l'hydrogène ou de l'hydroxyle, de préférence de l'hydroxyle et
A est une unité d'hydrate de carbone, de préférence une unité d'oligosaccharide, pour moduler, réduire ou supprimer un goût désagréable d'une substance désagréable ou d'un mélange de substances désagréables.

2. Utilisation selon la revendication 1, dans laquelle A comprend au moins deux unités de saccaride de la formule générale (II) 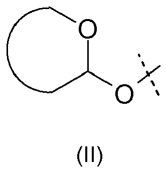 liées les unes aux autres ou à l'unité d'aglycone triterpénique du composé de la formule (I) via l'oxygène, la ligne pointillée marquant la liaison de pontage,
dans laquelle chaque unité de saccharide, indépendamment les unes des autres, comprend un cycle ayant 4 ou 5 atomes de carbone, et dans laquelle, de préférence, chaque atome de carbone dudit cycle est substitué par au moins un substituant choisi dans le groupe constitué par l'hydrogène, l'hydroxyle, l'alkyle en C1-C5, les groupes OH en C1-C5, carboxyle en C1-C5 et alkoxy en C1-C5.

3. Utilisation selon l'une quelconque des revendications précédentes, dans laquelle
- au moins une unité de saccharide dans A comprend un substituant COOH, et/ou
- chaque unité de saccharide dans A, indépendamment les unes des autres, comprend un cycle ayant 4 ou 5 atomes de carbone, chaque atome de carbone cyclique dudit cycle (i) étant substitué par un hydrogène et (ii), indépendamment les uns des autres, étant, de préférence, en sus lié à un atome d'oxygène ou à un substituant choisi dans le groupe constitué par l'hydrogène, l'hydroxyle, l'alkyle en C1-C5, les groupes OH en C1-C5, carboxyle en C1-C5 et alkoxy en C1-C5.

4. Utilisation selon l'une quelconque des revendications précédentes, dans laquelle A comprend ou est constitué par 2 à 5 unités de saccharide, de préférence comprend ou est constitué par deux ou trois unités de saccharide, de préférence encore A est une unité de saccharide de la formule (Tri) 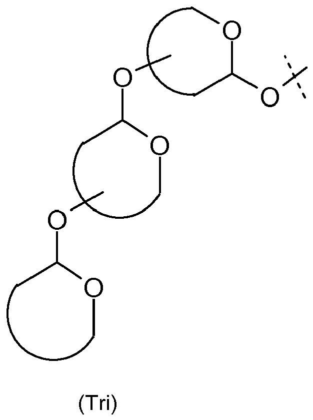 dans laquelle, de préférence, l'unité de saccharide liée à l'unité d'aglycone triterpénique du composé de la formule (I) via la liaison de pontage marquée par la ligne pointillée comprend un substituant COOH et dans laquelle, de préférence, chaque atome de carbone cyclique de saccharide est lié à au moins un atome d'oxygène ou à un substituant hydroxyle, carboxyle ou méthyle.

5. Utilisation selon l'une quelconque des revendications précédentes, dans laquelle A correspond à la formule (Tri-X) 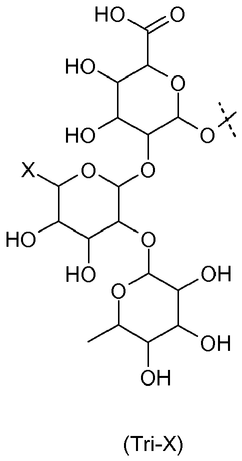
dans laquelle X est de l'hydrogène ou -CH₂OH et
dans laquelle A est lié à l'unité d'aglycone triterpénique du composé de la formule (I) via la liaison de pontage marquée par la ligne pointillée.

6. Composition, de préférence composition consommable oralement, comprenant
(a) un ou plusieurs composés de la formule (I) ou un ou plusieurs sels physiologiquement acceptables de ceux-ci, tels que définis dans l'une quelconque des revendications 1 à 5,
et
(b) une substance ou un mélange de substances ayant un goût désagréable, dans laquelle
- la quantité totale de l'ensemble des ingrédients (a) est suffisante pour moduler ou masquer le goût désagréable des ingrédients (b) en comparaison d'une composition identique exempte des ingrédients (a),
- la quantité totale de l'ensemble des ingrédients (b) est comprise dans la plage allant de 0.0001 à 0.2 % en poids, basée sur le poids total de la composition, et,
de préférence,
- la quantité totale de l'ensemble des ingrédients (a) étant comprise dans la plage allant de 0.0001 à 0.1 % en poids, basée sur le poids total de la composition, et/ou
dans laquelle la composition comprend en outre de préférence
- une ou plusieurs substances porteuses choisies dans le groupe comprenant la maltodextrine, la gomme arabique, la silice, l'éthanol, l'isopropanol, le 1,2-propylène glycol, le glycérol, la triacétine et la diacétine.

7. Composition selon la revendication 6, dans laquelle l'ingrédient (a) est ou comprend un composé de la formule (III) 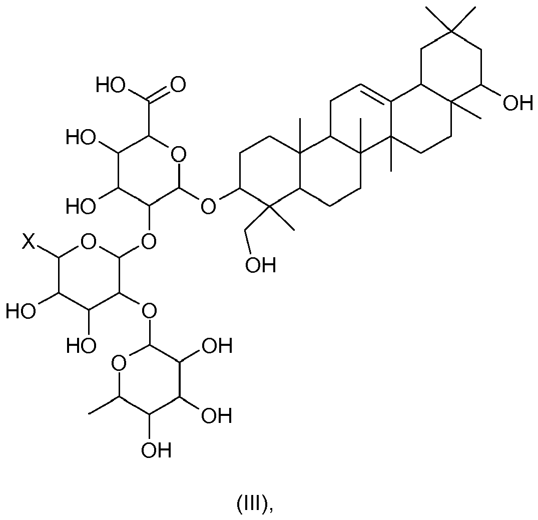
dans laquelle X est de l'hydrogène ou -CH₂OH
ou un sel physiologiquement acceptable d'un composé de la formule (III), en une quantité suffisante pour moduler, réduire ou supprimer le goût désagréable des ingrédients (b) en comparaison d'une composition identique exempte dudit composé de la formule (III) ou dudit sel physiologiquement acceptable.

8. Composition selon la revendication 6 ou 7, dans laquelle l'ingrédient (b) est ou comprend un composé choisi dans le groupe constitué par les alcaloïdes de xanthine, les xanthines, les alcaloïdes, les glycosides phénoliques, les glycosides flavonoïdes à goût amer, les chalcones à goût amer ou les glycosides chalcones, les tanins hydrolysables, les tanins non-hydrolysables et les oligomères de ceux-ci, en particulier les flavan-3-ols et les catéchines, les flavones à goût amer, les phénols à goût amer, les polyphénols à goût amer, les substances amères terpénoïdes, les glycosides triterpéniques à goût amer, les sels métalliques, les ingrédients pharmaceutiquement actifs à goût amer, les vitamines, le benzoate de dénatonium, l'urée, les acides gras insaturés, les acides aminés à goût amer, les peptides à goût amer et les édulcorants à goût amer synthétiques ou naturellement présents,
de préférence l'ingrédient (b) comprenant ou étant composé d'un ou de plusieurs composés choisis dans le groupe constitué par
la caféine, la théobromine, la théophylline et les méthylxanthines;
la quinine, la brucine, la strychnine, la nicotine;
la salicine, l'arbutine;
la néohespéridine, l'hespéridine, la naringine, la quercitrine, la rutine, l'hyperoside, l'isoquercitrine, l'avicularine;
la phloridzine, le phloretin-2-O'-xylo-glucoside;
les esters de l'acide gallique ou ellagique d'hydrates de carbone, de préférence le pentagalloylglucose;
les catéchines ou épicatéchines, les catéchines galloylées ou épicatéchines galloylées, les gallocatéchines ou épigallocatéchines, les gallocatéchines galloylées ou épigallocatéchines galloylées, les théaflavines et/ou théaflavines galloylées;
les proanthyocyanidines ou les procyanidines, les théarubigines;
la quercétine, la taxifoline, la myricétine ou les glycosides respectifs de celles-ci, de préférence la quercitrine, la rutine, la myricitrine;
la salicine ou l'arbutine;
les acides hydroxycinnamiques et les esters de ceux-ci, de préférence le γ-oryzanol, l'acide caféique ou les esters de celui-ci, de préférence l'acide chlorogénique, l'acide néochlorogénique, l'acide cryptochlorogénique;
les limonoïdes, de préférence la limonine ou la nomiline des agrumes; les lupolones et humulones de l'houblon, les iridoïdes, les sécoiridoïdes ;
le P57A et des ingrédients actifs apparentés de l'Hoodia gordonii, l'absinthin du vermouth, l'amarogentin de la gentiane;
les sels de potassium, de magnésium et de calcium, le chlorure de potassium, le gluconate de potassium, le carbonate de potassium, le sulfate de potassium, le lactate de potassium, le glutamate de potassium, le succinate de potassium, le malate de potassium, le sulfate de sodium, le sulfate de magnésium, les sels de fer, les sels d'aluminium, les sels de zinc;
les antibiotiques fluoroquinolone, le paracétamol, l'aspirine, les antibiotiques β-lactame, l'ambroxol, l'omeprazol, le propylthiouracil PROP, le guaïfénésine;
la vitamine H, les vitamines de la série B, de préférence la vitamine B1, B2, B6, B12, la niacine, l'acide pantothénique;
les acides gras insaturés;
la leucine, l'isoleucine, la valine, le tryptophane, la proline, l'histidine, la tyrosine, la lysine, la phénylalanine;
les peptides ayant un acide aminé en provenance du groupe comprenant la leucine, l'isoleucine, la valine, le tryptophane, la proline ou la phénylalanine à l'extrémité N-ou C-terninale;
l'aspartame, le néotame, le superaspartame, l'advantame, la saccharine, le sucralose, le cyclamate, l'acésulfame K, le tagatose, la monelline, le stévioside, le rébaudioside A, le rébaudioside C, le rébaudioside D, le rubusoside, la phyllodulcine, l'hernandulcine, la thaumatine, la brazzéine, la miraculine, la glycyrrhizine, l'acide glycyrrhizique ou des dérivés de ceux-ci ;
et les sels physiologiquement acceptables de ceux-ci.

9. Composition selon l'une quelconque des revendications 6 à 8, dans laquelle
- ladite composition est une composition consommable oralement comprenant de l'eau en une quantité de 85 % en poids ou plus, de préférence de 90 % en poids ou plus, de manière encore plus préférée de 95 % en poids ou plus, basée sur la quantité totale de la composition consommable oralement,
et/ou
- la quantité totale de l'ensemble des ingrédients (b) est comprise dans la plage allant de 0.005 à 0.2 % en poids, de préférence dans la plage allant de 0.01 à 0.175 % en poids, de manière encore plus préférée dans la plage allant de 0.02 à 0.15 % en poids, basée sur le poids total de la composition,
et/ou
- la quantité totale de l'ensemble des ingrédients (a) est comprise dans la plage allant de 0.0005 à 0.05 % en poids, de préférence dans la plage allant de 0.001 à 0.03 % en poids, de manière encore plus préférée dans la plage allant de 0.001 à 0.02 % en poids, de manière la plus préférée dans la plage allant de 0.0015 à 0.0125 % en poids, basée sur le poids total de la composition.

10. Composition selon l'une quelconque des revendications 6 à 9, comprenant en outre
- une ou plusieurs substances pour renforcer l'impression de goût umami, sucré, salé, âcre et/ou aigre,
et/ou
- au moins une autre substance pour moduler ou masquer un goût désagréable d'une substance désagréable ou d'un mélange de substances désagréables, de préférence en une quantité suffisante pour moduler ou masquer le goût désagréable d'une substance désagréable ou d'un mélange de substances désagréables, de préférence ladite autre substance ou lesdites autres substances étant choisies dans le groupe constitué par la phlorétine, l'homoériodictyol, l'ériodictyol, l'hespérétine, l'acide gamma-aminobutyrique, la pellitorine et ses isomères, le spilanthol, le 3',7-dihdroxy-4'-méthoxyflavane, la phyllodulcine, la rubusoside et les vanillyllignanes.

11. Produit semi-fini pour la production d'une composition selon l'une quelconque des revendications 6 à 10, comprenant
- un ou plusieurs composés de la formule (I) tels que définis dans l'une quelconque des revendications 1 à 5 et/ou un ou plusieurs sels physiologiquement acceptables d'un composé de la formule (I) tel que défini dans l'une quelconque des revendications 1 à 5, et
- un ou plusieurs supports choisis dans le groupe constitué par la maltodextrine, la gomme arabique, la silice, l'éthanol, l'isopropanol, le 1,2-propylène glycol, le glycérol, la triacétine et la diacétine.

12. Produit semi-fini selon la revendication 11, dans lequel ledit produit semi-fini est une composition d'arôme qui comprend en sus au moins une, de préférence deux, trois, quatre, cinq, six, sept, huit, neuf, dix substances d'arôme ou plus, de préférence choisies dans le groupe constitué par les groupes (c-1) et/ou (c-2)
(c-1) acétophénone, capronate d'allyle, alpha-ionone, aldehyde anisique, acétate d'anisyle, formiate d'anisyle, benzaldédyde, benzothiazole, acétate de benzyle, alcool benzylique, benzoate de benzyle, butyrate de butyle, capronate de butyle, butylidènephtalide, carvone, camphène, caryophyllène, cinéol, acétate cinnamylique, citral, citronellol, citronellal, acétate de citronellyle, acétate de cyclohexyle, cymol, damascone, décalactone, dihydrocoumarine, anthranilate de diméthyle, anthranilate de diéthyle, dodécalactone, acétate d'éthoxyéthyle, acide éthylbutyrique, butyrate d'éthyle, caprinate d'éthyle, capronate d'éthyle, crotonate d'éthyle, furanéol d'éthyle, guaiacol d'éthyle, isobutyrate d'éthyle, isovalérianate d'éthyle, lactate d'éthyle, butyrate d'éthylméthyle, propionate d'éthyle, eucalyptol, eugénol, éthylheptylate, 4-(p-hydroxyphényl)-2-butanone, gamma-décalactone, géraniol, acetate de géranyle, aldéhyde de pamplemousse, héliotropine (= pipéronal), 2-heptanone, 3-heptanone, 4-heptanone, trans-2-hepténal, cis-4-hepténal, trans-2-hexénal, cis-3-hexénol, acide trans-2-hexénoïque, acide trans-3-hexénoïque, acétate de cis-2-hexényle, acétate de cis-3-hexényle, capronate de cis-3-hexényle, capronate de trans-2-hexényle, formiate de cis-3-hexényle, acétate de cis-2-hexyle, acétate de cis-3-hexyle, acétate de trans-2-hexyle, formiate de cis-3-hexyle, acétone de p-hydroxybenzyle, alcool isoamylique, isovalérianate isoamylique, butyrate d'isobutyle, isobutyraldéhyde, éther méthylique de l'isoeugénol, 2-isopropyl-4-méthyl-thiazole, acide laurique, acide lévulinique, limonène, linalol, oxyde de linalol, acétate de linalyle, menthol, menthofurane, anthranilate de méthyle, méthyle butanol, acide méthylbutyrique, acétate de 2-méthylbutyle, capronate de méthyle, cinnamate de méthyle, 5-méthylfurfural, 3,2,2-méthyl cyclopenténolone, 6-méthyl-5-heptène-2-on, dihydrojasmonate de méthyle, jasmonate de méthyle, butyrate de 2-méthyléthyle, acide 2-méthyl-2-pentenoïque, S-(méthylthio)butyrate, 3-(méthylthio)-1-hexanol, 3-(méthylthio)hexylacétate, nérol, acétate de néryle, 2,4-nonadiénol, 2,6-nonadiénol, nootkatone, delta-octalactone, gamma-octalactone, 2-octanol, 3-octanol, 1-octène-3-ol, 3-octène-1-ol, acétate de 1-octyle, acétate de 3-octyle, acide palmitique, paraldéhyde, phellandrène, pentanedione, acétate de phényléthyle, alcool de phényléthyle, isovalérianate de phényléthyle, propionaldéhyde, butyrate de propyle, pulégone, pulégol, sinénsal, sulfurol, terpinène, terpinéol, terpinolène, 8-thiomenthone, 4,4,2-thiométhyl pentanone, thymol, delta-undécalactone, gamma-undécalactone, valencène, acide valérique, disulfure de bis(2-méthyl-3-furyl), furfurylmercaptane, 2-acétyl-2-thiazoline, 3-mercapto-2-pentanone, 2,5-diméthyl-3-furanthiol, 2,4,5-triméthylthiazol, 2-acétylthiazol, 2,4-diméthyl-5-éthylthiazol, 2-acétyl-1-pyrroline, 2-méthyl-3-éthylpyrazine, 2-éthyl-3,5-diméthylpyrazine, 2-éthyl-3,6-diméthylpyrazine, 2,3-diéthyl-5-méthylpyrazine, 3-isopropyl-2-méthoxypyrazine, 3-isobutyl-2-méthoxypyrazine, 2-acétylpyrazine, 2-pentylpyridine, (E,E)-2,4-décadiénal, (E,E)-2,4-nonadiénal, (E)-2-octénal, (E)-2-nonénal, 2-undécénal, 12-méthyltridécanal, 1-pentène-3-one, aldéhyde cinnamique, alcool cinnamique, salicylate de méthyle, et iso-pulégol, et l'ensemble des stéréoisomères (en particulier diastéréomères et énantiomères, y compris les composés énantiomériquement purs ainsi que les racémiques respectifs) et les isomères cis-trans de ces substances,
(c-2) vanilline, éthylvanilline, isobutyrate d'éthylvanilline (= 3-éthoxy-4-isobutyryloxybenzaldéhyde), 2,5-diméthyl-4-hydroxy-3(2H)-furanone et ses dérivés (de préférence homofuranéol, 2-éthyl-4-hydroxy-5-méthyl-3(2H)-furanone), homofuronol (2-éthyl-5-méthyl-4-hydroxy-3(2H)-furanone et 5-éthyl-2-méthyl-4-hydroxy-3(2H)-furanone), maltol et ses dérivés (de préférence éthylmaltol), cumarine et ses dérivés, gamma-lactone (de préférence gamma-undécalactone, gamma-nonalactone), delta-lactone (de préférence 4-méthyldeltalactone, massoilactone, deltadécalactone, tubérolactone), méthylsorbate, diacétyle, divanilline, 4-hydroxy-2(ou 5)-éthyl-5(ou 2)méthyl-3(2H)-furanone, 2-hydroxy-3-méthyl-2-cyclopenténone, 3-hydroxy-4,5-diméthyl-2(5H)-furanone, 4-(p-hydroxyphényl)-2-butanone, 1,1-diméthoxy-2,2,5-triméthyl-4-hexane, 2,6-diméthyl-5-heptène-1-al, phenylacétaldéhyde, et esters de fruit (de préférence n-butylester de l'acide acétique, isoamylester de l'acide acétique, éthylester de l'acide propionique, éthylester de l'acide butyrique, n-butylester de l'acide butyrique, isoamylester de l'acide butyrique, éthylester de l'acide 3-méthylbutyrique, théaspirane, béta-ionone, damascénone, hexanoate de n-éthyl, hexanoate de n-allyle, n-butylester de l'acide n-hexanoïque, éthylester de l'acide n-octanoïque, éthyl-3-méthyl-3-phénylglycidate, éthyl-2-trans-4-cis-décadiénoate), et l'ensemble des stéréoisomères (en particulier diastéréomères et énantiomères, y compris les composés énantiomériquement purs ainsi les racémiques respectifs) et les isomères cis-trans de ces substances,
et optionnellement une ou plusieurs autres substances choisies parmi l'ingrédient (d)
(d) substances pour moduler, réduire ou supprimer un goût désagréable d'une substance désagréable ou d'un mélange de substances désagréables, de préférence en une quantité suffisante pour moduler, réduire ou supprimer le goût désagréable d'une substance désagréable ou d'un mélange de substances désagréables, de préférence ladite autre substance ou lesdites autres substances du groupe (d) étant choisies dans le groupe constitué par la phlorétine, l'homoériodictyol, l'ériodictyol, l'hespérétine, l'acide gammaaminobutyrique, la pellitorine et ses isomères, le spilanthol, le 3',7-dihdroxy-4'-méthoxyflavane, la phyllodulcine, la rubusoside et les vanillyllignanes.

13. Produit semi-fini selon la revendication 11 ou 12, dans lequel la quantité totale de l'ensemble des ingrédients (a) est comprise dans la plage allant de 0.1 à 50 % en poids, de préférence dans la plage allant de 0.25 à 25 % en poids, de manière encore plus préférée dans la plage allant de 0.5 à 10 % en poids, basée sur le poids total du produit semi-fini.

14. Composition selon l'une quelconque des revendications 6 à 10 ou produit semi-fini selon l'une quelconque des revendications 11 à 13, dans laquelle/lequel ladite composition ou ledit produit semi-fini présente un goût de baies, d'agrumes, de fruits à pépin, d'épices, d'herbes, de thés et/ou de menthes, choisis de préférence dans le groupe se composant de menthe, de menthe verte, de gaulthérie couchée, d'ananas, d'acérola, d'acai, de pomme, d'abricot, de banane, de poire, de grenade, de mûre, de citron, de limette, de pamplemousse, de pomélo, d'orange douce, d'orange amère, de bergamote, de mandarine, de goyave, de fruit d'églantier, de myrtille, de framboise, d'airelle rouge, de laurier, de fraise, de groseillier à maquereau, de baie de sureau, de groseille rouge, de groseille noire, de cerise douce, de cerise, de kiwi, de litchi, de mangue, de melon, de prune, de papaye, de maracuja, de pêche, de quetsche, de raisin, de tamarin, de cannelle, de noix muscade, de vanille, de thé vert, de thé noir, de thé rouge, de thé jaune, de thé blanc, de thé oo-long, de thé rooibos, de thé honeybush, de thé de maté et des mélanges de ceux-ci.

15. Procédé de modulation ou de masquage d'un goût désagréable d'une substance ou d'un mélange de substances, comprenant l'étape consistant à mettre en contact, de préférence mélanger, une ou plusieurs substances ayant un goût désagréable, en particulier un goût amer et/ou une saveur astringente, avec un ou plusieurs composés de la formule (I) tels que définis dans l'une quelconque des revendications 1 à 5, et/ou avec un ou plusieurs sels physiologiquement acceptables d'un composé de la formule (I) tels que définis dans l'une quelconque des revendications 1 à 5,
et/ou
avec un produit semi-fini tel que défini dans l'une quelconque des revendications 11 à 14.
